# EUROPEAN PATENT APPLICATION

(11) **EP 4 844 559 A1**
(43) Date of publication of application: **25.11.2026**
(21) Application number: 26179253.5
(22) Date of filing: 18.05.2026
(51) Int. Cl.: G06F 3/04883, G06F 3/04812

(54) **SYSTEMS AND METHODS OF MANIPULATING WRITTEN CONTENT**

(30) Priority: 19.05.2025 US 202563808584 P; 04.05.2026 US 202619667359
(71) Applicant: Apple Inc., Cupertino, CA 95014 (US)
(72) Inventor: LU, Marisa R., Cupertino, 95014 (US); THIMBLEBY, William J., Cupertino, 95014 (US)
(74) Representative: COPA Copenhagen Patents

(57) **Abstract**

In some embodiments, an electronic device facilitates manipulation of handwritten content. In some embodiments, the electronic device displays a representation of handwritten content and a cursor for moving a portion of the representation of handwritten content. In some embodiments, the electronic device displays the cursor with an appearance corresponding to a direction the cursor is used to move the portion of the representation of handwritten content.

## Description

### Cross-Reference to Related Applications

This application claims the benefit of U.S. Provisional Application No. 63/808,584, filed May 19, 2025, and U.S. Patent Application No. 19/667,359, filed May 4, 2026, the contents of which are herein incorporated by reference in their entireties for all purposes.

### Field of the Disclosure

This disclosure relates generally to an electronic device presenting user interfaces for manipulating handwritten content.

### Background of the Disclosure

User interaction with electronic devices has increased significantly in recent years. These devices can be devices such as computers, tablet computers, televisions, multimedia devices, or mobile devices. In some circumstances, users may wish to input and edit content, including handwritten content. The user may therefore desire efficient ways of interacting with handwritten content.

### Summary of the Disclosure

Providing efficient ways of manipulating handwritten content enhances user interactions with the electronic device by offering additional modes of formatting and/or positioning handwritten content.

The full descriptions of the embodiments are provided in the Drawings and the Detailed Description, and it is understood that the Summary provided above does not limit the scope of the disclosure in any way.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### Brief Description of the Drawings

For a better understanding of the various described embodiments, reference should be made to the Detailed Description below, in conjunction with the following drawings in which like reference numerals refer to corresponding parts throughout the figures.
Fig. 1A is a block diagram illustrating a portable multifunction device with a touch-sensitive display in accordance with some embodiments.
Fig. 1B is a block diagram illustrating exemplary components for event handling in accordance with some embodiments.
Fig. 2 illustrates a portable multifunction device having a touch screen in accordance with some embodiments.
Figs. 3A-3G are block diagrams of an exemplary multifunction device with a display and a touch-sensitive surface in accordance with some embodiments.
Fig. 4A illustrates an exemplary user interface for a menu of applications on a portable multifunction device in accordance with some embodiments.
Fig. 4B illustrates an exemplary user interface for a multifunction device with a touch-sensitive surface that is separate from the display in accordance with some embodiments.
Fig. 5A illustrates a personal electronic device in accordance with some embodiments.
Fig. 5B is a block diagram illustrating a personal electronic device in accordance with some embodiments.
Figs. 5C-5D illustrate exemplary components of a personal electronic device having a touch-sensitive display and intensity sensors in accordance with some embodiments.
Figs. 5E-5H illustrate exemplary components and user interfaces of a personal electronic device in accordance with some embodiments.
Figs. 6A-6DD illustrate exemplary ways in which an electronic device facilitates manipulation of handwritten content according to some embodiments.
Fig. 7 illustrates a flow diagram illustrating a method in which an electronic device facilitates manipulation of handwritten content in accordance with some embodiments of the disclosure.

### Detailed Description

In the following description of embodiments, reference is made to the accompanying drawings which form a part hereof, and in which it is shown by way of illustration specific embodiments that are optionally practiced. It is to be understood that other embodiments are optionally used, and structural changes are optionally made without departing from the scope of the disclosed embodiments.

Providing efficient ways of manipulating handwritten content enhances user interactions with the electronic device by offering additional modes of formatting and/or positioning handwritten content.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

### EXEMPLARY DEVICES

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touch pads), are, optionally, used. It should also be understood that, in some embodiments, the device is not a portable communications device, but is a desktop computer or a television with a touch-sensitive surface (e.g., a touch screen display and/or a touch pad). In some embodiments, the device does not have a touch screen display and/or a touch pad, but rather is capable of outputting display information (such as the user interfaces of the disclosure) for display on a separate display device, and capable of receiving input information from a separate input device having one or more input mechanisms (such as one or more buttons, a touch screen display and/or a touch pad). In some embodiments, the device has a display, but is capable of receiving input information from a separate input device having one or more input mechanisms (such as one or more buttons, a touch screen display and/or a touch pad). In some embodiments, the electronic device is a computer system that is in communication (e.g., via wireless communication, via wired communication) with a display generation component (e.g., a display device such as a head-mounted device (HMD), a display, a projector, a touch-sensitive display, or other device or component that presents visual content to a user, for example, on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse and/or a joystick. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

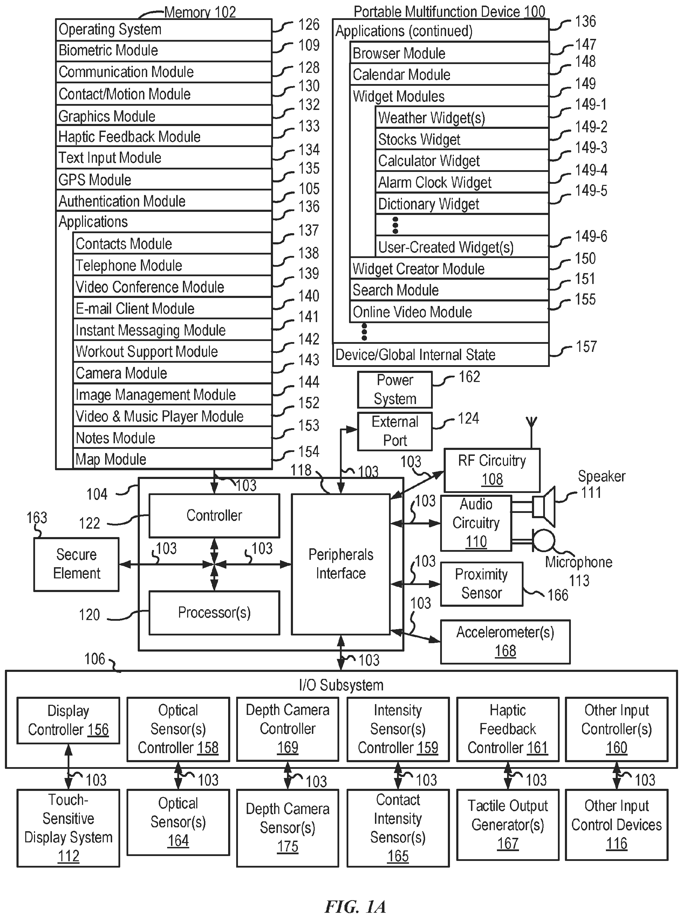

Attention is now directed toward embodiments of portable or non-portable devices with touch-sensitive displays, though the devices need not include touch-sensitive displays or displays in general, as described above. Fig. 1A is a block diagram illustrating portable or non-portable multifunction device 100 with touch-sensitive displays 112 in accordance with some embodiments. Touch-sensitive display 112 is sometimes called a "touch screen" for convenience, and is sometimes known as or called a touch-sensitive display system. Device 100 includes memory 102 (which optionally includes one or more computer readable storage mediums), memory controller 122, one or more processing units (CPU's) 120, peripherals interface 118, RF circuitry 108, audio circuitry 110, speaker 111, microphone 113, input/output (I/O) subsystem 106, other input or control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as a "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable or non-portable multifunction device, and that device 100 optionally has more or fewer components than shown, optionally combines two or more components, or optionally has a different configuration or arrangement of the components. The various components shown in Fig. 1A are implemented in hardware, software, or a combination of both hardware and software, including one or more signal processing and/or application specific integrated circuits. Further, the various components shown in Fig. 1A are optionally implemented across two or more devices; for example, a display and audio circuitry on a display device, a touch-sensitive surface on an input device, and remaining components on device 100. In such an embodiment, device 100 optionally communicates with the display device and/or the input device to facilitate operation of the system, as described in the disclosure, and the various components described herein that relate to display and/or input remain in device 100, or are optionally included in the display and/or input device, as appropriate.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data.

In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.110ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

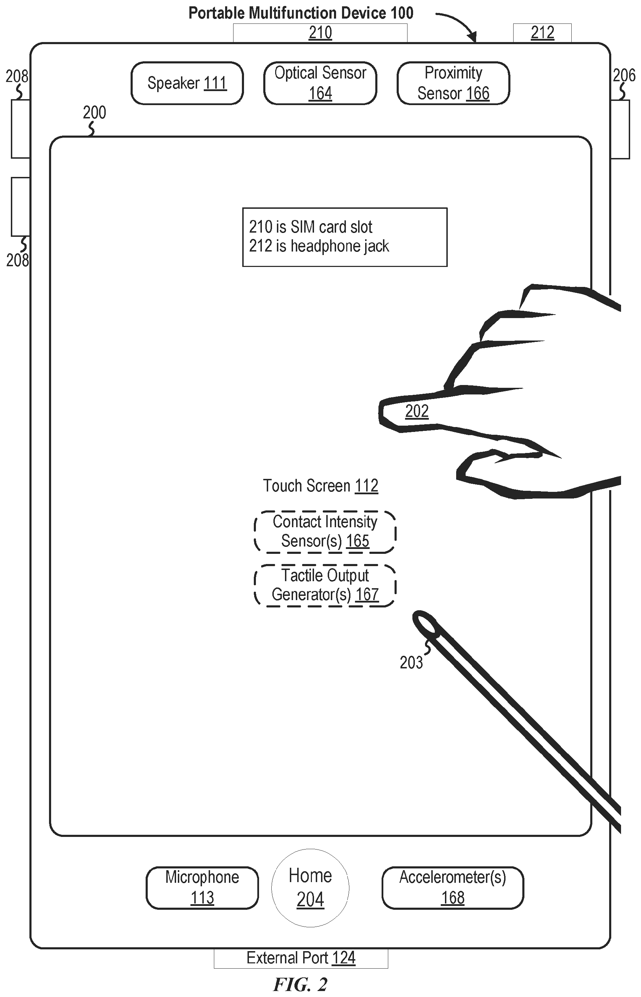

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, Fig. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161 and one or more input controllers 160 for other input or control devices. The one or more input controllers 160 receive/send electrical signals from/to other input or control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, infrared port, USB port, and a pointer device such as a mouse. The one or more buttons (e.g., 208, Fig. 2) optionally include an up/down button for volume control of speaker 111 and/or microphone 113. The one or more buttons optionally include a push button (e.g., 206, Fig. 2).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. As described above, the touch-sensitive operation and the display operation of touch-sensitive display 112 are optionally separated from each other, such that a display device is used for display purposes and a touch-sensitive surface (whether display or not) is used for input detection purposes, and the described components and functions are modified accordingly. However, for simplicity, the following description is provided with reference to a touch-sensitive display. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output corresponds to user-interface objects.

Touch screen 112 has a touch-sensitive surface, sensor or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®}, iPod Touch^{®}, and iPad^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/38,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable or non-portable devices.

Device 100 optionally also includes one or more optical sensors 164. Fig. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more contact intensity sensors 165. Fig. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112 which is located on the front of device 100.

Device 100 optionally also includes one or more proximity sensors 166. Fig. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. Fig. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112 which is located on the front of device 100.

Device 100 optionally also includes one or more accelerometers 168. Fig. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

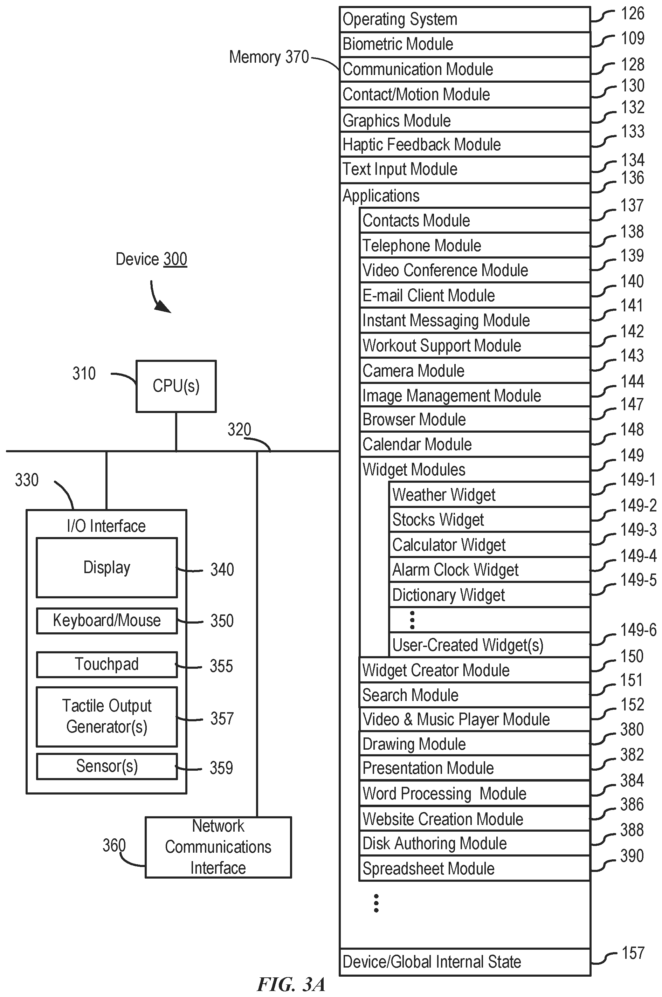

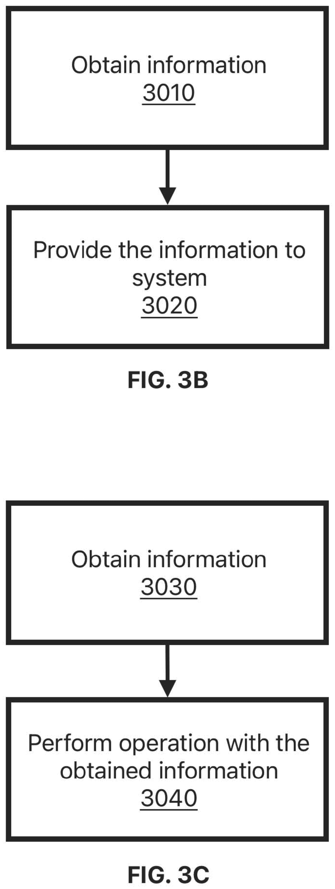

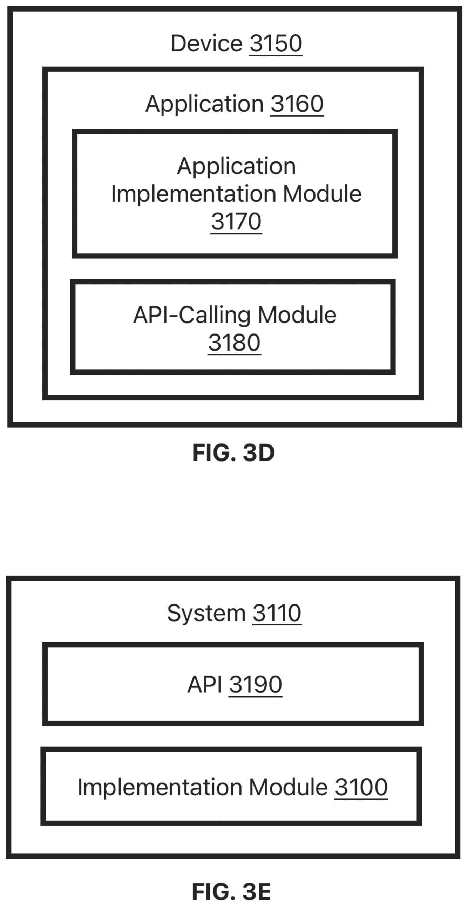

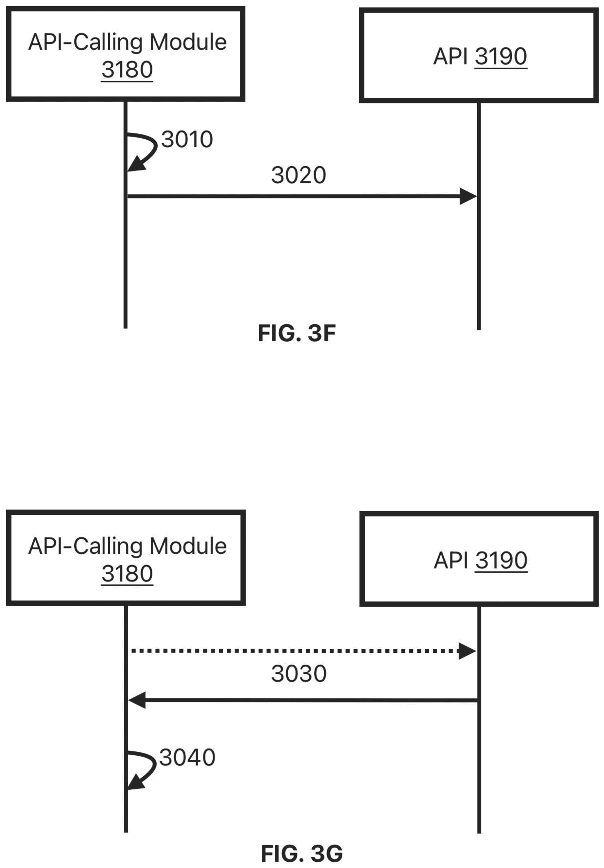

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (Fig. 1A) or 370 (Fig. 3A) stores device/global internal state 157, as shown in Figs. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact) determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast or other visual property) of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

Applications 136 optionally include the following modules (or sets of instructions), or a subset or superset thereof:
- contacts module 137 (sometimes called an address book or contact list);
- telephone module 138;
- video conferencing module 139;
- e-mail client module 140;
- instant messaging (IM) module 141;
- workout support module 142;
- camera module 143 for still and/or video images;
- image management module 144;
- video player module;
- music player module;
- browser module 147;
- calendar module 148;
- widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which merges video player module and music player module;
- notes module 153;
- map module 154; and/or
- online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to -do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to -do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above -identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules are, optionally, combined or otherwise rearranged in various embodiments. For example, video player module is, optionally, combined with music player module into a single module (e.g., video and music player module 152, Fig. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

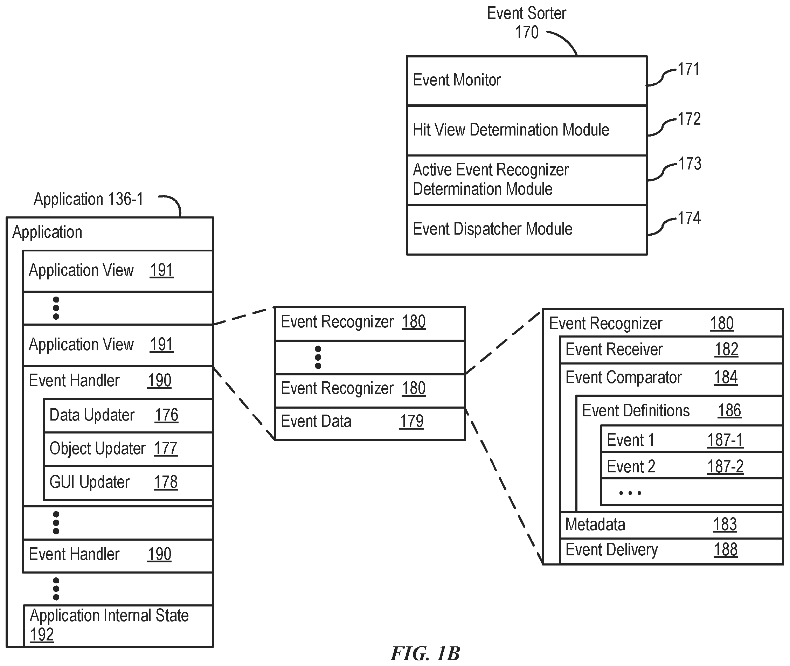

Fig. 1B is a block diagram illustrating exemplary components for event handling in accordance with some embodiments. In some embodiments, memory 102 (Fig. 1A) or 370 (Fig. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (187) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

Fig. 2 illustrates a portable or non-portable multifunction device 100 having a touch screen 112 in accordance with some embodiments. As stated above, multifunction device 100 is described as having the various illustrated structures (such as touch screen 112, speaker 111, accelerometer 168, microphone 113, etc.); however, it is understood that these structures optionally reside on separate devices. For example, display-related structures (e.g., display, speaker, etc.) and/or functions optionally reside on a separate display device, input-related structures (e.g., touch-sensitive surface, microphone, accelerometer, etc.) and/or functions optionally reside on a separate input device, and remaining structures and/or functions optionally reside on multifunction device 100.

The touch screen 112 optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward) and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also includes one or more physical buttons, such as "home" or menu button 204. As previously described, menu button 204 is, optionally, used to navigate to any application 136 in a set of applications that are, optionally executed on device 100. Alternatively, in some embodiments, the menu button is implemented as a soft key in a GUI displayed on touch screen 112.

In one embodiment, device 100 includes touch screen 112, menu button 204, push button 206 for powering the device on/off and locking the device, volume adjustment button(s) 208, Subscriber Identity Module (SIM) card slot 210, head set jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

Fig. 3A is a block diagram of an exemplary multifunction device with a display and a touch-sensitive surface in accordance with some embodiments. Device 300 need not include the display and the touch-sensitive surface, as described above, but rather, in some embodiments, optionally communicates with the display and the touch-sensitive surface on other devices. Additionally, device 300 need not be portable. In some embodiments, device 300 is a laptop computer, a desktop computer, a tablet computer, a multimedia player device (such as a television or a set-top box), a navigation device, an educational device (such as a child's learning toy), a gaming system, or a control device (e.g., a home or industrial controller). Device 300 typically includes one or more processing units (CPU's) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to Fig. 1A), sensors 359 (e.g., optical, acceleration, proximity, touch-sensitive, and/or contact intensity sensors similar to contact intensity sensor(s) 165 described above with reference to Fig. 1A). Memory 370 includes high-speed random access memory, such as DRAM, SRAM, DDR RAM or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable or non-portable multifunction device 100 (Fig. 1A), or a subset thereof. Furthermore, memory 370 optionally stores additional programs, modules, and data structures not present in memory 102 of portable or non-portable multifunction device 100. For example, memory 370 of device 300 optionally stores drawing module 380, presentation module 382, word processing module 384, website creation module 386, disk authoring module 388, and/or spreadsheet module 390, while memory 102 of portable or non-portable multifunction device 100 (Fig. 1A) optionally does not store these modules.

Each of the above identified elements in Fig. 3A are, optionally, stored in one or more of the previously mentioned memory devices. Each of the above identified modules corresponds to a set of instructions for performing a function described above. The above identified modules or programs (e.g., sets of instructions) need not be implemented as separate software programs, procedures or modules, and thus various subsets of these modules are, optionally, combined or otherwise re-arranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

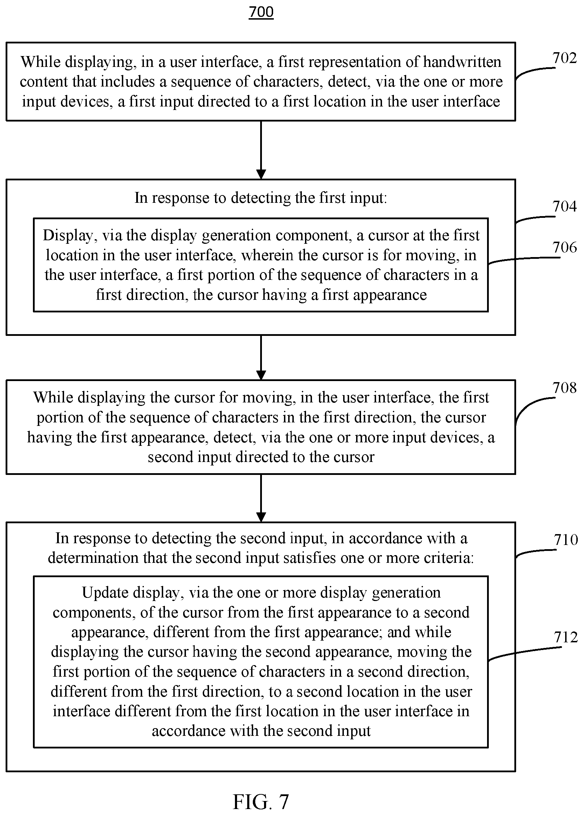

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 700 (FIG. 7) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

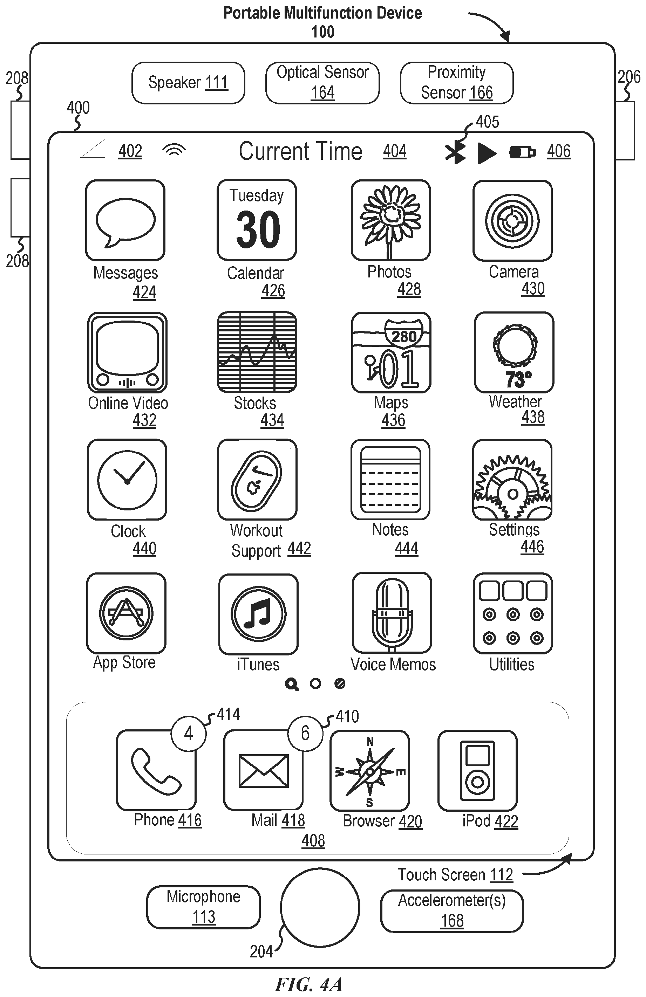

Fig. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   - Icon 416 for telephone module 138, labeled "Phone," which optionally includes an indicator 414 of the number of missed calls or voicemail messages;
   - Icon 418 for e-mail client module 140, labeled "Mail," which optionally includes an indicator 410 of the number of unread e-mails;
   - Icon 420 for browser module 147, labeled "Browser;" and
   - Icon 422 for video and music player module 152, also referred to as iPod (trademark of Apple Inc.) module 152, labeled "iPod;" and
- Icons for other applications, such as:
   - Icon 424 for IM module 141, labeled "Messages;"
   - Icon 426 for calendar module 148, labeled "Calendar;"
   - Icon 428 for image management module 144, labeled "Photos;"
   - Icon 430 for camera module 143, labeled "Camera;"
   - Icon 432 for online video module 155, labeled "Online Video;"
   - Icon 434 for stocks widget 149-2, labeled "Stocks;"
   - Icon 436 for map module 154, labeled "Maps;"
   - Icon 438 for weather widget 149-1, labeled "Weather;"
   - Icon 440 for alarm clock widget 149-4, labeled "Clock;"
   - Icon 442 for workout support module 142, labeled "Workout Support;"
   - Icon 444 for notes module 153, labeled "Notes;" and
   - Icon 446 for a settings application or module, labeled "Settings," which provides access to settings for device 100 and its various applications 136.

It should be noted that the icon labels illustrated in Fig. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

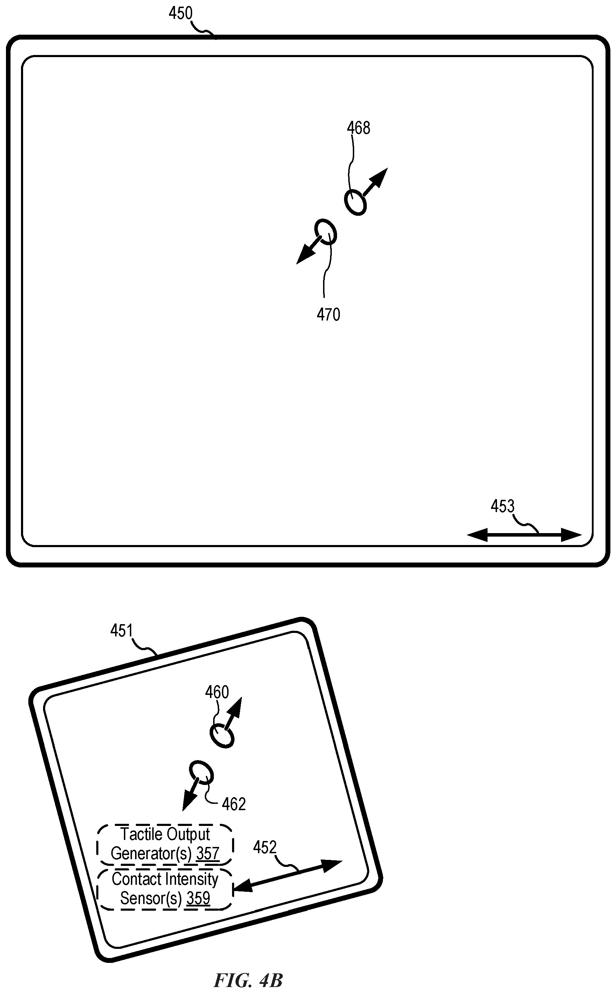

Fig. 4B illustrates an exemplary user interface on a device (e.g., device 300, Fig. 3A) with a touch-sensitive surface 451 (e.g., a tablet or touchpad 355, Fig. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in Fig. 4B. In some embodiments, the touch-sensitive surface (e.g., 451 in Fig. 4B) has a primary axis (e.g., 452 in Fig. 4B) that corresponds to a primary axis (e.g., 453 in Fig. 4B) on the display (e.g., 450). In accordance with these embodiments, the device detects contacts (e.g., 460 and 462 in Fig. 4B) with the touch-sensitive surface 451 at locations that correspond to respective locations on the display (e.g., in Fig. 4B, 460 corresponds to 468 and 462 corresponds to 470). In this way, user inputs (e.g., contacts 460 and 462, and movements thereof) detected by the device on the touch-sensitive surface (e.g., 451 in Fig. 4B) are used by the device to manipulate the user interface on the display (e.g., 450 in Fig. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

As used herein, the term "focus selector" refers to an input element that indicates a current part of a user interface with which a user is interacting. In some implementations that include a cursor or other location marker, the cursor acts as a "focus selector," so that when an input (e.g., a press input) is detected on a touch-sensitive surface (e.g., touchpad 355 in Fig. 3A or touch-sensitive surface 451 in Fig. 4B) while the cursor is over a particular user interface element (e.g., a button, window, slider or other user interface element), the particular user interface element is adjusted in accordance with the detected input. In some implementations that include a touch-screen display (e.g., touch-sensitive display system 112 in Fig. 1A) that enables direct interaction with user interface elements on the touch-screen display, a detected contact on the touch-screen acts as a "focus selector," so that when an input (e.g., a press input by the contact) is detected on the touch-screen display at a location of a particular user interface element (e.g., a button, window, slider or other user interface element), the particular user interface element is adjusted in accordance with the detected input. In some implementations focus is moved from one region of a user interface to another region of the user interface without corresponding movement of a cursor or movement of a contact on a touch-screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch-screen display) that is controlled by the user so as to communicate the user's intended interaction with the user interface (e.g., by indicating, to the device, the element of the user interface with which the user is intending to interact). For example, the location of a focus selector (e.g., a cursor, a contact or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90% or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the description of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

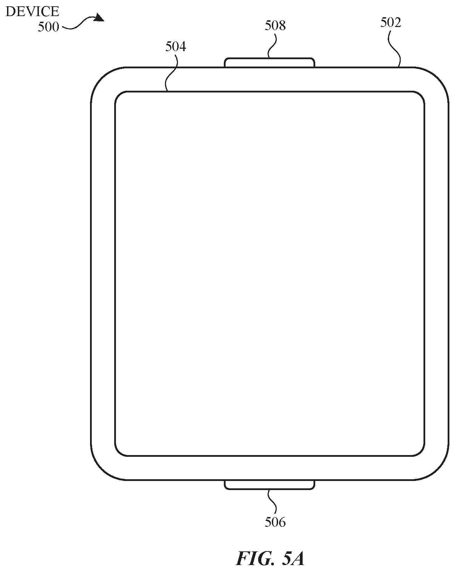

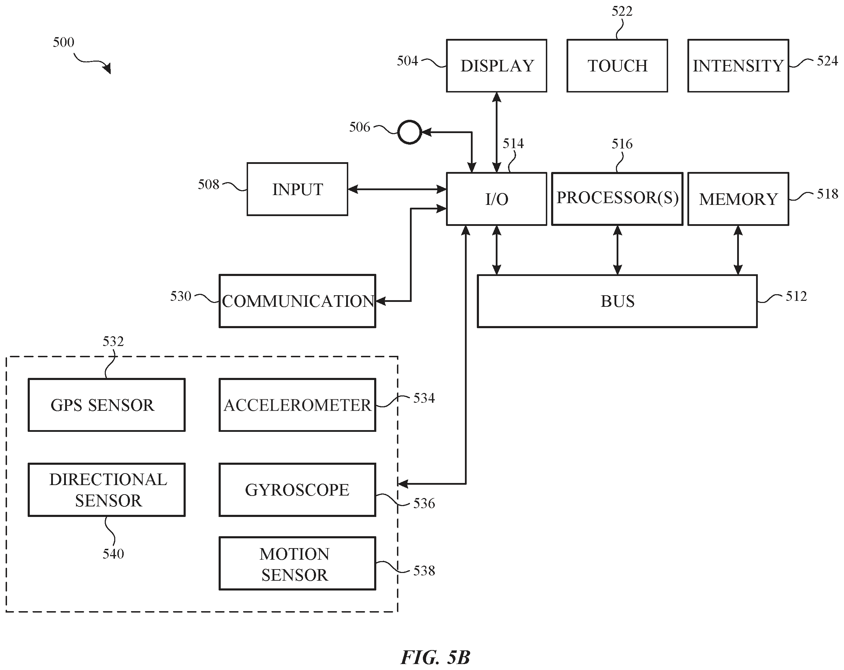

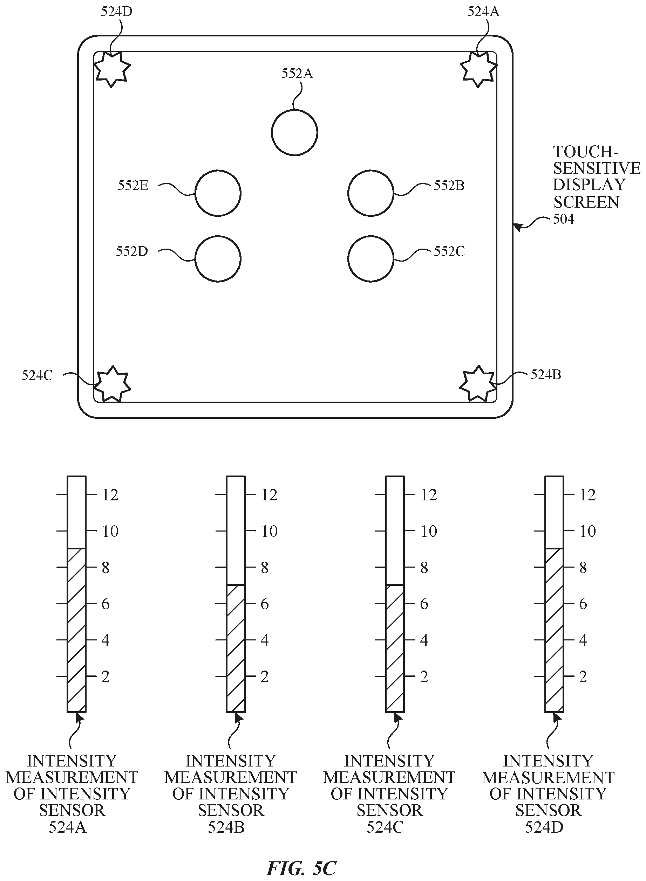

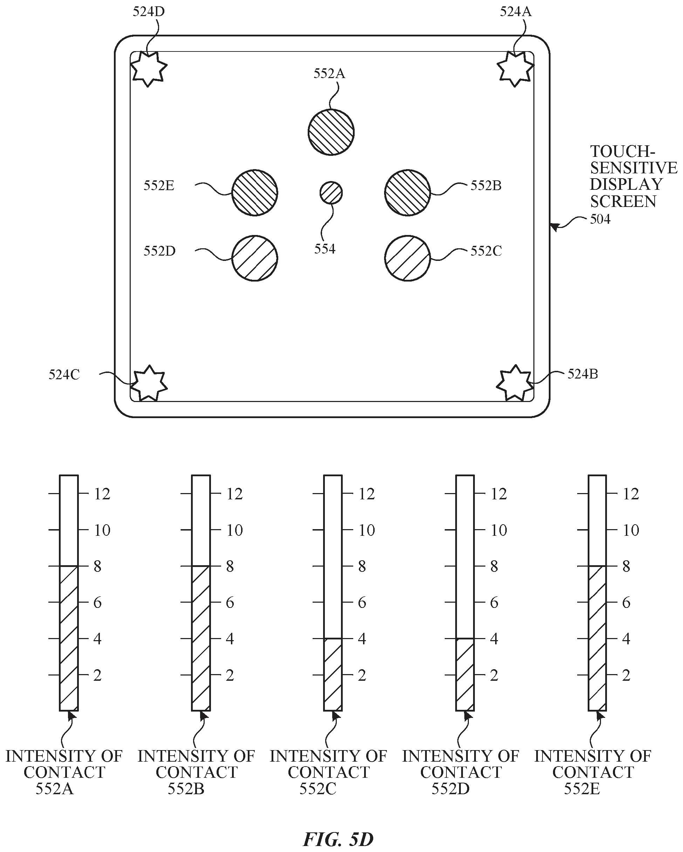

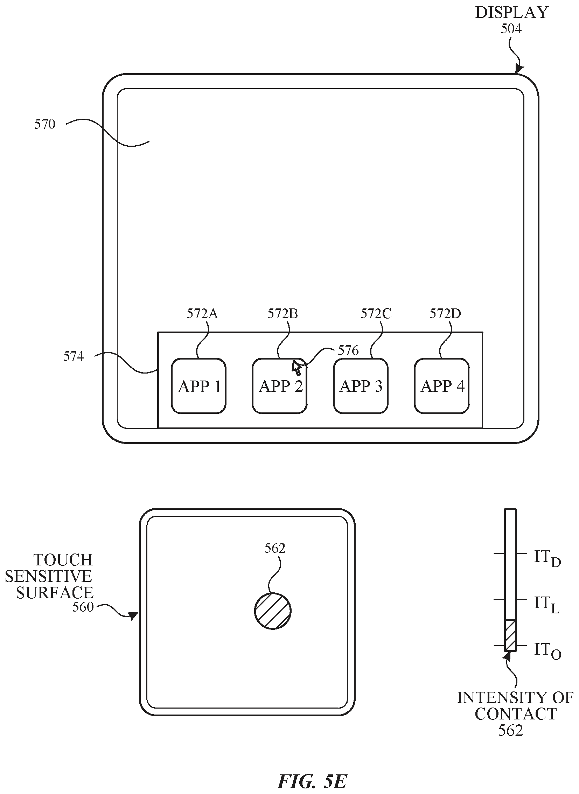

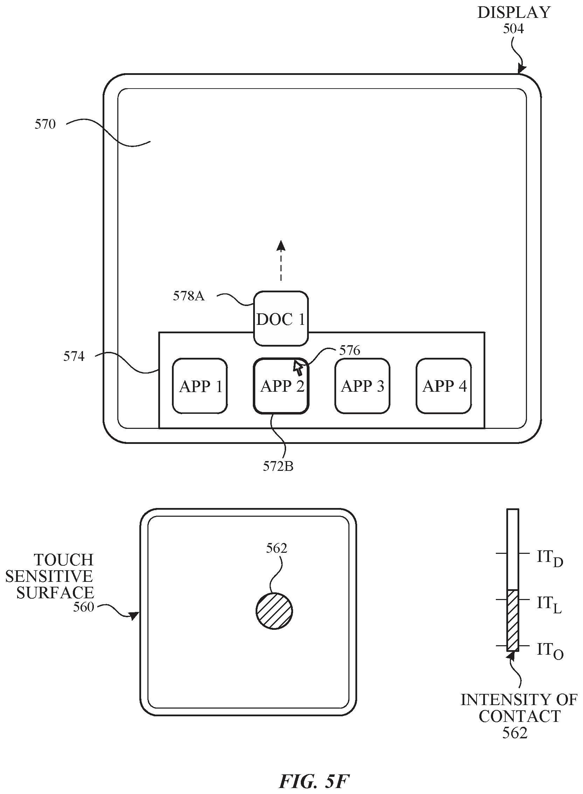

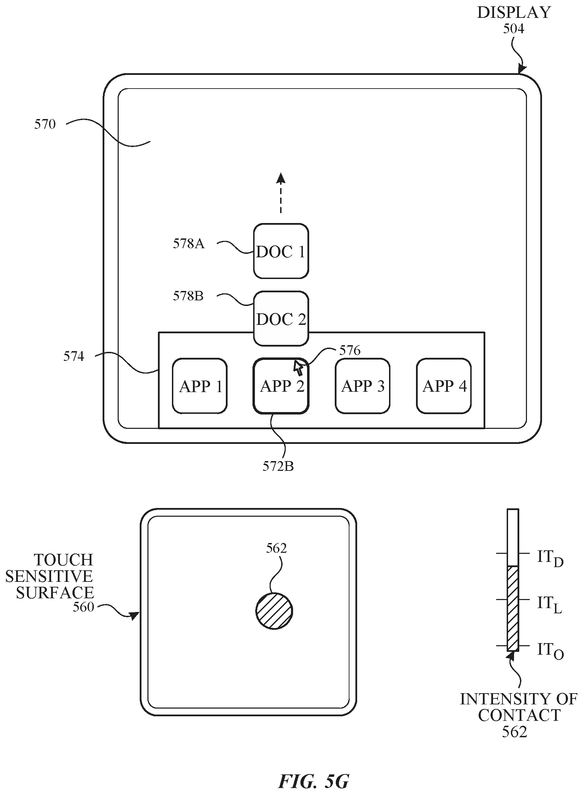

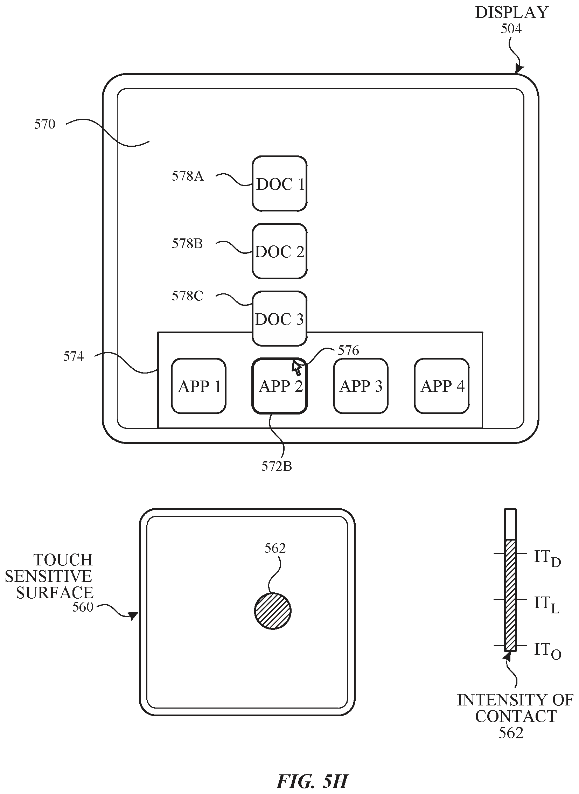

Fig. 5A illustrates a block diagram of an exemplary architecture for the device 500 according to some embodiments of the disclosure. In the embodiment of Fig. 5A, media or other content is optionally received by device 500 via network interface 502, which is optionally a wireless or wired connection. The one or more processors 516 optionally execute any number of programs stored in memory 506 or storage, which optionally includes instructions to perform one or more of the methods and/or processes described herein (e.g., method 700). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of Figs. 5, but can include other or additional components in multiple configurations.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

As used here, the term "affordance" refers to a user-interactive graphical user interface object that is, optionally, displayed on the display screen of devices 100, 300, and/or 500 (Figs. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in Fig. 3A or touch-sensitive surface 451 in Fig. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in Fig. 1A or touch screen 112 in Fig. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

Fig. 5C illustrates detecting a plurality of contacts 552A-552E on touch-sensitive display screen 504 with a plurality of intensity sensors 524A-524D. Fig. 5C additionally includes intensity diagrams that show the current intensity measurements of the intensity sensors 524A-524D relative to units of intensity. In this example, the intensity measurements of intensity sensors 524A and 524D are each 9 units of intensity, and the intensity measurements of intensity sensors 524B and 524C are each 7 units of intensity. In some implementations, an aggregate intensity is the sum of the intensity measurements of the plurality of intensity sensors 524A-524D, which in this example is 32 intensity units. In some embodiments, each contact is assigned a respective intensity that is a portion of the aggregate intensity. Fig. 5D illustrates assigning the aggregate intensity to contacts 552A-552E based on their distance from the center of force 554. In this example, each of contacts 552A, 552B, and 552E are assigned an intensity of contact of 8 intensity units of the aggregate intensity, and each of contacts 552C and 552D are assigned an intensity of contact of 4 intensity units of the aggregate intensity. More generally, in some implementations, each contact j is assigned a respective intensity Ij that is a portion of the aggregate intensity, A, in accordance with a predefined mathematical function, Ij = A·(Dj/ΣDi), where Dj is the distance of the respective contact j to the center of force, and ΣDi is the sum of the distances of all the respective contacts (e.g., i=1 to last) to the center of force. The operations described with reference to Figs. 5C-5D can be performed using an electronic device similar or identical to device 100, 300, or 500. In some embodiments, a characteristic intensity of a contact is based on one or more intensities of the contact. In some embodiments, the intensity sensors are used to determine a single characteristic intensity (e.g., a single characteristic intensity of a single contact). It should be noted that the intensity diagrams are not part of a displayed user interface, but are included in Figs. 5C-5D to aid the reader.

In some embodiments, a portion of a gesture is identified for purposes of determining a characteristic intensity. For example, a touch-sensitive surface optionally receives a continuous swipe contact transitioning from a start location and reaching an end location, at which point the intensity of the contact increases. In this example, the characteristic intensity of the contact at the end location is, optionally, based on only a portion of the continuous swipe contact, and not the entire swipe contact (e.g., only the portion of the swipe contact at the end location). In some embodiments, a smoothing algorithm is, optionally, applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is, optionally, characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

Figs. 5E-5H illustrate detection of a gesture that includes a press input that corresponds to an increase in intensity of a contact 562 from an intensity below a light press intensity threshold (e.g., "IT_{L}") in Fig. 5E, to an intensity above a deep press intensity threshold (e.g., "IT_{D}") in Fig. 5H. The gesture performed with contact 562 is detected on touch-sensitive surface 560 while cursor 576 is displayed over application icon 572B corresponding to App 2, on a displayed user interface 570 that includes application icons 572A-572D displayed in predefined region 574. In some embodiments, the gesture is detected on touch-sensitive display 504. The intensity sensors detect the intensity of contacts on touch-sensitive surface 560. The device determines that the intensity of contact 562 peaked above the deep press intensity threshold (e.g., "IT_{D}"). Contact 562 is maintained on touch-sensitive surface 560. In response to the detection of the gesture, and in accordance with contact 562 having an intensity that goes above the deep press intensity threshold (e.g., "IT_{D}") during the gesture, reduced-scale representations 578A-578C (e.g., thumbnails) of recently opened documents for App 2 are displayed, as shown in Figs. 5F-5H. In some embodiments, the intensity, which is compared to the one or more intensity thresholds, is the characteristic intensity of a contact. It should be noted that the intensity diagram for contact 562 is not part of a displayed user interface, but is included in Figs. 5E-5H to aid the reader.

In some embodiments, the display of representations 578A-578C includes an animation. For example, representation 578A is initially displayed in proximity of application icon 572B, as shown in Fig. 5F. As the animation proceeds, representation 578A moves upward and representation 578B is displayed in proximity of application icon 572B, as shown in Fig. 5G. Then, representations 578A moves upward, 578B moves upward toward representation 578A, and representation 578C is displayed in proximity of application icon 572B, as shown in Fig. 5H. Representations 578A-578C form an array above icon 572B. In some embodiments, the animation progresses in accordance with an intensity of contact 562, as shown in Figs. 5F-5G, where the representations 578A-578C appear and move upwards as the intensity of contact 562 increases toward the deep press intensity threshold (e.g., "IT_{D}"). In some embodiments, the intensity, on which the progress of the animation is based, is the characteristic intensity of the contact. The operations described with reference to Figs. 5E-5H can be performed using an electronic device similar or identical to device 100, 300, or 500.

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

Attention is now directed towards embodiments of user interfaces ("UI") and associated processes that are implemented on an electronic device, such as device 100, device 300, or device 500.

In some embodiments, the handwritten content manipulation process(es) described below can be deployed as one or more generative models, where content is automatically generated by one or more computers in response to a request to generate the content. The repositioned handwritten content is optionally generated on-device (e.g., generated at least in part by a computer system at which a request to generate the content is received) and/or generated off-device (e.g., generated at least in part by one or more nearby computers that are available via a local network or one or more computers that are available via the internet). This repositioned handwritten content optionally includes visual content (e.g., images, graphics, and/or video), audio content, and/or text content. Repositioned handwritten content optionally includes deterministically generated content that is generated by one or more computer systems and/or non-deterministically generated content that is generated automatically by one or more computer systems.

In some embodiments, repositioned handwritten content that is generated using a non-deterministic process is referred to as generative content (e.g., generative images, generative graphics, generative video, generative audio, and/or generative text). Generative content is typically generated by an automated process based on a prompt that is provided to the automated process. In some embodiments, the automated process is a Machine Learning (ML) process. An ML process typically uses one or more ML models to generate an output based on an input. An ML process optionally includes one or more pre-processing steps to adjust the input before it is used by the ML model to generate an output (e.g., adjustment to a user-provided prompt, creation of a system-generated prompt, and/or ML model selection). Generative content can, in some embodiments, be generated using a non-deterministic process that generates content using one or more automatic steps that include specific rules and steps for processing a prompt including one or more non-deterministic steps that introduce novel generative elements into the content that is generated. An ML process optionally includes one or more post-processing steps to adjust the output by the ML model (e.g., passing ML model output to a different ML model, upscaling, downscaling, cropping, formatting, and/or adding or removing metadata) before the output of the ML model used for other purposes such as being provided to a different software process for further processing or being presented (e.g., visually or audibly) to a user. An ML process that generates generative content is sometimes referred to as a generative ML process.

A prompt for generating generative content can include one or more of: one or more words (e.g., a natural language prompt that is written or spoken), one or more images, one or more drawings, and/or one or more videos. ML processes can include neural networks, linear regression, decision trees, support vector machines (SVMs), Naive Bayes, and k-nearest neighbors. Neural networks can include transformer-based deep neural networks such as large language models (LLMs) that are trained using supervised, unsupervised, reinforcement, and/or other learning techniques. Generative pre-trained transformer models are a type of LLM that can be effective at generating novel generative content based on a prompt. Some ML processes use a prompt that includes text to generate either different generative text, generative audio content, and/or generative visual content. Some ML processes use a prompt that includes visual content and/or an audio content to generate generative text (e.g., a transcription of audio and/or a description of the visual content). Some multi-modal ML processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an ML process that include phrasing, a specified style, relevant context (e.g., starting point content and/or one or more examples), and/or a role for the ML process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseudo-random seed content is used as a starting point for creating the generative content). For example when generating an image from a diffusion model, a random noise pattern is iteratively denoised based on the prompt to generate an image that is based on the prompt. While specific types of ML processes have been described herein, it should be understood that a variety of different ML processes could be used to generate generative content based on a prompt.

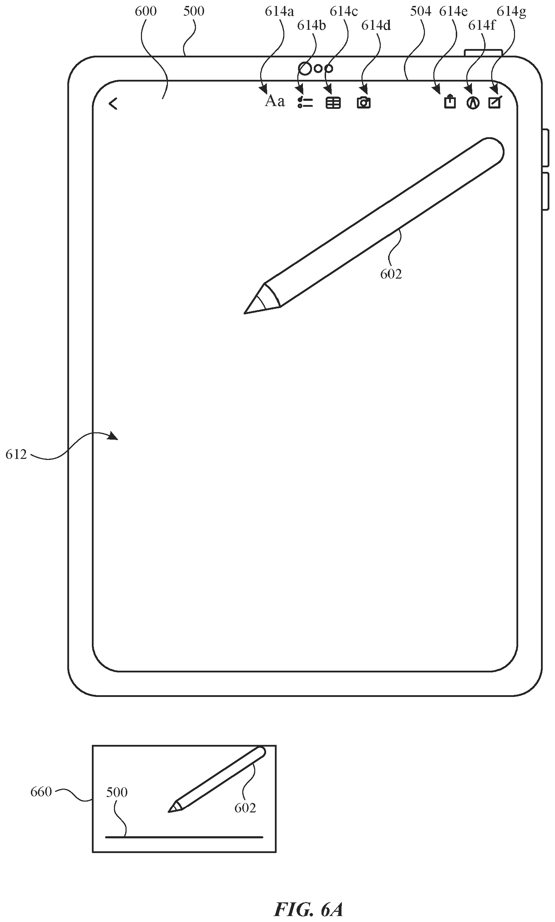

Figs. 6A-6DD illustrate exemplary ways in which an electronic device facilitates manipulation of handwritten content according to some embodiments. The embodiments in these figures are used to illustrate the processes described below, including the processes described with reference to Fig. 7.

Figs. 6A-6DD illustrate operation of the electronic device 500 for facilitating manipulation of handwritten content according to some embodiments. Fig. 6A illustrates electronic device 500 displaying user interface 600 (e.g., via a display device, via a display generation component, or via a touch screen). In some embodiments, user interface 600 is displayed via a display generation component 504. In some embodiments, the display generation component 504 is a hardware component (e.g., including electrical components) capable of receiving display data and displaying a user interface. In some embodiments, examples of a display generation component 504 include a touch screen display (such as display generation component 504), a monitor, a television, a projector, an integrated, discrete, or external display device, or any other suitable display device that is in communication with electronic device 500.

In some embodiments, user interface 600 is a user interface of a free-form handwriting application (e.g., for taking handwritten notes, drawing shapes, sketches, and/or drawings, composing handwritten text, and/or generating handwritten lists). In some embodiments, the handwriting application is an application installed on electronic device 500.

In Fig. 6A, user interface 600 includes a content-entry region 612. In some embodiments, the content-entry region 612 is configured to receive handwritten input (e.g., a drawing and/or handwriting input via a stylus device) and display a representation of the handwritten input (e.g., if drawing and/or handwritten input is provided) and/or display font-based text (e.g., if font-based text input is provided).

In some embodiments, user interface 600 further includes a text formatting option 614a that, when selected, causes the electronic device 500 to display options for changing the formatting of font-based text presented in the content-entry region 612. In some embodiments, user interface 600 further includes a checklist option 614b that, when selected, causes the electronic device 500 to toggle (e.g., apply or remove) checklist formatting of font-based text presented in the content-entry region 612. In some embodiments, user interface 600 further includes a table option 614c that, when selected, causes the electronic device 500 to insert a table into content-entry region 612. In some embodiments, user interface 600 further includes an image option 614d that, when selected, causes the electronic device 500 to display options for inserting an image (e.g., captured by a camera of the electronic device 500 and/or selected from an image gallery of the electronic device 500) in the content-entry region 612. In some embodiments, user interface 600 further includes a sharing option 614e that, when selected, causes the electronic device 500 to display options for sharing the contents in content-entry region 612 with another electronic device. In some embodiments, user interface 600 further includes a handwritten content formatting option 614f that, when selected, causes the electronic device 500 to display options for changing the formatting of handwritten content inserted in the content-entry region 612. In some embodiments, user interface 600 further includes a new document option 614g that, when selected, causes the electronic device 500 to create a new document with the application of user interface 600.

From Fig. 6A to Fig. 6B, the electronic device 500 detects a contact with display generation component 504 (e.g., a touch screen) provided by the stylus 602 (e.g., controlled by a user of the electronic device 500) while a respective handwriting entry tool (e.g., a pen entry tool) is active. In some embodiments, in response to detecting the contact by stylus 602, a representation of the handwritten input (e.g., by stylus 602) is displayed at the contact location. Thus, the user is able to begin directly drawing/writing in the user interface 600.

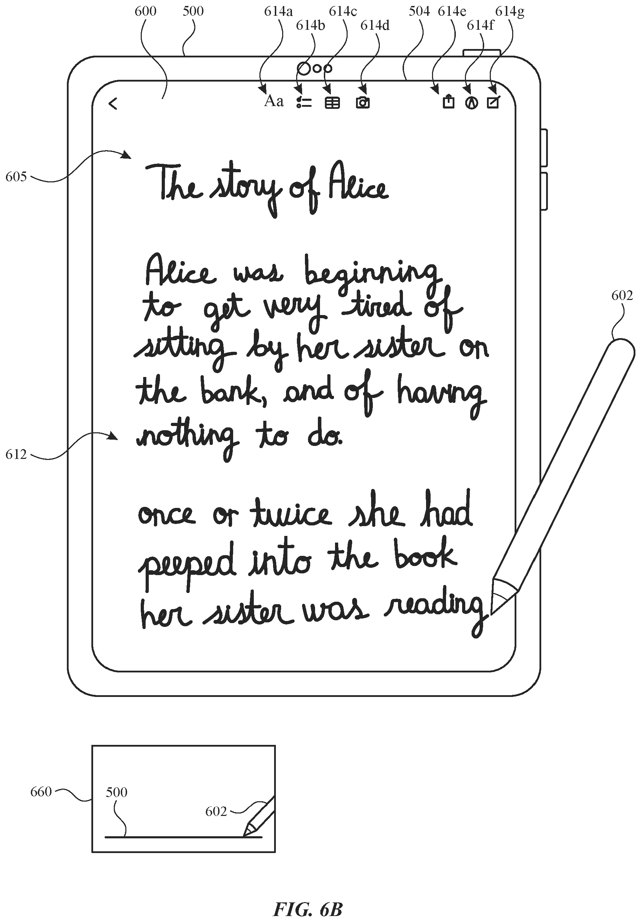

In Fig. 6B, the electronic device 500 displays handwritten content 605 in the user interface 600, which represents handwritten input. In some embodiments, a representation of the handwritten input is displayed while the input is being received. As shown in Fig. 6B, the handwritten content 605 corresponds to handwritten text provided by the user using the stylus 602 (e.g., comprising the words "The Story of Alice"). The handwritten content 605 includes a sequence of characters (e.g., that includes the character of "The Story of Alice").

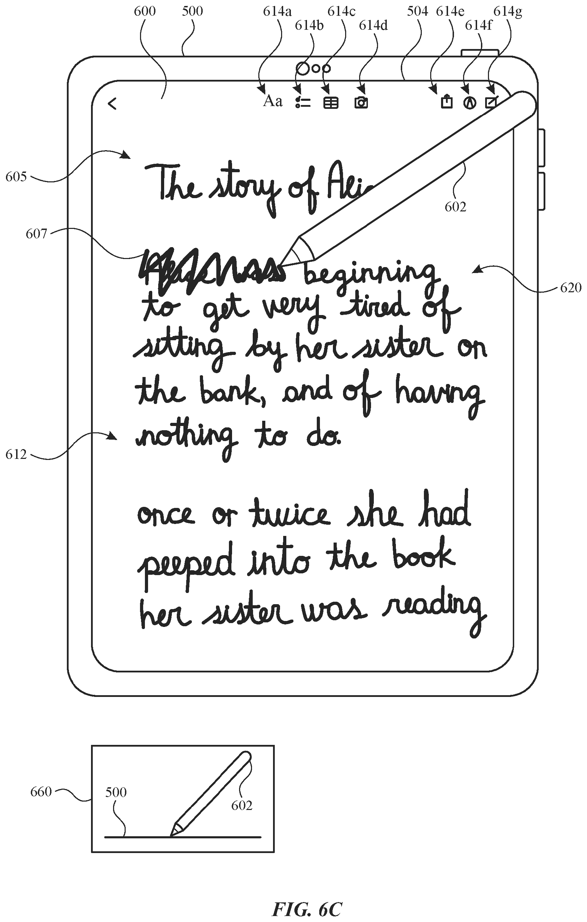

In Fig. 6C, the electronic device 500 detects an input directed to the handwritten content 605 corresponding to a request to delete a respective portion of the sequence of characters. For example, the electronic device 500 detects handwritten marks 607 from the stylus 602 (e.g., continuous or sequential lines/scratches of the stylus 602) on the surface of the display generation component 504. The handwritten marks 607 are directed to a respective portion of the handwritten content 605. In particular, the handwritten marks 607 are directed to the text "Alice was" in the second paragraph in the handwritten content 605. The electronic device 500 displays a representation of the handwritten marks 607 concurrently with (e.g., overlaid on the respective portion of) the handwritten content 605 in the user interface 600. Thus, handwritten marks 607 correspond to a request to delete the portion of the handwritten content 605 over which the stylus 602 applied handwritten marks 607.

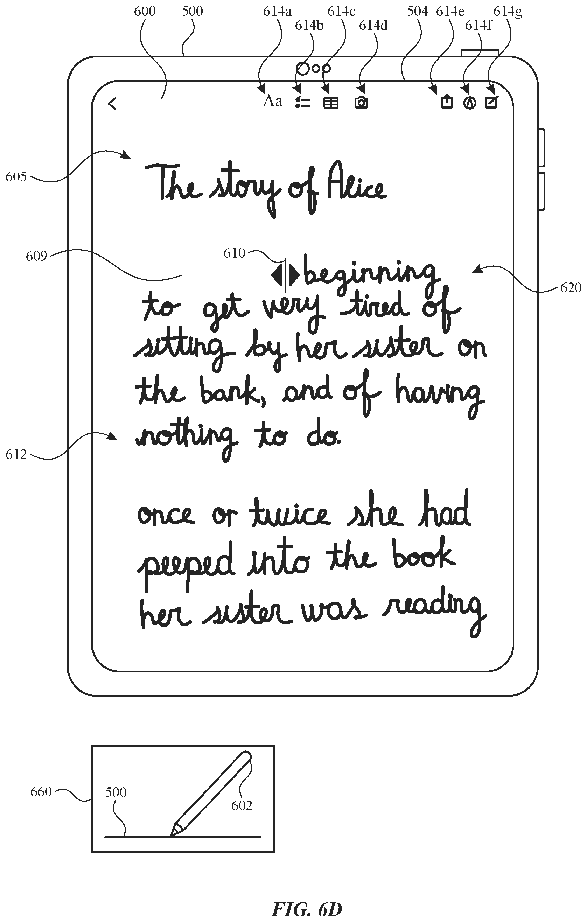

In Fig. 6D, in response to detecting the input corresponding to the request to delete the respective portion of the handwritten content 605, also referred to herein as "sequence of characters", the electronic device 500 deletes the respective portion of the handwritten content 605 (e.g., "Alice was") in the user interface 600. In particular, the electronic device 500 ceases display of the respective portion of the handwritten content 605, and ceases display of the handwritten marks 607 in the user interface 600. In addition, the electronic device 500 creates and/or displays a blank space 609 in the user interface 600 at the location where the respective portion of the handwritten content 605 was deleted. The blank space 609 is the size of the deleted respective portion of handwritten content 605 (e.g., deleted text "Alice was") in the user interface 600. After the respective portion of the handwritten content 605 is deleted in the user interface 600, the undeleted portions of the handwritten content 605 remain unchanged within the user interface 600.

In response to detecting the input corresponding to the request to delete the respective portion of the handwritten content 605 (e.g., "Alice was") shown in Fig. 6C, in addition to deleting the respective portion of the handwritten content 605, the electronic device 500 displays cursor 610 in the user interface 600, as shown in Fig. 6D. The electronic device 500 displays cursor 610 at a location in the user interface 600 corresponding to blank space 609. In some embodiments, the electronic device 500 displays the cursor 610 before the first character of a first portion of the sequence of characters 620 (e.g., "beginning...") and adjacent to the first character (e.g., such that the cursor 610 and the first character "b" are not separated by any character and/or space). The first portion of the sequence of the characters 620 corresponds to the remainder of the middle paragraph after deletion of the respective portion of the handwritten content 605 in user interface 600. Cursor 610 is shaped as a double arrow separated by a divider. The double arrow is oriented along an axis of the first representation of handwritten content 605 (e.g., a horizontal axis). In particular, the double arrows of the cursor 610 point left and right such that a line connecting the tips of the double arrows would be horizontal. Cursor 610 is for moving a corresponding portion of the sequence of characters 620 according to movement input directed to the cursor, as will be described further below, which, in Fig. 6D, would be horizontally.

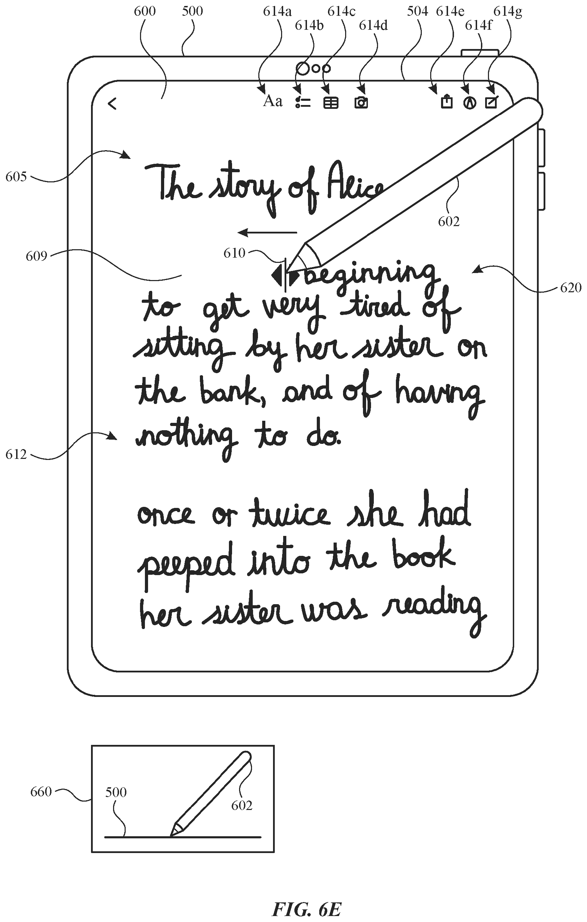

In Fig. 6E, the electronic device 500 detects an input (e.g., with stylus 602) corresponding to a request to move to cursor 610 leftward in the user interface 600. The input is directed to cursor 610. In particular, the electronic device 500 detects contact of the stylus 602 on the surface (e.g., touch screen 504) of the electronic device 500 at the location of cursor 610 followed by a drag gesture leftward by stylus 602 on the surface of the electronic device 500 while contact is maintained.

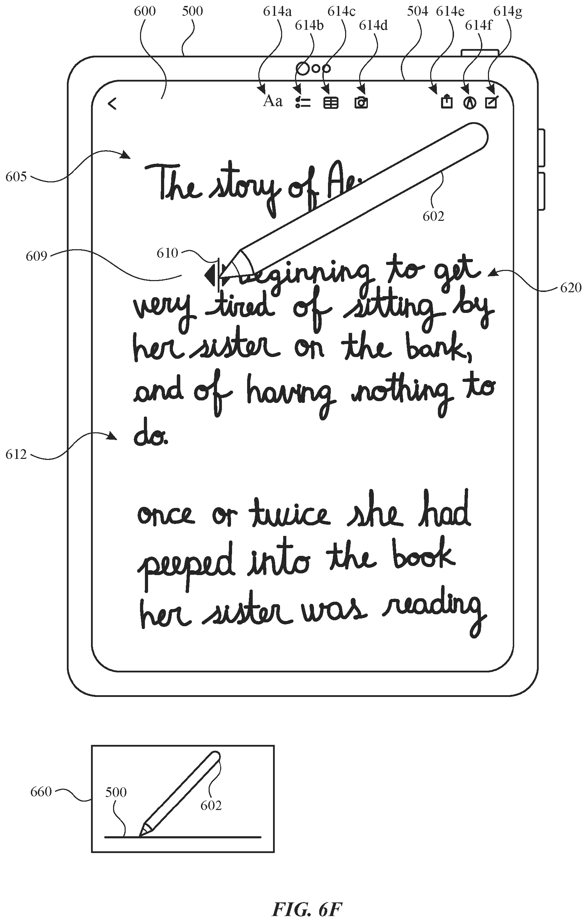

In response to detecting the input corresponding to the request to move cursor 610 leftward in the user interface 600 in Fig. 6E, the electronic device 500 repositions the first portion the sequence of characters 620 (e.g., the portion of the sequence of characters starting on the right side of cursor 610, starting with "beginning") in accordance with the input, as shown in Fig. 6F. For example, the input shown in Fig. 6E includes movement of the stylus 602 to the left, so the first portion of the sequence of characters 620 are repositioned leftwards and/or up in Fig. 6F compared to the positions shown in Fig. 6E. Additionally, in Fig. 6F, the electronic device 500 maintains the display of the cursor 610 as oriented along the axis corresponding to the direction of the input (e.g., leftward), which is the horizontal axis. In some embodiments, in accordance with a determination that a blank space exists adjacent to the first portion of the sequence of characters 620 in the direction of the input (e.g., leftward), the electronic device 500 moves cursor leftward and moves the first portion of the sequence of characters 620 leftward (e.g., in accordance with the input) concurrently with the cursor 610. In particular, the electronic device 500 moves the cursor 610 leftward into the blank space 609 located to the left of the cursor and moves a portion of the first portion the sequence of characters 620 ("beginning") into a portion of blank space 609 located to the left of the cursor 610.

Moving the first portion of the sequence of characters with the cursor 610 includes "reflowing" the first portion of the sequence of characters 620 in the user interface 600 based on the input corresponding to the request to move the cursor 610. As used herein, reflowing the first portion of the sequence of characters 620 refers to moving/shifting one or more characters of the handwritten content 605 in the user interface 600, optionally the one or more characters adjacent to (e.g., following or preceding) a blank space, such as blank space 609 created by the deletion of the respective portion of the handwritten content 605 in the user interface 600. For example, as discussed herein, the electronic device 500 moves the text "beginning to get ... to do" of the first portion of the sequence of characters 620 that is adjacent to (e.g., following) the cursor 610 (e.g., the first portion of the sequence of characters) leftward such that "beginning" occupies a portion of blank space 609.

When the electronic device 500 reflows the handwritten content 605 in the user interface 600, the electronic device 500 updates locations of particular characters (e.g., and/or words) of the handwritten content 605 within the lines of the handwritten content 605. For example, in Fig. 6E, prior to the reflow of the handwritten content 605, the text "sitting by" is located in a third line of the second paragraph of first portion of the sequence of characters 620 (e.g., from the top line in the user interface 600) of the lines in which the first portion of the sequence of characters 620 is displayed in the user interface 600. Following the reflow of the handwritten content 605, as shown in Fig. 6E, the text "sitting by" is located in a second line, above the third line of the lines in which the first portion of the sequence of characters 620 is displayed in the user interface 600. Additional details relating to reflow (e.g., movement in response to interaction with cursor 610) of handwritten content are provided below with reference to method 700.

The electronic device 500 optionally does not move characters others than the first portion of the sequence of characters 620 while moving the first portion of the sequence of character in the user interface 600, such as the first paragraph and the third paragraph of the handwritten content 605.

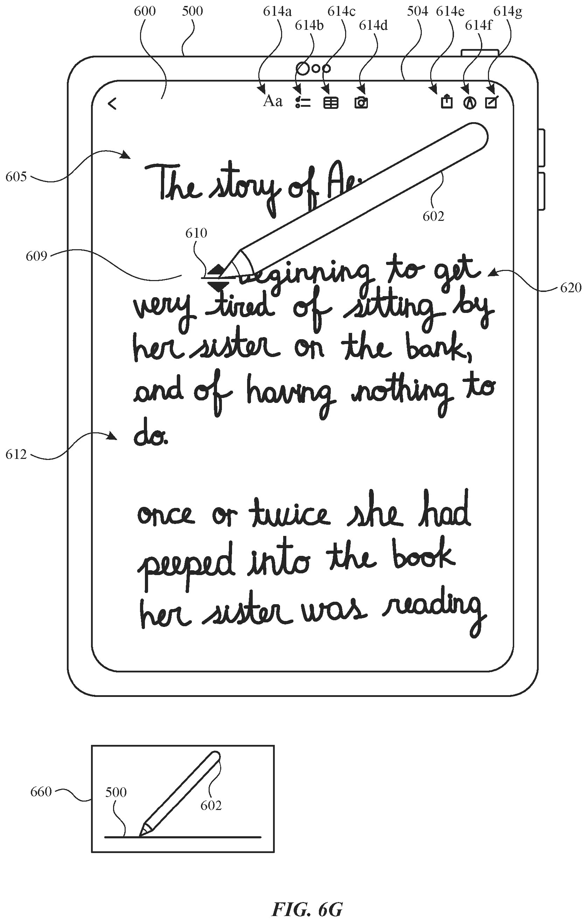

In Fig. 6G, the electronic device 500 detects an input corresponding to a request to move to cursor 610 upward in the user interface 600. The input is directed to cursor 610. In particular, the electronic device 500 detects contact of the stylus 602 on the surface (e.g., touch screen 504) of the electronic device 500 at or proximate to the location of cursor 610 followed by a drag gesture upward by stylus 602 on the surface of the electronic device 500 while contact is maintained.

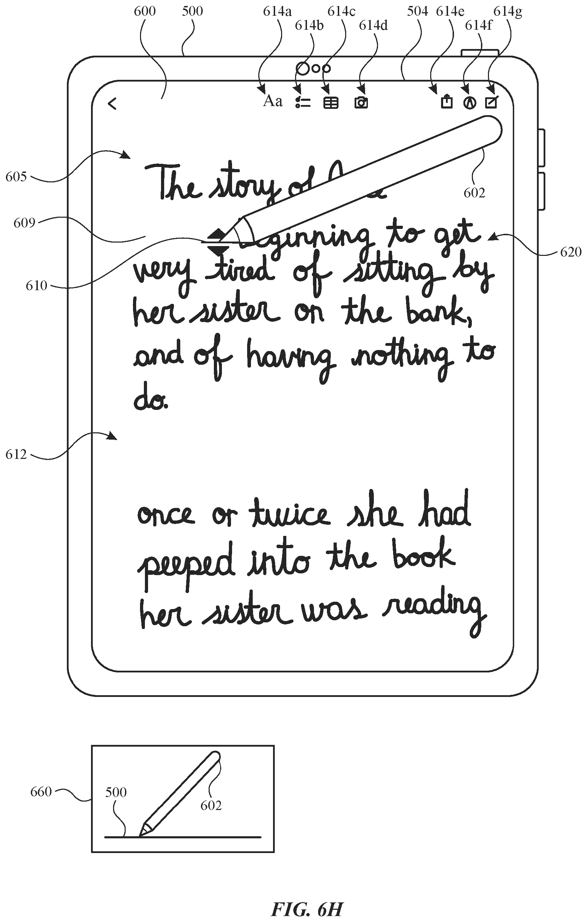

In response to detecting the input corresponding to the request to move cursor 610 upward in the user interface 600 shown in Fig. 6G, the electronic device 500 reflows the first portion of the sequence of characters 620 in accordance with the input as described below, and updates the display of the cursor 610 to display the cursor 610 as oriented along an axis corresponding to the direction of the input (e.g., upward), which is a vertical axis, as shown in Fig. 6G. In particular, the double arrows of the cursor 610 point upward and downward such that a line connecting the tips of the double arrows would be vertical. In accordance with a determination that a blank space 611 exists adjacent to the cursor 610 in the direction of the input (e.g., above the first portion of the sequence of characters 620, as best shown in Fig. 6G), the electronic device 500 moves the cursor 610 upward into the blank space 611 located above the cursor 610, as shown in Fig. 6H. The electronic device 500 moves cursor 610 according to a magnitude of the input corresponding to the request to move cursor 610 in the user interface 600 as described further below with reference to method 700. In addition to moving the cursor 610, the electronic device 500 moves the first portion of the sequence of characters 620 upward concurrently with the cursor 610 (e.g., in accordance with the input). In particular, the first line of the first portion of the sequence of characters 620 (e.g., "beginning to get") is now shifted into the blank space 611 above the first line of the sequence of characters 620 and the last line of the first portion of the sequence of characters 620 ("do") is shifted upward by a line, leaving a black space 613 at the previous location of the last line.

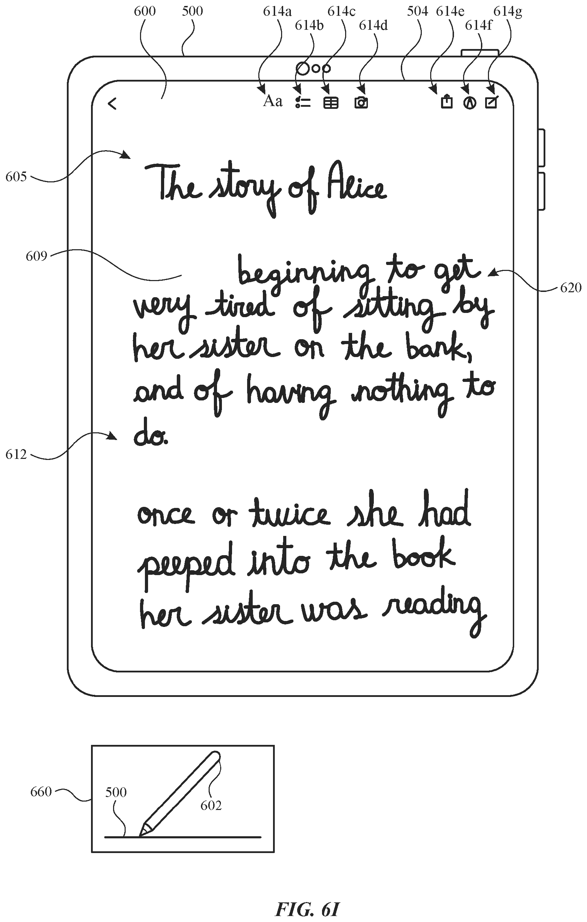

In Fig. 6I, the electronic device 500 displays the handwritten content 605 as it was displayed in Fig. 6G. For example, the electronic device 500 displays the handwritten content 605 in Fig. 6I as though the electronic device 500 did not detect the input shown in Fig. 6G. Additionally, in Fig. 6I, the electronic device 500 does not detect the stylus 602 in contact with a surface of the display generation component 504 and does not display cursor 610.

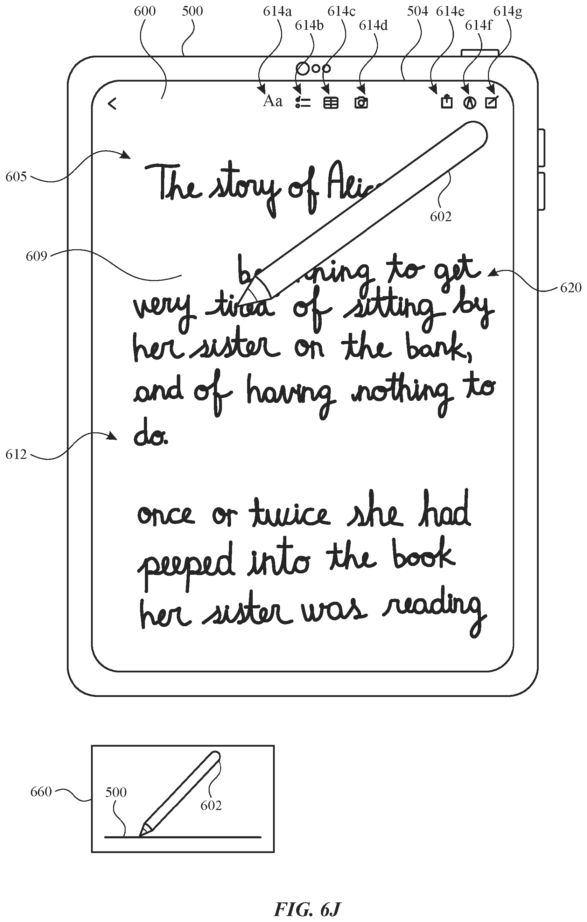

In Fig. 6J, the electronic device 500 detects an input corresponding to a request to display a bounding box in the user interface 600. The input is directed to the first portion of the sequence of characters 620. In particular, the input includes a single tap of the stylus 602 on a surface (e.g., touch screen 504) of the electronic device directed to the first portion of the sequence of characters 620, such as the electronic device 500 detecting the contact at the location of the first portion of the sequence of characters 620.

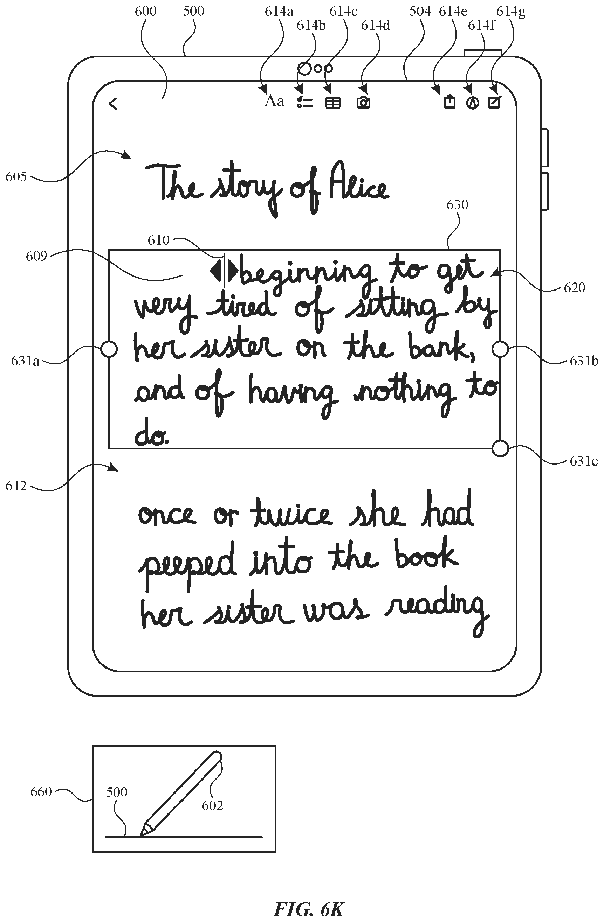

In response to detecting the input corresponding to the request to display a bounding box in the user interface 600 shown in Fig. 6J, the electronic device 500 displays bounding box 630 in the user interface 600 as shown in Fig. 6K. The electronic device 500 displays the bounding box 630 around (e.g., visually wrapped around) the first portion of the sequence of characters 620 in the user interface 600 (and optionally not solely around the word "tired" to which input in Fig. 6J was directed). The bounding box 630 defines the limits of the movement of cursor 610 (e.g., in the first direction or in the second direction) and movement of the first portion of the sequence of characters 620 while the first portion of the sequence of characters 620 is moved with the cursor 610 (e.g., in the first direction or in the second direction). In some embodiments, the electronic device 500 determines a location, size, and shape of the bounding box 630 in the user interface 600 based on user input. In some embodiments, the electronic device 500 automatically (e.g., without user input expressly setting the boundary of bounding box 630) determines what portion of sequence of characters to include in the bounding box 630 for reflow based on further user input. For example, in Fig. 6K, the electronic device 500 sets the boundary of bounding box 630 around the second paragraph as the first portion of the sequence of characters 620 as selected for reflow in response to the deletion of the respective portion of the request of characters ("e.g., Alica was") that is part of the second paragraph. In some embodiments, the electronic device 500 automatically (e.g., without user input expressly setting the boundary of bounding box 630) adjusts the boundary of bounding box 630 based on a selection of a different portion of the sequence of characters, as described below herein.

Bounding box 630 includes a set of resizing handles 631a through 631c that are selectable to initiate adjustment of one or more metrics of the boundary of bounding box 630, including the size of the bounding box 630. For example, as shown in Fig. 6K, the electronic device 500 displays a first resizing handle 631a (e.g., at a first edge/side of the bounding box 630), a second resizing handle 631b (e.g., at a second, opposite, edge/side of the bounding box 630), and a third resizing handle 631c (e.g., at a corner of the bounding box 630) in the user interface 600. In some embodiments, the first resizing handle 631a and/or the second resizing handle 631b are selectable and/or movable to initiate changing a width of the bounding box 630 and, therefore, a width of the boundary of first portion of the sequence of characters 620 (e.g., which affects the number of characters of the first portion of the sequence of characters 620 that the electronic device 500 is able to be display in a respective line in the first portion of the sequence of characters 620). In some embodiments, the third resizing handle 631c is selectable and/or movable to initiate changing a length and/or the width of the bounding box 630 (e.g., depending on a direction of the movement of the third resizing handle 631c), and therefore the length and/or the width of the boundary of the first portion of the sequence of characters 620 during reflow.

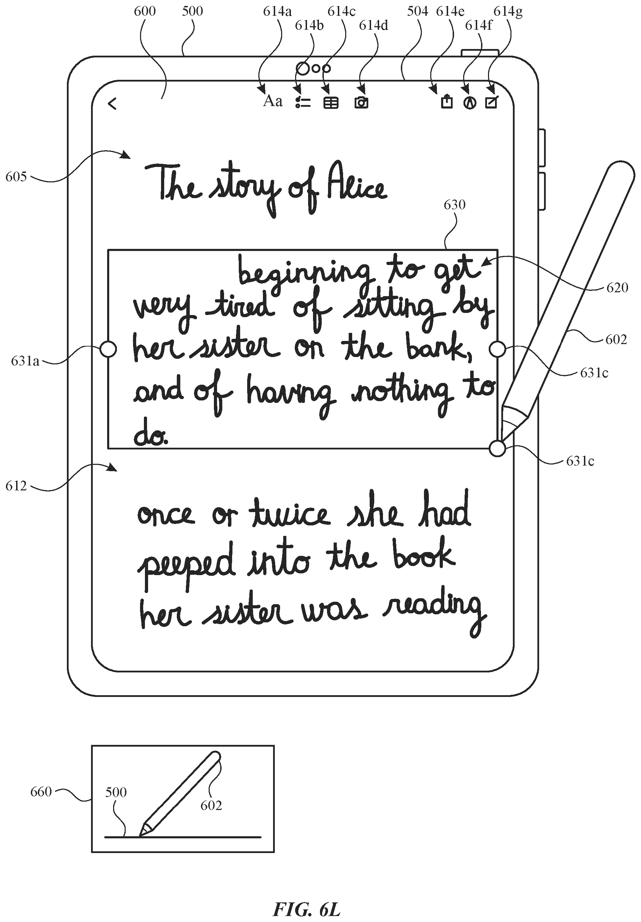

In Fig. 6L, the electronic device 500 detects an input corresponding to a request to resize the boundary of bounding box 630 in the user interface 600. The input is directed to the resizing handle 631c. In particular, the electronic device 500 detects a tap or contact of the stylus 602 on the surface (e.g., touch screen 504) of the electronic device 500 at the location of the resizing handle 631c, followed by dragging the stylus 602 downward while maintaining contact of the stylus 602 with the surface of display generation component 504.

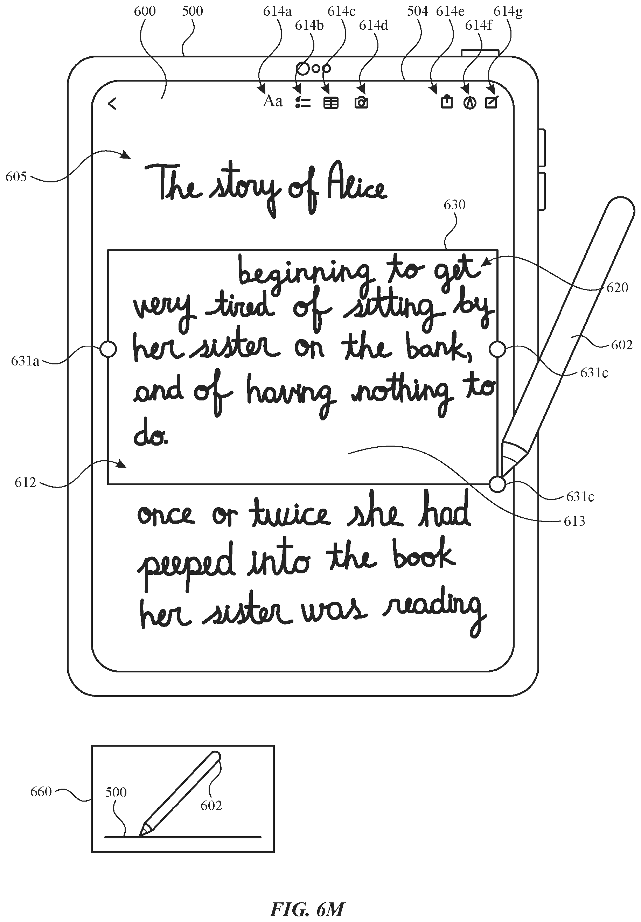

In response to detecting the input corresponding to a request to resize the boundary of bounding box 630 in the user interface 600 as shown in Fig. 6L, the electronic device 500 increases the size of the boundary of the first portion of the sequence of characters 620 during reflow and updates display of bounding box 630 in accordance with the input, as shown in Fig. 6M. In particular, the electronic device 500 increases the size of the boundary of bounding box 630 according to magnitude and direction of the input corresponding to the request to resize the bounding box 630. Accordingly, the electronic device 500 moves the side of bounding box 630 located below the first portion of the sequence of characters 620 past the blank space 613 that was located below the first portion of the sequence of characters 620, thus including the blank space 631 within the boundary of bounding box 630.

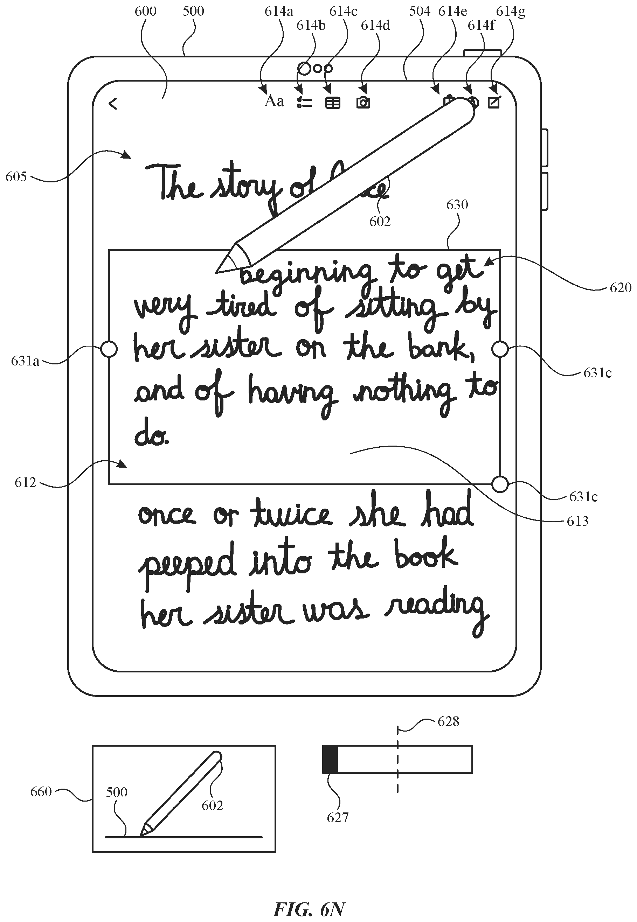

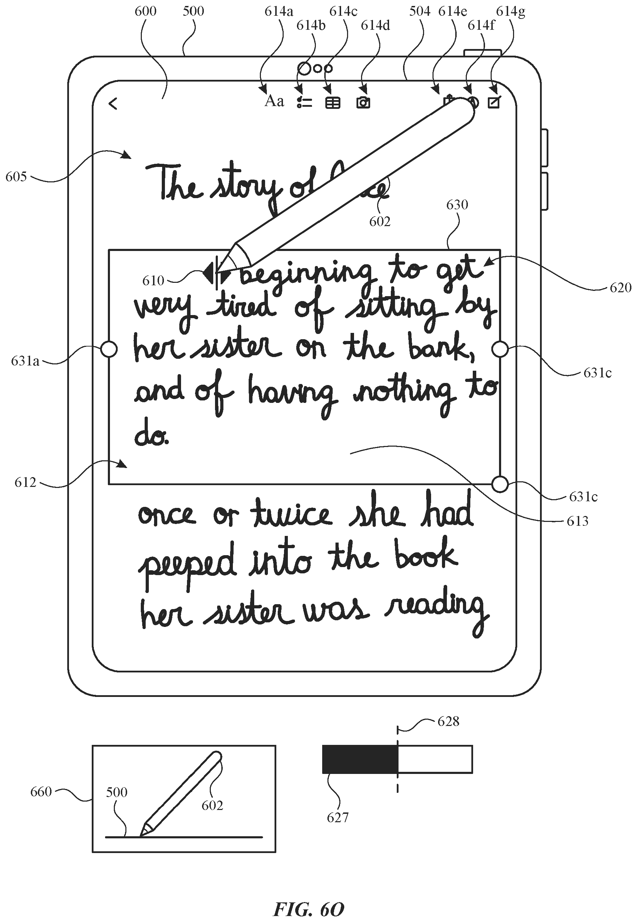

In Fig. 6N, while bounding box 630 is displayed in the user interface 600, electronic device 500 detects an input corresponding to a request to display cursor 610 in the user interface 600. The input is directed to the first portion of the sequence of characters 620. In particular, the electronic device 500 detects a tap or contact of the stylus 602 on the surface (e.g., touch screen 504) of the electronic device 500. As shown in Fig. 6O, the tap or contact of the stylus 602 is maintained for a duration 627 that exceeds duration threshold 628 and is directed to the first portion of the sequence of characters. In Fig. 6N, the tap or contact of the stylus 602 has not yet been maintained for the duration threshold 628, so the electronic device 500 does not yet display the cursor 610 in Fig. 6N.

In Fig. 6O, in response to detecting the tap or contact of the stylus maintained for the duration threshold 628, the electronic device 500 displays cursor 610 at the location in the user interface 600 where the input corresponding to the request to display the cursor 610 was detected, which is left of the word "beginning."

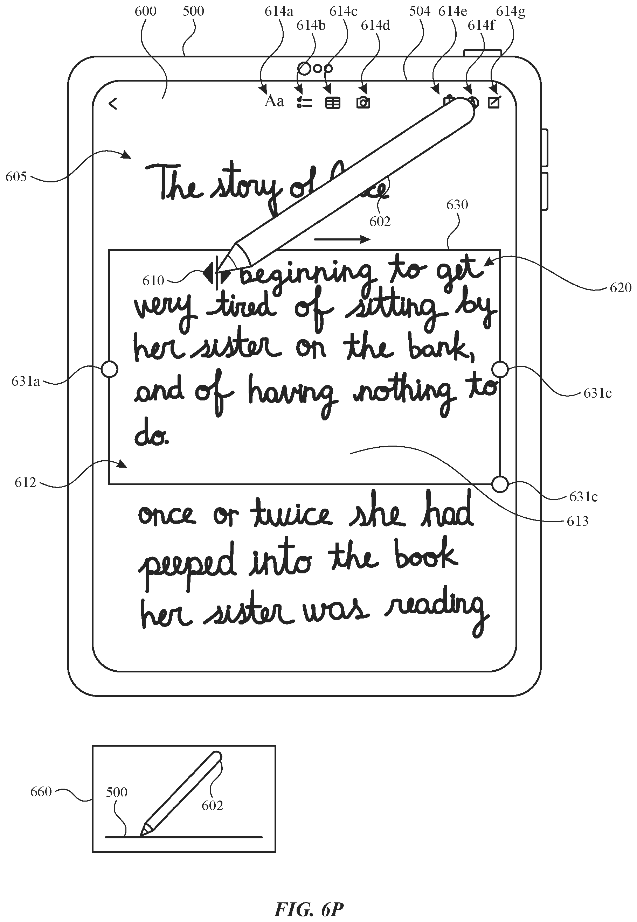

In Fig. 6P, the electronic device 500 detects an input corresponding to a request to move cursor 610 rightward in the user interface 600. The input is directed to cursor 610. In particular, the electronic device 500 detects contact of the stylus 602 on the surface (e.g., touch screen 504) of the electronic device 500 at the location of cursor 610 followed by dragging the stylus 602 rightward on the surface of the electronic device 500 while contact is maintained.

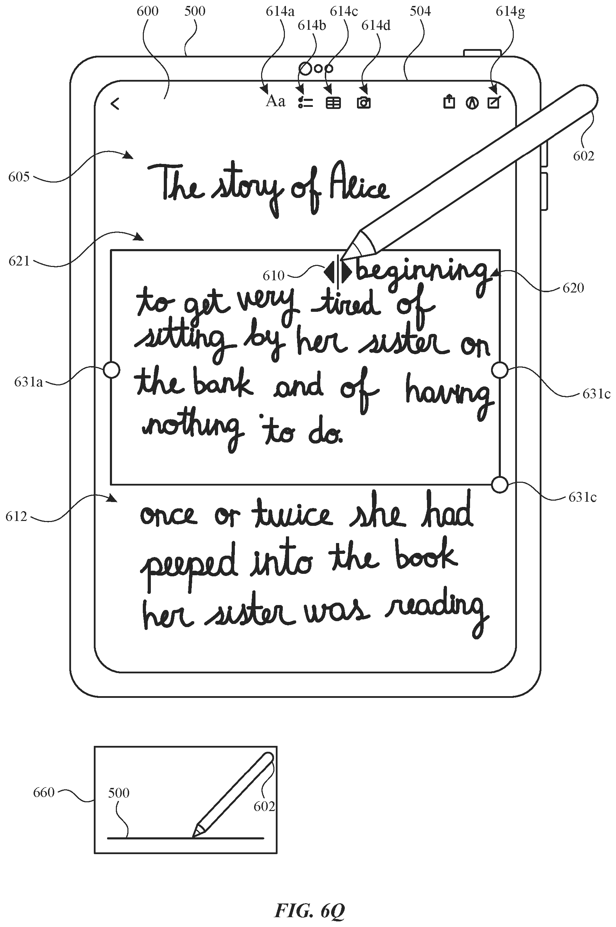

In response to detecting the input corresponding to the request to move cursor 610 rightward in the user interface 600 shown in Fig. 6P, the electronic device 500 reflows the first portion the sequence of characters 620 in accordance with the input and maintains the display of the cursor 610 as oriented along the axis corresponding to the direction of the input (e.g., rightward), which is the horizontal axis, as shown in Fig. 6Q. In accordance with a determination that a blank space exists adjacent to the first portion of the sequence of characters 620 rightward of the first portion of the sequence of characters 620 (e.g., rightward of the last character or after the last character of the first portion of the sequence of characters), the electronic device 500 moves the cursor 610 rightward and moves the first portion of the sequence of characters 620 rightward concurrently with the cursor 610 (e.g., in accordance with the input). Moving the first portion of the sequence of characters 620 with the cursor 610 includes "reflowing" first portion of the sequence of characters in the user interface 600 based on the input corresponding to the request to move the cursor 610. The cursor 610 thus "pushes" the first portion of the sequence of characters 620 rightward such that the beginning of the first portion of the sequence of characters 620 (e.g., "beginning") has been shifted to the second line in the bounding box 630, thus creating a blank space 621 where the first line of the sequence of characters 620 used to be. In doing so, the electronic device 500 moves the end of the first portion the sequence of characters 620 (e.g., "to go") rightward to fill a blank space 613 shown in Fig. 6P in the last line of the sequence of characters and further occupy a portion of blank space 613 adjacent to the lower side of boundary 630'.

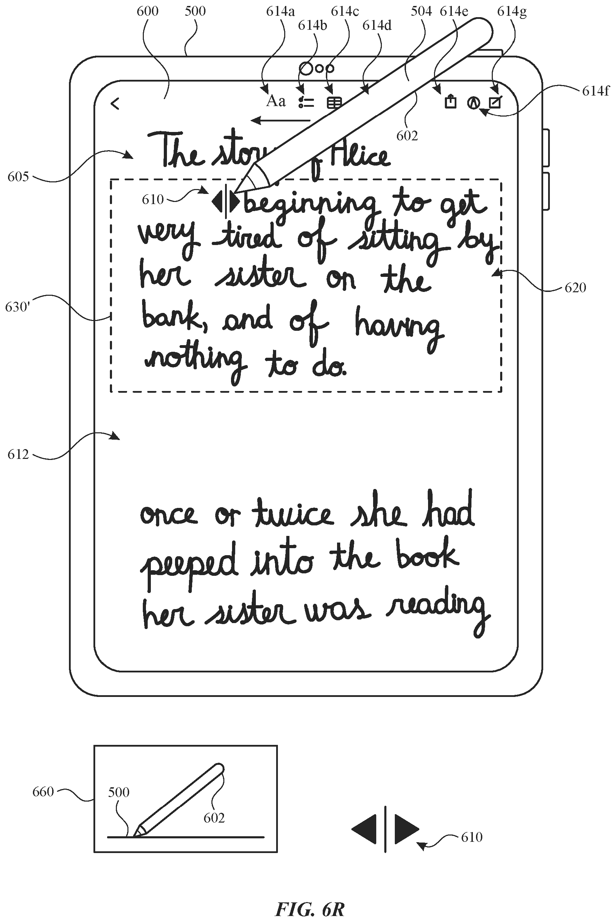

Fig. 6R illustrates the electronic device 500 displaying cursor 610 in the user interface 600 in response to detecting input corresponding to a request to display the cursor 610, such as the input shown in Figs. 6N-6O. In Fig. 6R, the electronic device 500 displays cursor 610 before the first portion of the sequence of characters 620 (e.g., "beginning"). In addition, boundary 630' is shown in dashed lines to indicate that the boundary 630' of movement of the first portion of the sequence of characters 620 by reflowing exists, but is optionally not displayed because the electronic device 500 has not detected user input corresponding to a request to display a bounding box indicating boundary 630'. As previously described, boundary 630' serves to limit the movement of cursor 610 and the first portion of the sequence of characters 620. The electronic device 500 detects an input corresponding to a request to move to cursor 610 leftward beyond the boundary 630' in the user interface 600. For example, the magnitude (e.g., distance) of the input corresponds to movement of cursor 610 beyond boundary 630' as described below with reference to method 700. The input is directed to cursor 610. In particular, the electronic device 500 detects contact of the stylus 602 on the surface (e.g., touch screen 504) of the electronic device 500 followed by a drag gesture leftward by stylus 602 on the surface of the electronic device 500 while contact is maintained.

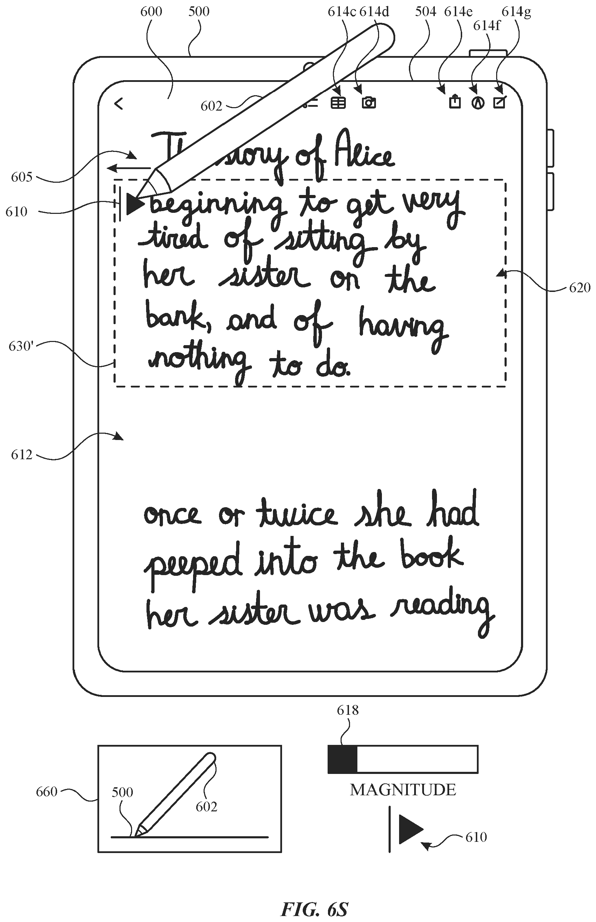

In response to detecting the input corresponding to the request to move to cursor 610 leftward beyond the boundary 630' in the user interface 600 shown in Fig. 6R, the electronic device 500 moves cursor 610 leftward to boundary 630' and moves the first portion of the sequence of characters 620 leftward to the boundary 630' concurrently with cursor 610, as shown in Fig. 6S. The input corresponding to the request to move the cursor 610 beyond the boundary 630 has a first magnitude beyond the boundary 630' as shown in Fig. 6S. The electronic device 500 does not move the cursor 610 or the first portion of the sequence of characters 620 past the boundary 630'. In addition, in accordance with a determination that a location of the cursor 610 corresponds to the boundary 630' (e.g., the cursor 610 abuts against boundary 630'), the electronic device 500 displays the cursor 610 with a visual appearance corresponding to its location on the boundary 630'. In particular, cursor 610 includes an indication that the boundary 630' blocks the cursor 610 from moving further leftward (e.g., in response to additional input corresponding to a request to move leftward). The electronic device 500 therefore ceases display of left arrow of the cursor 610 leaving the cursor 610 with a single arrow pointing rightward and away from the boundary 630'. This appearance of the cursor 610 indicates movement of the cursor 610 is possible rightward because rightward movement is not limited by the boundary 630', but leftward movement is prevented by boundary 630'.

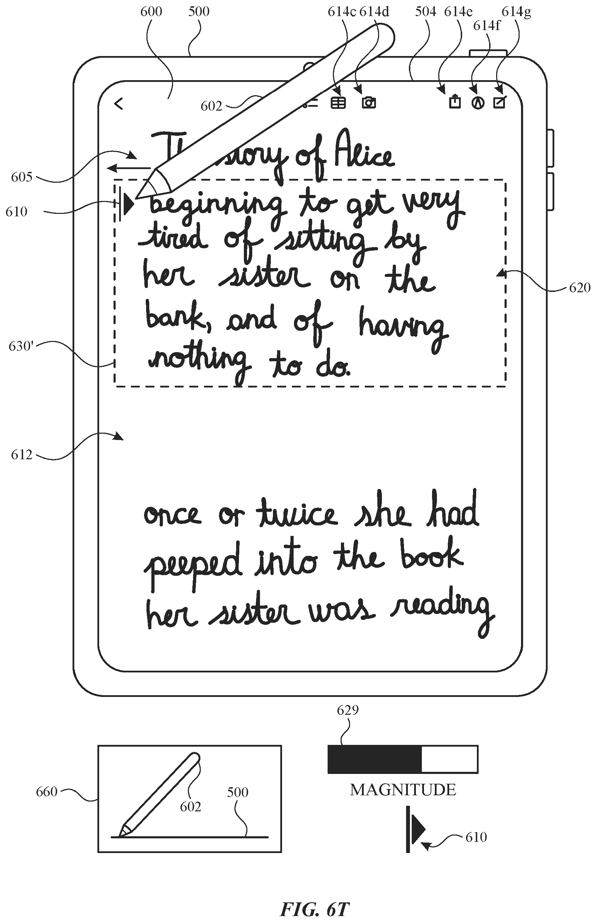

In Fig. 6T, the electronic device 500 detects an increase in the magnitude of the input corresponding to the request to move the cursor 610 beyond boundary 630' to a second magnitude 629 beyond the boundary. In response to detecting the increase in magnitude of the input, the electronic device 500 displays the cursor 610 with a compressed appearance, as shown in Fig. 6T. In particular, the electronic device 500 reduces a size of the cursor 610 along the horizontal axis (e.g., the axis corresponding to the direction of the boundary 603' blocking the cursor 610). In some embodiments, the electronic device 500 displays the compression of the cursor 610 as an animation between a cursor 610 having a first size such as shown in Fig. 6S and a second size such as shown in Fig. 6T. The electronic device 500 displays the compression of the cursor 610 while detecting the input corresponding to the request to move the cursor 610 beyond the boundary 630' (e.g., while the stylus 602 pushes the cursor 610 against the boundary 630'). The electronic device 500 ceases displaying the cursor 610 as compressed against the boundary 630' when the electronic device 500 detects termination of the input to move the cursor 610 beyond the boundary 630'.

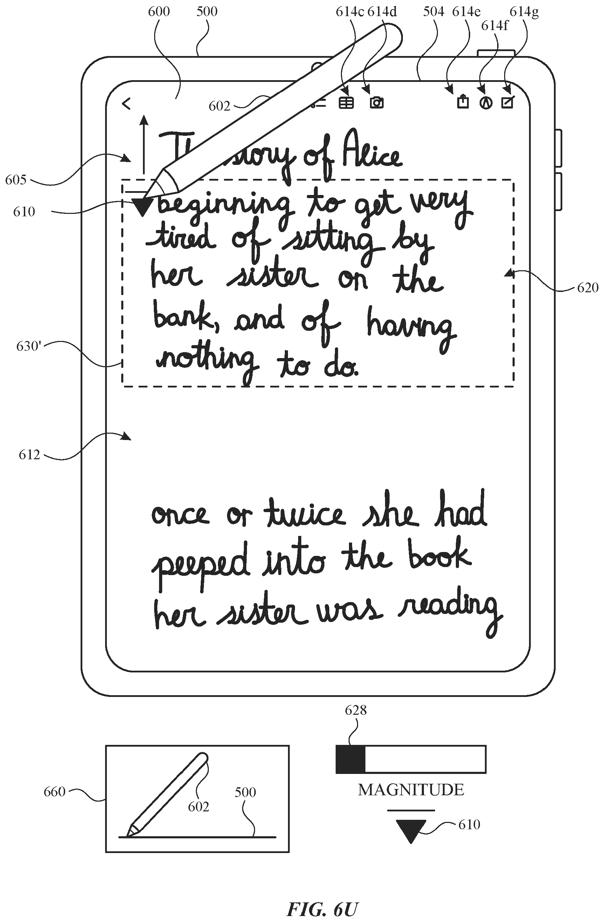

In Fig. 6U, the electronic device 500 detects an input corresponding to a request to move to cursor 610 upward beyond the boundary 630' in the user interface 600. The input is directed to cursor 610. In particular, the electronic device 500 detects contact of the stylus 602 on the surface (e.g., touch screen 504) of the electronic device 500 followed by a drag gesture upward by stylus 602 on the surface of the electronic device 500 while contact is maintained.

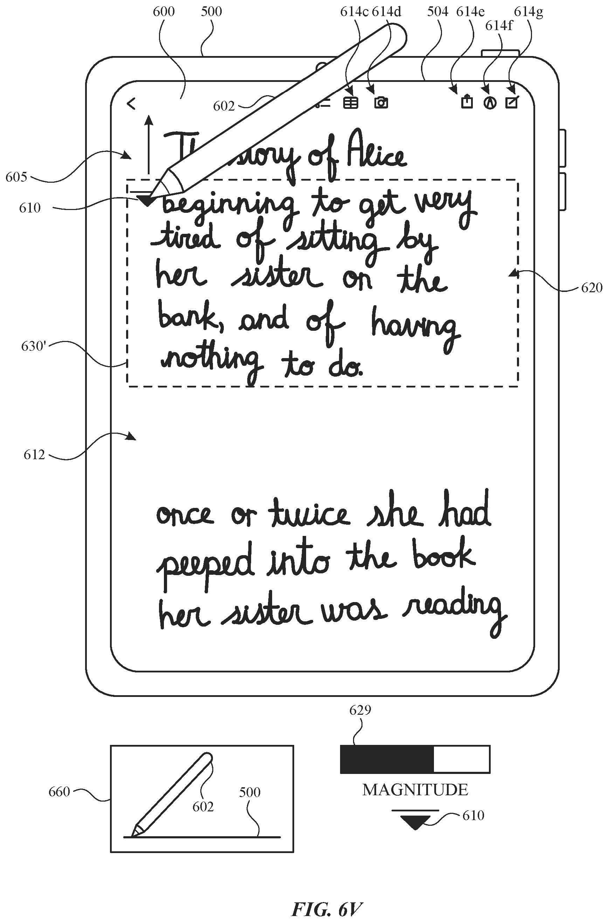

In response to detecting the input corresponding to the request to move to cursor 610 upward beyond the boundary 630' in the user interface 600 shown in Fig. 6U, the electronic device 500 displays the cursor 610 with a vertical orientation corresponding to the direction of the input (e.g., upward and/or along a vertical axis), but the electronic device 500 does not move the cursor 610 or the first portion of the sequence of characters 620 upward past the boundary 630', as shown in Fig. 6V. In addition, in accordance with a determination that a location of the cursor 610 corresponds to the boundary 630' (e.g., the cursor 610 abuts against boundary 630'), the electronic device 500 displays the cursor 610 with a visual appearance corresponding to its location on the boundary 630'. In particular, cursor 610 includes an indication that the current location (e.g., the boundary 630') blocks the cursor 610 from moving upward (e.g., in response to additional input corresponding to a request to move upward). The electronic device 500 therefore ceases display of upper arrow of the cursor 610 leaving the cursor 610 with a single arrow pointing downward and away from the boundary 630'. This presentation of the cursor 610 indicates that movement of the cursor downward along the vertical axis is possible because it is not limited by the boundary 630', but movement upward is limited by the boundary 630'.

In Fig. 6V, the electronic device 500 detects an increase in the magnitude of the input corresponding to the request to move the cursor 610 beyond boundary 630' to a second magnitude 629 beyond the boundary 630'. In response to detecting the increase in the magnitude of the input, the electronic device 500 displays the cursor 610 with a compressed appearance, as shown in Fig. 6V. In particular, the electronic device 500 reduces a size of the cursor 610 along the vertical axis (e.g., the axis corresponding to the direction of the boundary 630' blocking the cursor 610). In some embodiments, the electronic device 500 displays the compression of the cursor 610 as an animation between a cursor 610 having a first size such as shown in Fig. 6U and a second size such as shown in Fig. 6V. The electronic device 500 displays the compression of the cursor 610 while detecting the input corresponding to the request to move the cursor 610 beyond the boundary 630' (e.g., while the stylus 602 pushes the cursor 610 against the boundary 630'). The electronic device 500 ceases displaying the cursor 610 as compressed against the boundary 630' when the electronic device 500 detects termination of the input to move the cursor beyond the boundary 630'.

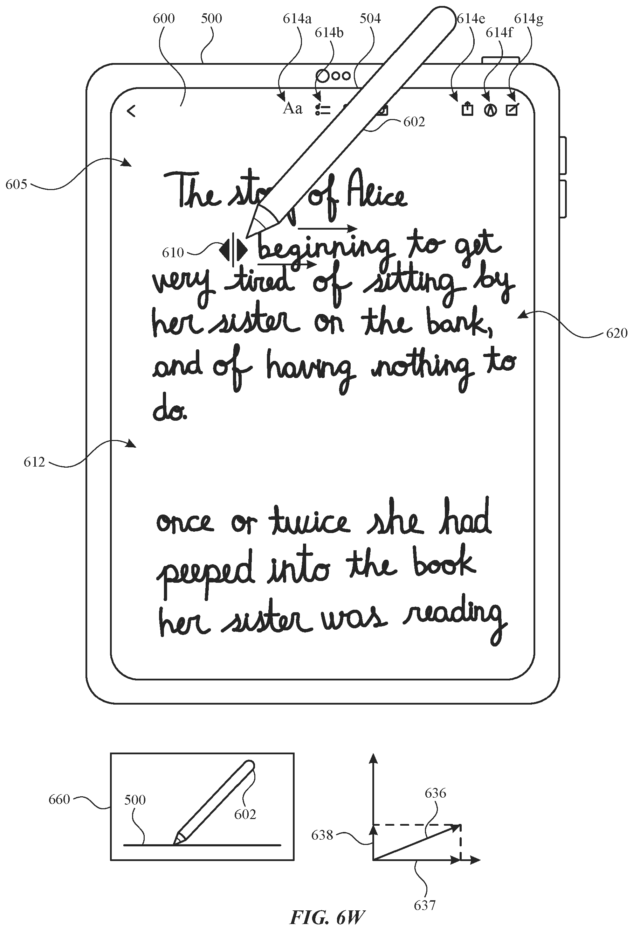

In Fig. 6W, the electronic device 500 detects an input corresponding to a request to move to cursor 610 in the user interface 600. The input is directed to cursor 610. In particular, the electronic device 500 detects contact of the stylus 602 on the surface (e.g., touch screen 504) of the electronic device 500 at the location of cursor 610 followed by a drag gesture by stylus 602 on the surface of the electronic device 500 while contact is maintained. The input corresponding to the request to move the cursor 610 has a magnitude 636. In some embodiments, magnitude 636 corresponds to a distance of the input, a speed of the input, and/or an acceleration of the input (e.g., as detected via touch screen 504). The magnitude 636 of the input is depicted as a vector having a horizontal component 637 and a vertical component 638. In accordance with a determination that the horizontal component 637 of the magnitude 636 is greater than the vertical component 638 of the magnitude 636 (e.g., the input is more horizontal than vertical), the electronic device displays cursor 610 as oriented along the horizontal axis, such as depicted in Fig. 6W, and also operates cursor 610 as allowing for movement along the horizontal axis, but not the vertical axis. As described further above, displaying the cursor 610 oriented along the horizontal axis includes displaying the cursor 610 with an arrow pointing to the left and an arrow pointing to the right.

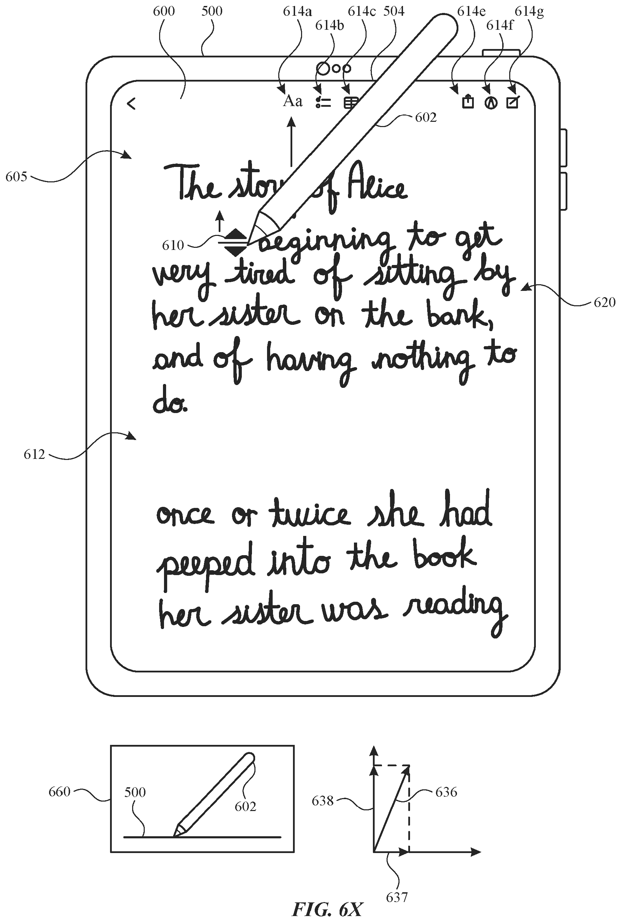

In Fig. 6X, the electronic device 500 detects an input corresponding to a request to move to cursor 610 in the user interface 600. The input is directed to cursor 610. In particular, the electronic device 500 detects contact of the stylus 602 on the surface (e.g., touch screen 504) of the electronic device 500 at the location of cursor 610 followed by a drag gesture by stylus 602 on the surface of the electronic device 500 while contact is maintained. In Fig. 6X, the magnitude of the vertical component 638 of the input is greater than the magnitude of the horizontal component 637. In accordance with a determination that the vertical component 637 of the magnitude 636 is greater than the horizontal component 637 of the magnitude 636 (e.g., the input is more vertical than horizontal), the electronic device 500 displays cursor 610 as oriented along the vertical axis, such as depicted in Fig. 6X, and also operates cursor 610 as allowing for movement along the vertical axis, but not the horizontal axis. As described further above, displaying the cursor 610 oriented along the vertical axis includes displaying the cursor 610 with an arrow pointing up and an arrow pointing down.

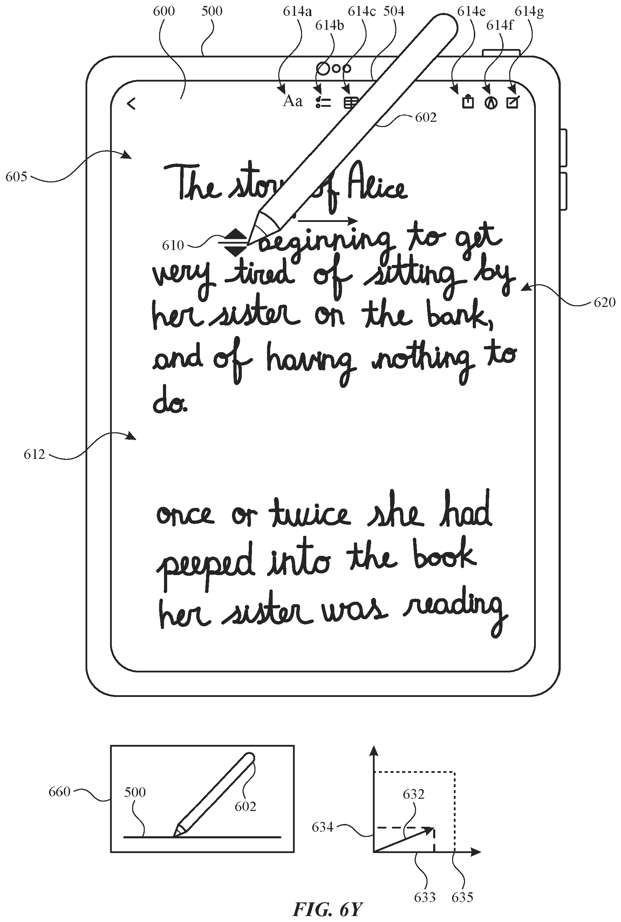

In Fig. 6Y, while the cursor 610 is displayed as orientated along the vertical axis, the electronic device 500 detects an input corresponding to a request to move to cursor 610 in user interface 600. The input is directed to cursor 610. In particular, the electronic device 500 detects contact of the stylus 602 on the surface (e.g., touch screen 504) of the electronic device 500 at the location of the cursor 610 followed by a drag gesture by stylus 602 on the surface of the electronic device 500 while contact is maintained. The input corresponding to the request to move the cursor 610 has a magnitude 632. The magnitude of the horizontal component 633 of the input is greater than the magnitude of the vertical component 634, which makes this input correspond to a request to move the cursor along a horizontal axis (e.g., rightward). However, the magnitude of the horizontal component 633 of the input is less than a threshold magnitude 635 required to switch an orientation of the cursor 610 from a vertical orientation (e.g., along the vertical axis) to a horizonal orientation (e.g., along a horizonal axis). Accordingly, the electronic device 500 moves the cursor 610 along the horizontal axis (e.g., rightward) in accordance with the input (e.g., slowly and/or by a small amount given the low magnitude) while maintaining display of the cursor 610 as oriented along the vertical axis, and without correspondingly moving the first portion of the sequence of characters 620 rightward; thus, providing visual feedback of the rightward movement of the stylus, while indicating that the cursor 610 is currently configured for vertical movement. In some embodiments, in response to detecting the movement of the input shown in Fig. 6Y, the electronic device 500 moves the first portion of the sequence of characters concurrently with the first portion of the sequence of characters 620 (e.g., the cursor 610 pushes the first portion of the sequence of characters rightward).

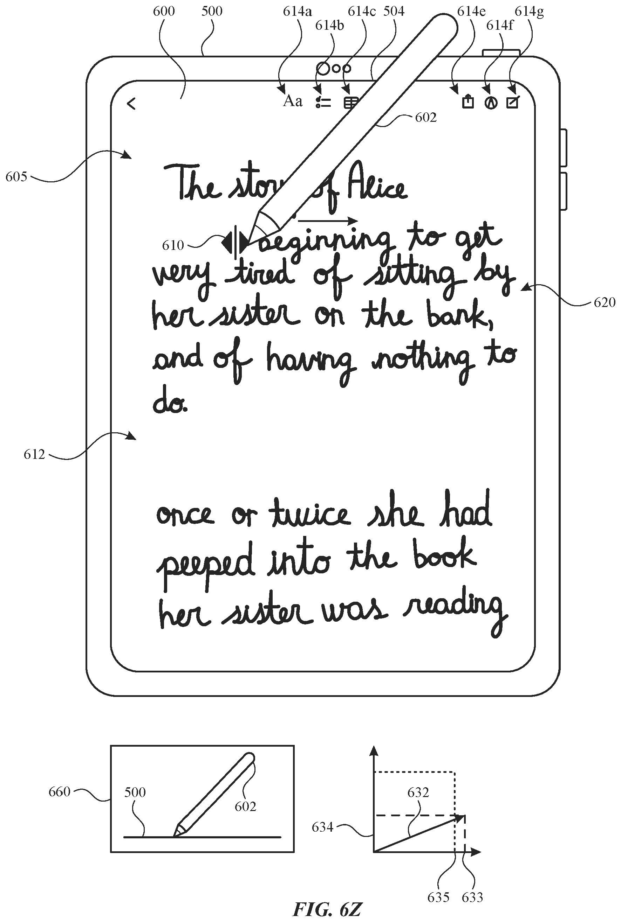

In Fig. 6Z, the electronic device 500 detects an increase in the magnitude 632 of the input corresponding to the request to move the cursor 610. In particular, unlike in Fig. 6Y, the magnitude of the horizontal component 633 exceeds horizontal component threshold magnitude 635. Accordingly, the electronic device 500 switches orientation of the cursor 610 from a vertical orientation to a horizontal orientation while moving the cursor 610 according to the input (e.g., rightward along the horizontal axis), and also operates cursor 610 as allowing for movement along the horizontal axis, but not the vertical axis. In some embodiments, the electronic device 500 moves the first portion of the sequence of characters concurrently with the first portion of the sequence of characters 620 (e.g., the cursor 610 pushes the first portion of the sequence of characters rightward).

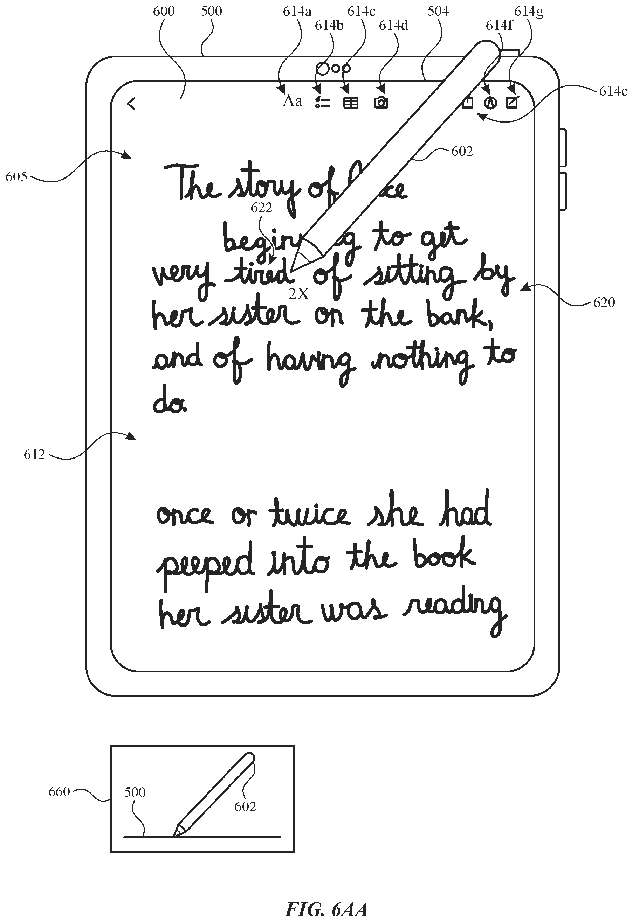

In Fig. 6AA, the electronic device 500 detects an input corresponding to a request to select a second portion of the sequence of characters 622. The input is directed to the word "tired." In particular, the input includes a double tap of the stylus 602 on a surface (e.g., touch screen 504) of the electronic device and directed to the word "tired."

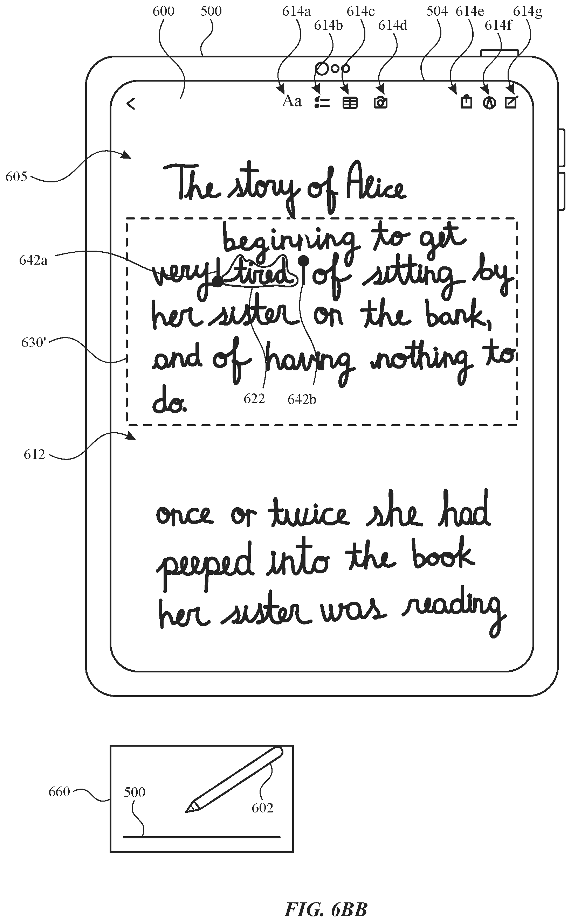

In Fig. 6BB, in response to detecting the input corresponding to the request to select the second portion of the sequence of characters 622, the electronic device 500 selects the second portion of the sequence of characters 622. In particular, the electronic device 500 displays the second portion of the sequence of characters 622 with an indication of selection (e.g., highlighting). In addition, the electronic device 500 displays selection handles 642a and 642b around the second portion of the sequence of characters 622 that are operable to select a third portion of the sequence of characters (e.g., more or fewer characters than the second portion of the sequence of characters 622). Fig. 66BB further shows boundary 630' indicating the limits of reflowing and the first portion of the sequence of characters 620, as described above. Boundary 630' is not displayed, as indicated by the dashed lines. As previously described, the electronic device 500 determines a location, size, and shape of the boundary 630' in the user interface 600 based on user input. In some embodiments, the electronic device 500 automatically (e.g., without user input expressly setting the boundary 630') determines what portion of the sequence of characters to include in the boundary 630' for reflow based on user input. For example, in Fig. 6BB, the electronic device 500 sets boundary 630' around the second paragraph as the first portion of the sequence of characters 620 selected for reflow in response to the double tap/selection of "tired" that is part of the second paragraph. In some embodiments, the electronic device 500 automatically (e.g., without user input expressly setting the boundary 630') adjusts boundary 630' based on a selection of a different portion of the sequence of characters.

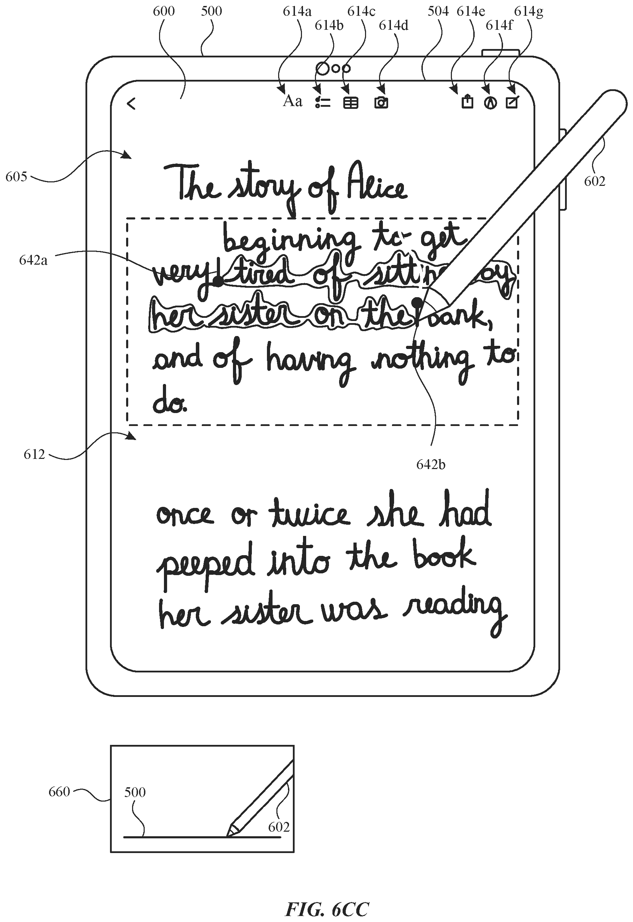

In Fig. 6CC, the electronic device 500 detects an input corresponding to the selection of a third portion of the sequence of characters 624. The input is directed to selection handle 642b. For example, the electronic device 500 detects the input between Figs. 6BB and 6CC, including contact on selection handle 642b while the electronic device 500 displays selection handle 642b at the location shown in Fig. 6BB, followed by movement of the stylus 602 to the location of selection handle 642b In particular, the electronic device 500 detects contact of the stylus 602 on the surface (e.g., touch screen 504) of the electronic device 500 and directed to selection handle 642b, followed by a drag gesture by stylus 602 on the surface of the electronic device 500 while contact is maintained. In response to detecting the input directed to the selection handle 642b, the electronic device 500 selects the third portion of the sequence of characters 624, as shown in Fig. 6CC. Selecting the third portion of the sequence of characters 624 includes displaying the third portion of the sequence of characters 624 with a visual indication of being selected (e.g., highlighting), and displaying selection handles 642a and 642b on either side of the third portion of the sequence of characters 624.

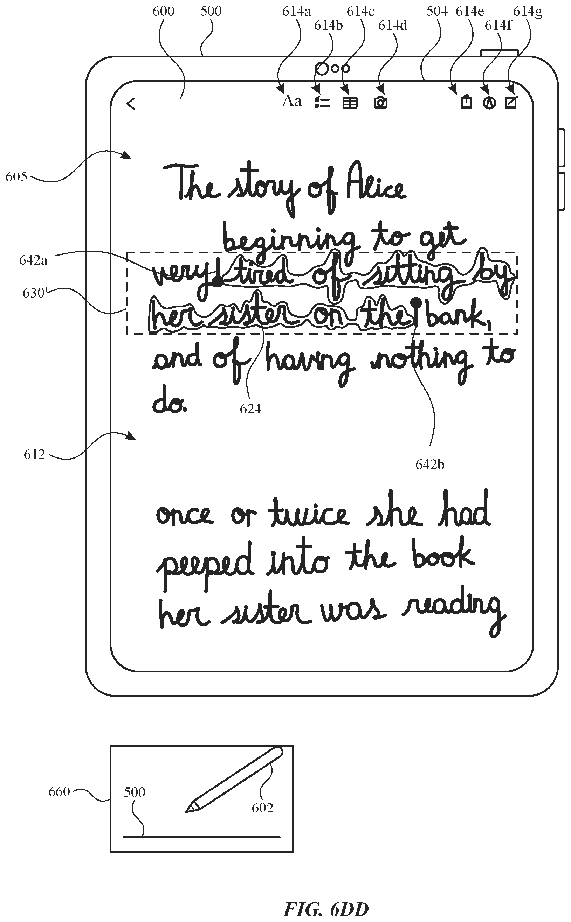

In Fig. 6DD, the electronic device 500 detects liftoff of stylus 602 while the third potion of the sequence of characters 624 is selected. In response to detecting liftoff of the stylus 602, the electronic device 500 automatically adjust boundary 630' to match the third portion of the sequence of characters 624, as shown in Fig. 6DD. For example, because the third portion of the sequence of characters 624 includes more than one word, the boundary 630' is fitted to the third portion of the sequence of characters 624, rather than being fitted to the paragraph including the third portion of the sequence of characters 624, as was the case for boundary 630' while the second portion of the sequence of characters 622 was selected in Fig. 6BB. Then, from Fig. 6DD, the sequence of characters included within the updated boundary 630' can be reflowed (as described herein) subject to the confines of the updated boundary 603'.

Fig. 7 illustrates a flow diagram illustrating a method in which an electronic device facilitates manipulation of handwritten content in accordance with some embodiments of the disclosure . The method 700 is optionally performed at first electronic device and/or electronic devices such as device 100, device 300, or device 500 as described above with reference to Figs. 1A-1B, 2-3, 4A-4B and 5A-5H. Some operations in method 700 are, optionally combined and/or order of some operations is, optionally, changed.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Providing improved feedback (such as by displaying the cursor with an appearance indicating a direction interaction with the cursor will cause handwritten content to move, displaying boundaries of moving the handwritten content, displaying the cursor with an appearance that corresponds to the boundary when the location of the cursor corresponds to the location of the boundary) enhances the operability of the device by reducing accidental and mistaken inputs, reducing energy usage by the device. Providing additional control options (such as a cursor that allows for movement of handwritten content in a first direction and a second direction, such as a vertical direction and a horizontal direction, based on an input directed to the cursor satisfying one or more criteria, such as criteria related to velocity or acceleration of inputs directed to the cursor) without cluttering the UI with additional displayed controls enhances the operability of the device by reducing unnecessary inputs and/or steps to navigate through different user interfaces or sets of controls, reducing energy usage by the device.

In some embodiments, method 700 is performed at an electronic device in communication with one or more display generation components and one or more input devices. For example, a mobile device (e.g., a tablet, a smartphone, a media player, or a wearable device), a computer (e.g., a desktop computer, a laptop computer), or a wearable device (e.g., a watch, a head-mounted device), optionally in communication with one or more of a mouse (e.g., external), trackpad (optionally integrated or external), remote control device (e.g., external), another mobile device (e.g., separate from the electronic device), a handheld device (e.g., external), and/or a controller (e.g., external), or a set-top box in communication one or more input devices (e.g., a remote control). In some embodiments, the display generation component is a display integrated with the electronic device (optionally a touch screen display), external display such as a monitor, projector, television, or a hardware component (optionally integrated or external) for projecting a user interface or causing a user interface to be visible to one or more users. In some embodiments, the one or more sensors optionally include one or more sensors of FIG. 1A. In some embodiments, the one or more input devices include a stylus in communication with the electronic device.

In some embodiments, while displaying, in a user interface, a first representation of handwritten content that includes a sequence of characters (e.g., displayed in response to detecting handwritten input on a surface (e.g., a touch-sensitive surface of the one or more input devices)), the electronic device detects (702), via the one or more input devices, a first input directed to a first location in the user interface, such as the input with stylus 602 directed to user interface 600 in Fig. 6C that includes handwritten content 605. For example, the user interface corresponds to a text composition user interface associated with a note-taking application, a messaging application, a journaling or scheduling application, a text-editor application, and/or a text annotation application or any other region that can accept handwritten input. In some embodiments, the user interface includes a handwriting entry region configured to receive handwritten input (e.g., provided directly into the user interface region (e.g., the touch sensitive surface includes the user interface) or populated into the user interface by the electronic device after receiving the handwritten input via a separate touch-sensitive surface such as a trackpad)).

In some embodiments, the first representation of handwritten content is displayed within the handwriting entry region discussed above (e.g., such that the first location is within the handwriting entry region). In some embodiments, the first representation of handwritten content corresponds to a representation of the handwritten input, which includes representations of handwritten words. In some embodiments, the sequence of characters of the first representation of handwritten content is displayed within the user interface in a first number of lines of characters, such as 1, 2, 3, 4, 5, 8, 10, or 12 lines, and optionally corresponds to the number of lines in which the handwritten words, numbers, and/or special characters were written in the handwritten input. In some embodiments, the sequence of characters corresponds to a paragraph displayed in a first number of lines of characters and/or a paragraph having a first width (e.g., the first number of lines of characters extends a first distance (e.g. horizontally) across the user interface), which optionally corresponds to a width of a bounding box containing/confining the lines of the sequence of characters. In some embodiments, the sequence of characters corresponds to a list (e.g., a bulleted list, a numbered list, or a lettered list) of words displayed in a first number of lines of words. In some embodiments, as mentioned above, the first representation of handwritten content is displayed in the user interface in response to handwritten input received via an external device/tool for providing handwritten input (e.g., a stylus) or via a finger of a hand of a user of the electronic device. In some embodiments, the handwritten input includes continuous and/or subsequent strokes and/or contacts (e.g., provided by the stylus or finger of the user) detected on the touch sensitive surface that are recognized by the electronic device as handwritten input (e.g., handwritten words, numbers, special characters, and/or shapes), as discussed below.

In some embodiments, the electronic device receives the first input via an external device/tool for providing handwritten input (e.g., a stylus) or via a finger of a hand of the user of the electronic device. In some embodiments, the first input includes an air gesture performed by a hand of the user and detected by the electronic device via the one or more input devices. In some embodiments, as described in more detail below, the first input includes respective handwritten input, such as continuous and/or subsequent strokes and/or contacts detected on the touch sensitive surface. For example, the respective handwritten input includes handwritten lines, scratch marks, and/or similar patterns/shapes. In some embodiments, the respective handwritten input is directed to a respective portion of the sequence of characters of the first representation of handwritten content in the user interface. For example, the respective handwritten input includes handwritten lines and/or scratch marks over and/or across the respective portion of the sequence of characters of the first representation of handwritten content in the user interface.

In some embodiments, as discussed in more detail below, the first input includes a tap or touch input (e.g., of a stylus or finger) directed to the respective portion of the sequence of characters of the first representation of handwritten content. For example, the electronic device detects a tap input (e.g., a single tap or contact on the touch-sensitive surface that is not followed by another tap or contact within a threshold duration such as 0.2, 0.3, 0.4, 0.5, 0.8, and/or 0.9 sec) directed to the respective portion of the sequence of characters of the first representation of handwritten content. For example, the first input includes a selection input directed to the respective portion of the sequence of characters. In some embodiments, the respective portion in the user interface is a blank space in the user interface (e.g., a blank space between words in the user interface or a blank space between characters (e.g., letters, numbers, and/or special characters) within a single word or term in the user interface).

In some embodiments, in response to detecting the first input (704), the electronic device displays (706), via the display generation component, a cursor at the first location in the user interface, wherein the cursor is for moving, in the user interface, a first portion of the sequence of characters in a first direction, the cursor having a first appearance, such as the cursor 610 in Fig. 6D for moving handwritten content 605 horizontally. In some embodiments, in response to detecting the first input, the electronic device deletes at the first location of the user interface the respective portion of characters of the first representation of the handwriting content. For example, the electronic device removes (e.g., ceases display of) the respective portion of the sequence of characters of the first representation of the handwritten content from the first location in the user interface. In some embodiments, after the respective portion of the sequence of characters is deleted at the first location in the user interface, a space or vacancy (e.g., white or blank space) is created within the representation of handwritten content at the first location in the user interface. For example, if the respective portion of the sequence of characters corresponds to a single word/term, deleting the respective portion of the sequence of characters creates and/or causes the electronic device to display a blank space having a size (e.g., length and/or height) corresponding to a size of the single word/term in the first representation of the handwritten content. As another example, if the respective portion of the sequence of characters corresponds to a single character (e.g., letter, number, or special character) within a word/term, deleting the respective portion of the sequence of characters creates and/or causes the electronic device to display a blank space having a size corresponding to a size of the single letter, number, or special character. In some embodiments, after the respective portion of the sequence of characters of the first representation of the handwritten content is deleted at the first location in the user interface, the undeleted portions of the sequence of characters of the first representation of the handwritten content remain unchanged within the user interface. For example, the electronic device temporarily (e.g., as discussed below) forgoes moving, shifting and/or otherwise updating display of the portions of the sequence of characters of the first representation of handwritten content that are not deleted in the user interface (e.g., such that the undeleted portions of the sequence of characters remain displayed at their prior and/or current locations in the user interface relative to the first location). In some embodiments, in response to detecting the first input, the electronic device displays the cursor without deleting content (e.g., without deleting the respective portion of characters of the first representation of the handwritten content).

In some embodiments, the cursor is a selection cursor (e.g., a dot, arrow, caret, etc.) rather than a text cursor. In some embodiments, the cursor is displayed concurrently with the first representation of handwritten content (e.g., at the first location) in the user interface. In some embodiments, the first portion of the sequence of characters corresponds to a single or collection of letter(s), number(s), or special character(s) of the sequence of characters of the first representation of handwritten content. In some embodiments, the first portion of the sequence of characters corresponds to a single word of the sequence of characters of the first representation of handwritten content. In some embodiments, the first portion of the sequence of characters corresponds to a plurality of words (optionally a sentence or multiple sentences) of the sequence of characters of the first representation of handwritten content. In some embodiments, the first portion of the sequence of characters corresponds to a paragraph (or a plurality of paragraphs) of the sequence of characters of the first representation of handwritten content. In some embodiments, the cursor is displayed before the first character of the first portion of the sequence of characters and adjacent to the first character (e.g., such that the cursor and the first character are not separated by any character and/or space).

In some embodiments, moving the first portion of the sequence of characters in the first direction includes updating the first representation of handwritten content to include a character (e.g., letter, number, or special character), word, sentence, or group of sentences at the at least the respective location in the user interface. In particular, moving the first portion of the sequence of characters in the first direction includes shifting and/or moving the first portion of the sequence of characters such that the first portion of the sequence of characters at least partially occupies a blank space adjacent to the first portion of the sequence of characters. For example, if the respective portion of the sequence of characters corresponds to a first word and the first portion of the sequence of characters corresponds to a second word, that follows the first word in the first representation of handwritten content, the electronic device shifts/moves the second word in the first direction (e.g., to the left and/or up) in the user interface, such that the second word at least partially occupies (e.g., replaces) the blank space created at the first location when the first word is deleted and/or that was not created by deleting the first word (e.g., such that the first portion, including second portions following/proceeding the first portion, of the sequence of characters optionally are located at different/updated locations in the user interface compared to prior to moving the first portion). Additionally or alternatively, if the respective portion of the sequence of characters corresponds to a first line and the first portion of the sequence of characters corresponds to a second line, that follows the first line in the first representation of handwritten content, the electronic device shifts/moves the second line in the first direction (e.g., up) in the user interface, such that the second line at least partially occupies (e.g., replaces) the blank space created at the first location when the first line is deleted and/or that was not created by deleting the first line (e.g., such that the first portion, including the second portions following/proceeding the first portion, of the sequence of characters optionally are located at different/updated locations in the user interface compared to prior to moving the first portion). In some embodiments, moving the first portion of the sequence of characters in the first direction includes forgoing moving the first portion of the sequence of characters in a second direction, different from the first direction. In some embodiments, the blank space adjacent to the first portion predates the first input (e.g., the blank space was not created in response to detecting the first input). In some embodiments, the blank space is created after the electronic device deletes the respective portion of the sequence of characters in response to receiving the first input, as previously described.

In some embodiments, moving the first portion of the sequence of characters in the first direction includes moving the first portion according to movement input directed to the cursor. In particular, moving the first portion of the sequence of characters in the first direction includes moving the first portion according to a magnitude and/or a direction of the movement input (e.g., the first direction). In some embodiments, the electronic device moves the first portion of the sequence of characters in accordance with a determination that the movement input satisfies one or more criteria including a criterion that is satisfied when a blank space exists adjacent to the first portion of the sequence of characters in the direction of the movement of the first portion of the sequence of characters (e.g., the first direction). In some embodiments, the one or more criteria include a criterion that is satisfied when a direction of the movement input is within a threshold angle (e.g., 10, 15, 20, 25, 30, 35, 40, 45 degrees) of the first direction. In some embodiments, in accordance with a determination that the movement input does not satisfy the one or more criteria, the electronic system forgoes moving the first portion of the sequence of characters in the first direction. In some embodiments, in accordance with a determination that the movement input does not satisfy the one or more criteria, the electronic system moves the first portion of the sequence of characters in a second direction, different from the first direction.

In some embodiments, the first direction is along a first axis, such as a horizontal axis (e.g., left or right) associated with the user interface. For example, moving the first portion of the sequence of characters in the horizontal direction includes moving first portion at least partially into a blank space located on a line of characters where the cursor is located. In some embodiments, the first direction is along a second axis, such as a vertical axis (e.g., orthogonal to the horizontal axis) associated with the user interface (e.g., up or down). For example, moving the first portion of the sequence of characters in the vertical direction includes moving first portion at least partially into a blank space located on a line of characters different from the line where the cursor is location (e.g., above or below). In some embodiments, the horizontal axis is based on an orientation of the first representation of handwritten content (e.g., an orientation associated with the sequence of characters in the user interface, such as a general angle/direction at which the sequence of characters is displayed in the user interface). In some embodiments, the horizontal axis is based on the user interface (e.g., aligned to a horizontal axis of the user interface).

In some embodiments, the first appearance corresponds to the first direction. For example, the first appearance optionally includes an indication of the first direction, such an arrow and/or a caret oriented toward the first direction and/or along an axis of the first direction. Additionally or alternatively, the first appearance includes an indication of an axis corresponding to the first direction, such as a double-arrow pointing in opposite directions along the axis (e.g., left and right along the horizontal axis and/or up and down along the vertical axis). In some embodiments, the first appearance corresponds to a location of the cursor in the user interface. For example, the first appearance optionally includes an indication that at the current location of the cursor, an obstacle (e.g., a character and/or a boundary) blocks the cursor from moving in a respective direction (e.g., such as an arrow and/or caret oriented away from the respective direction), such as in response to additional input to move the cursor in the respective direction. In some embodiments, when the electronic device displays the cursor having the first appearance, in response to detecting movement input directed to the cursor, the electronic device moves the first portion of the sequence of characters along the first direction and does not move the first portion of the sequence of characters along a second direction.

In some embodiments, while displaying the cursor for moving, in the user interface, the first portion of the sequence of characters in the first direction, the cursor having the first appearance, the electronic device detects (708), via the one or more input devices, a second input directed to the cursor, such as detecting the movement of the stylus 602 in Fig. 6G while displaying the cursor 610 as shown in Fig. 6F. In some embodiments, the electronic device detects the second input via an external device/tool for providing handwritten input (e.g., a stylus) or via a finger of a hand of the user of the electronic device. In some embodiments, the second input includes a tap or touch input (e.g., of a stylus or finger) directed to the cursor, optionally followed by a movement input (e.g., a drag gesture) while contact is maintained (e.g., before lift-off). In some embodiments, the first input includes an air gesture (e.g., directed to the cursor) performed by a hand of the user and detected by the electronic device via the one or more input devices. In some embodiments, the electronic device detects the air gesture while detecting attention of the user (e.g., based on gaze) directed to the cursor.

In some embodiments, in response to detecting the second input, in accordance with a determination that the second input satisfies one or more criteria (710), the electronic device updates (712) display, via the one or more display generation components, of the cursor from the first appearance to a second appearance, different from the first appearance, such as updating the cursor 610 from the appearance in Fig. 6F to the appearance in Fig. 6G in response to detecting the vertical movement of the cursor 610 shown in Fig. 6G. In some embodiments, the one or more criteria include a criterion that is satisfied when a blank space exists adjacent to the first portion of the sequence of characters in the direction of the movement of the first portion of the sequence of characters (e.g., the second direction). In some embodiments, the one or more criteria include a criterion that is satisfied when a direction of the second input is within a threshold angle (e.g., 10, 15, 20, 25, 30, 35, 40, 45 degrees) of the second direction.

In some embodiments, the second appearance corresponds to the second direction. For example, the second appearance optionally includes an indication of the second direction, such an arrow and/or a caret oriented toward the second direction and/or along an axis of the second direction. Additionally or alternatively, the second appearance includes an indication of an axis corresponding to the second, such as a double-arrow pointing in opposite directions along the axis (e.g., left and right along the horizontal axis and/or up and down along the vertical axis). In some embodiments, the second appearance corresponds to a location of the cursor in the user interface. For example, the second appearance optionally includes an indication that at the current location of the cursor, an obstacle (e.g., a character and/or a boundary) blocks the cursor from moving in a respective direction (e.g., such as an arrow and/or caret oriented away from the respective direction), such as in response to additional input to move the cursor in the respective direction.

In some embodiments, while displaying the cursor having the second appearance, moving the first portion of the sequence of characters in a second direction, different from the first direction, to a second location in the user interface different from the first location in the user interface in accordance with the second input, such as moving the handwritten content 605 to the location shown in Fig. 6H in response to detecting the movement of the stylus 602 in Fig. 6G. In some embodiments, moving the first portion of the sequence of characters in the second direction includes updating the first representation of handwritten content to include a character (e.g., letter, number, or special character), word, sentence, or group of sentences at the at least the respective location in the user interface. In particular, moving the first portion of the sequence of characters in the second direction includes shifting and/or moving the first portion of the sequence of characters following (e.g., adjacent to) the blank space created after deleting the first portion of the sequence of characters in the user interface, such that the first portion of the sequence of characters at least partially occupies the blank space at the first location in the user interface. For example, if the respective portion of the sequence of characters corresponds to a first word and the first portion of the sequence of characters corresponds to a second word, that follows the first word in the first representation of handwritten content, the electronic device shifts/moves the second word in the second direction (e.g., to the left and/or up) in the user interface, such that the second word at least partially occupies (e.g., replaces) the blank space created at the first location when the first word is deleted and/or that was not created by deleting the first word (e.g., such that the first portion, including second portions following/proceeding the first portion, of the sequence of characters optionally are located at different/updated locations in the user interface compared to prior to moving the first portion). Additionally or alternatively, if the respective portion of the sequence of characters corresponds to a first line and the first portion of the sequence of characters corresponds to a second line, that follows the first line in the first representation of handwritten content, the electronic device shifts/moves the second line in the second direction (e.g., up) in the user interface, such that the second line at least partially occupies (e.g., replaces) the blank space created at the first location when the first line is deleted and/or that was not created by deleting the first line (e.g., such that the first portion, including the second portions following/proceeding the first portion, of the sequence of characters optionally are located at different/updated locations in the user interface compared to prior to moving the first portion). In some embodiments, moving the first portion of the sequence of characters in the second direction includes forgoing moving the first portion of the sequence of characters in the first direction. In some embodiments, moving the first portion of the sequence of characters in the second direction includes moving the first portion according to the second input directed to the cursor. In particular, moving the first portion of the sequence of characters in the second direction includes moving the first portion according to a magnitude and/or a direction of the second input (e.g., the second direction).

In some embodiments, updating the first representation of handwritten content in the manners discussed above in the user interface (e.g., by moving the first portion of the sequence of characters in the first direction and/or in the second direction) causes the number of lines of characters in which the sequence of characters is displayed (e.g., lines in the paragraph) to be updated. For example, the electronic device decreases the number of lines from the first number of lines discussed above to a second number of lines, fewer than the first number of lines (optionally due to the respective portion of the sequence of characters being deleted and/or the first portion of the sequence of characters being shifted in the user interface to occupy the respective location and/or a blank space in the user interface). In some embodiments, when the electronic device updates the number of lines of characters in which the sequence of characters is displayed (e.g., lines in the paragraph), the electronic device maintains the width of the lines (e.g., the width of the paragraph) in the user interface. For example, maintaining the width of the paragraph including the sequence of characters controls the manner in which the number of lines is updated (e.g., by how many lines the number of lines decreases as discussed above). Accordingly, the particular characters and/or words that are included in the lines following the line containing the respective location in the user interface are optionally moved to and/or redisplayed at different locations within their respective lines in the first representation of handwritten content or are moved to and/or redisplayed within different lines (e.g., than previously) in the first representation of handwritten content when the first portion of the sequence of characters is displayed at the at least the respective location in the user interface. Additionally, in some embodiments, when the first representation of handwritten content is updated to include the first portion of the sequence of characters at the at least the respective location in the user interface, the portions of the sequence of characters that preceded the respective portion of the sequence of characters in the first representation of handwritten content (e.g., the letters, numbers, and/or special characters spatially located before the respective portion of the sequence of characters within the first representation of the handwritten content prior to the first portion being deleted) are not updated in the user interface. For example, the electronic device forgoes moving/shifting the portions of the sequence of characters that preceded the first portion at the respective location in the user interface.

In some embodiments, the second direction is along the first axis, such as the horizontal axis (e.g., left or right), different from the first direction (e.g., along a vertical axis (e.g., up or down)) associated with the user interface. In some embodiments, the second direction is along the second axis, such as the vertical axis, different from the first direction (e.g., along a horizontal axis (e.g., up or down)) associated with the user interface. In some embodiments, in accordance with a determination that the second input does not satisfy the one or more criteria, the electronic system forgoes moving the first portion of the sequence of characters in the second direction. In some embodiments, in accordance with a determination that the second input does not satisfy the one or more criteria, the electronic system forgoes moves the first portion of the sequence of characters in the first direction. In some embodiments, when the electronic device displays the cursor having the second appearance, in response to detecting movement input (e.g., the second input), the electronic device moves the first portion of the sequence of characters along the second direction and does not move the first portion of the sequence of characters along the first direction.

In some embodiments, detecting the first input includes detecting a gesture corresponding to a request to display the cursor or a gesture corresponding to a request to delete a respective portion of the handwritten content, such as the input shown in Fig. 6B requesting to delete a portion of the handwritten content 605. For example, the electronic device detects contact (e.g., by a stylus and/or a finger of the user) on the touch-sensitive surface. In some embodiments, the gesture corresponding to the request to display the cursor includes contact on the touch-sensitive device for a duration (e.g., without movement of stylus or finger and or lift-off) that exceeds a threshold duration (e.g., 1, 2, 3, 4, 5 seconds) and directed to the respective portion of the sequence of characters of the first representation of handwritten content. In some embodiments, the electronic device displays the cursor at the location in user interface where the input corresponding to the request to display the cursor is detected. For example, in response to detecting the input directed to a first location, the electronic device displays the cursor at a second location based on the first location. As another example, in response to detecting the input directed to a third location different from the first location, the electronic device displays the cursor at a fourth location based on the third location. In some embodiments, the first input includes an air gesture (e.g., directed to the respective portion of the handwritten content) performed by a hand of the user and detected by the electronic device via the one or more input devices. In some embodiments, the electronic device detects the air gesture while detecting attention of the user (e.g., based on gaze) directed to the respective portion of the handwritten content. In some embodiments, the first input corresponding to the request to delete the respective portion of the sequence of characters of the first representation of handwritten content includes one or more handwritten marks provided by the input device in communication with the electronic device on the surface directed to the first portion of the sequence of characters. In some embodiments, detecting the input corresponding to the request to delete the respective portion of the handwritten content includes detecting one or more strokes of the input device on the surface at a location on the surface corresponding to the respective portion of the sequence of characters. In some embodiments, the one or more handwritten marks provided by the electronic device are detected continuously (e.g., without detecting liftoff of the input device from the surface in between successive handwritten marks of the one or more handwritten marks). In some embodiments, the one or more handwritten marks provided by the electronic device are detected sequentially (e.g., with detecting liftoff of the input device from the surface in between successive handwritten marks of the one or more handwritten marks). In some embodiments, in response to detecting the one or more handwritten marks provided by the input device, the electronic device displays, in the user interface, a representation of the one or more handwritten marks concurrently with the first representation of handwritten content. For example, the electronic device displays one or more lines overlaid on, above, below, and/or adjacent to the respective portion of the sequence of characters in the user interface. In some embodiments, as discussed in more detail below, the one or more handwritten marks encompass, overlap with, and/or otherwise include the respective portion of the sequence of characters in the user interface. In some embodiments, in response to detecting the first input, the electronic device deletes at the first location of the user interface the respective portion of characters of the first representation of the handwriting content, such as previously described. For example, the electronic device removes (e.g., ceases display of) the respective portion of the sequence of characters of the first representation of the handwritten content from the first location in the user interface. In some embodiments, after the respective portion of the sequence of characters is deleted at the first location in the user interface, a space or vacancy (e.g., white or blank space) is created within the representation of handwritten content at the first location in the user interface, such as previously described. In some embodiments, the electronic device displays the cursor at a location corresponding to the location of the input corresponding to the request to delete the respective portion of the sequence of characters (e.g., after the blank space created after deletion of the respective portion of the sequence of characters.

In some embodiments, moving the first portion of the sequence of characters in response to detecting the second input includes moving the cursor in accordance with the second input within a first boundary, including in accordance with a determination that the second input corresponds to movement of the cursor within the first boundary, moving the cursor in accordance with the second input, such as moving the handwritten content 605 in Fig. 6F in accordance with the input shown in Figs. 6E-6F. Although not shown in Fig. 6F, in some embodiments, the content 605 shown in Fig. 6F is subject to the boundary of bounding box 630 shown in Fig. 6K. In some embodiments, the first boundary corresponds to an edge/boundary of the user interface, which optionally corresponds to a physical boundary/edge of the display generation component and/or a physical boundary/edge of the surface (e.g., the touch-sensitive surface, such as a touchscreen, discussed above). In some embodiments, the first boundary is determined according to a predefined margin of the user interface of a respective size (e.g., 1, 2, 3, 4, 5, etc. cm), optionally defined by the user prior to detecting the first handwritten input discussed above and/or defined by the electronic device prior to detecting the first handwritten input (e.g., according to a default setting). In some embodiments, the first boundary corresponds to a boundary of the plurality of lines (e.g., each line of the plurality of lines has a same boundary). In some embodiments, the first boundary corresponds to a boundary of the first representation of the handwritten content (e.g., a left, right, top, and/or bottom edge in the user interface to which the first representation of handwritten content is confined). In some embodiments, the first boundary corresponds to a boundary of the first portion of the sequence of characters (e.g., a left, right, top, and/or bottom edge in the user interface to which the first portion of the sequence of characters is confined. In some embodiments, the first boundary forms a logical bounding box (e.g., not displayed by the electronic device and/or invisible to the user) around the first representation of handwritten content or the first portion of the sequence of characters. In some embodiments, the electronic device determines the first boundary (e.g., the portion of the sequence of characters included in the boundary). In some embodiments, the electronic device determines a location, size, and shape of the first boundary in the user interface based on user input. In some embodiments, the electronic device automatically (e.g., without user input expressly setting the boundary) determines what portion of the sequence of characters to include in the first boundary. In some embodiments, the electronic device sets the first boundary around the paragraph in which the cursor is displayed. In some embodiments, the first boundary corresponds to the minimum bounding box around the paragraph in which the cursor is displayed. In some embodiments, the electronic device automatically defines the first boundary around a selected portion of the sequence of characters (e.g., in response to selection input). In some embodiments, the first boundary corresponds to the minimum bounding box around the selected portion of the sequence of characters. In some embodiments, the electronic device modifies the first boundary (e.g., changes a size and/or shape of the first boundary) in accordance with a change of the selected portion of characters. In some embodiments, the electronic device does not modify a boundary for a portion of the sequence of characters in response to input corresponding to a request to move the portion of the sequence of characters. Accordingly, in some embodiments, the electronic device does not modify the first boundary in accordance with the second input (e.g., corresponding to a request to move the first portion of the sequence of characters). In some embodiments, the first boundary includes a margin between the first boundary and the first portion of the sequence of characters.

In some embodiments, moving the cursor in accordance with the second input includes moving the cursor in accordance with a magnitude of the second input. For example, the electronic device optionally moves the cursor within the first boundary by a distance corresponding to a distance of the contact of a pointing device (e.g., a stylus and/or a finger) against a touch sensitive input device. In some embodiments, moving the cursor in accordance with the second input includes moving the cursor in accordance with a direction of the second input. For example, the electronic device optionally moves the cursor within the first boundary in a direction corresponding to a direction of the contact of a pointing device (e.g., a stylus and/or a finger) against a touch sensitive input device.

In some embodiments, moving the first portion of the sequence of characters in response to detecting the second input includes moving the cursor in accordance with the second input within a first boundary, including, in accordance with a determination that the second input corresponds to movement of the cursor beyond the first boundary, moving the cursor within the first boundary without moving the cursor beyond the first boundary in accordance with the second input, such as in Fig. 6T in which the electronic device 500 moves the cursor 610 to, but not past, boundary 630'. In some embodiments, the electronic device moves the cursor in accordance with the second input (e.g., in accordance with a magnitude and/or a direction of the second input) within the first boundary before the cursor reaches the first boundary (e.g., a threshold distance of the boundary such as 0.1, 0.2, 0.3, 0.5, 0.8, or 1 mm). In some embodiments, the electronic device ceases moving the cursor in accordance with the second input (e.g., in accordance with a magnitude and/or a direction of the second input) when the cursor reaches the first boundary. In some embodiments, the electronic device forgoes moving the cursor while continuing to detect the second input beyond the first boundary. In some embodiments, as further described below, a visual appearance of the cursor changes when the cursor reaches the first boundary.

In some embodiments, while displaying the cursor, the electronic device 500 detects a third input, such as the input illustrated in Fig. 6J. In some embodiments, the third input includes a tap, touch input (e.g., of a stylus or finger), or air gesture directed to the cursor and/or the first portion of the sequence of characters of the first representation of handwritten content. For example, the electronic device detects a tap input (e.g., a single tap or contact on the touch-sensitive surface that is not followed by another tap or contact within a threshold duration such as 0.2, 0.3, 0.4, 0.5, 0.8, and/or 0.9 sec) directed to the respective portion of the sequence of characters of the first representation of handwritten content. In some embodiments, the third input includes an air gesture (e.g., directed to the cursor/ and/or the first portion of the sequence of characters) performed by a hand of the user and detected by the electronic device via the one or more input devices. In some embodiments, the electronic device detects the air gesture while detecting attention of the user (e.g., based on gaze) directed to the cursor and/or the first portion of the sequence of characters.

In some embodiments, while displaying the cursor, in response to detecting the third input, such as the input shown in Fig. 6J, in accordance with a determination that the third input satisfies one or more second criteria, the electronic device displays, via the one or more display generation components, a visual indication of the first boundary, such as boundary 630 in Fig. 6K. In some embodiments, the one or more criteria include a criterion that is satisfied when the third input is directed to the cursor and/or the first portion of the sequence of characters. In some embodiments, the one or more criteria second include a criterion that is satisfied when the third input is a tap or contact that is not followed by another tap or contact with the threshold duration.

In some embodiments, the visual indication of the first boundary is a bounding box corresponding to the first boundary and displayed around (e.g., surrounding) the first portion of the sequence of characters of the first representation of handwritten content and/or the first representation of handwritten content. In some embodiments, displaying the visual indication of the first boundary (e.g., the bounding box) in the user interface includes displaying in the user interface one or more graphical user interface elements for changing one or more metrics, such as locations, associated with the first boundary. In some embodiments, the one or more graphical user interface elements optionally include one or more resizing handles that are selectable to update the one or more metrics associated with the first boundary. For example, the one or more graphical user interface elements include a first resizing handle that is configured to be manipulated (e.g., selected and dragged/moved within the user interface) to change a width of the first boundary and thus change a quantity and contents of the sequence of characters that are contained on a respective line of first portion of the sequence of characters. In some embodiments, the one or more graphical user interface elements include a second resizing handle that is configured to be manipulated to change a length of the first boundary and thus change a size of and/or a number of the plurality of lines in which the first portion of the sequence of characters is displayed in the user interface. In some embodiments, the one or more graphical user interface elements include a third resizing handle that is configured to be manipulated to change both the width and the length of the boundary (e.g., by the same amount) and thus a size of the first portion of sequence of characters in the user interface. In some embodiments, the one or more resizing handles discussed above are displayed overlaid on the bounding box in the user interface (e.g., at edges and/or corners of the bounding box in the user interface). In some embodiments, the location of a respective resizing handle on the bounding box visually indicates the corresponding metric the resizing handle is selectable to change. For example, the first resizing handle discussed above is displayed on a left and/or a right side/edge of the bounding box. In some embodiments, the second resizing handle discussed above is displayed on a top and/or a bottom side/edge of the bounding box. In some embodiments, the third resizing handle discussed above is displayed at a corner of the bounding box.

In some embodiments, while displaying the visual indication of the first boundary, detecting a fourth input corresponding to a request to update the first boundary, such as the input illustrated in Fig. 6M while displaying boundary 630. In some embodiments, the fourth input corresponds to a request to chance a size of the first boundary. In some embodiments, the fourth input corresponds to a request to change a shape of the first boundary. In some embodiments, the fourth input is a movement input directed to the visual indication of the first boundary. In some embodiments, the fourth input is a movement input directed to the one or more graphical user interface elements for changing one or more metrics associated with the first boundary, such as the first, second, and/or third resize handles previously described. In some embodiments, the movement input includes contact by a stylus or a finger against a touch-sensitive device (e.g., a touch screen) and/or an input received from an input device in communication with the electronic device such as a mouse and/or a trackball and directed to visual indication of the first boundary. In some embodiments, the fourth input includes a drag gesture while contact is maintained on the touch-sensitive device (e.g., without lift off the stylus or finger). In some embodiments, the fourth input includes an air gesture (e.g., directed to the first boundary) performed by a hand of the user and detected by the electronic device via the one or more input devices. In some embodiments, the electronic device detects the air gesture while detecting attention of the user (e.g., based on gaze) directed to the first boundary. In some embodiments, the fourth input includes a request to move the cursor beyond the first boundary. In some embodiments, the fourth input includes a request to move the cursor in a particular direction included in the first or second direction. For example, in response to detecting an input requesting to move the cursor past the lower portion of the first boundary, the electronic device extends the first boundary down and moves the handwritten content down. In some embodiments, the electronic device does not update the first boundary in other directions in response to detecting an input requesting to move the cursor past the first boundary, such as requesting to move the first cursor up, left, or right past the first boundary.

In some embodiments, in response to detecting the fourth input, in accordance with a determination that the fourth input satisfies one or more third criteria, the electronic device updates the first boundary and the visual indication of the first boundary in accordance with the fourth input, as shown in Fig. 6N with the updated boundary 630. In some embodiments, updating the visual indication of the first boundary in accordance with the fourth input includes changing a size of the visual indication and/or a shape of the visual indication. In some embodiments, the one or more third criteria include a criterion that is satisfied when the fourth input corresponds to a request to change a size of the first boundary. In some embodiments, the one or more third criteria include a criterion that is satisfied when the fourth input corresponds to a request to change a shape of the first boundary. For example, the electronic device increases or decreases the size of the first boundary of the first representation of handwritten content in accordance with the movement of the first graphical user interface element in the user interface. In some embodiments, the electronic device increases or decreases the size of the first boundary in accordance with a direction of the fourth input. In particular, the movement of the first graphical user interface element in a direction causes the size of the boundary to increase in the user interface. For example, the first direction of the movement of the first graphical user interface element corresponds to movement of the first graphical user interface element in a direction that is away from the existing boundary of first portion of the sequence of characters. In some embodiments, as discussed above, the third resizing handle (e.g., corresponding to the first graphical user interface element) is displayed at a corner of the bounding box surrounding the sequence of characters in the user interface, such as a right corner or a left corner. Accordingly, the movement of the first graphical user interface element optionally causes the bounding box surrounding the sequence of characters to increase in size, which correspondingly causes the size of the first boundary to increase in size. In some embodiments, the movement of the first graphical user interface element in the first direction causes the size of the boundary to decrease in the user interface. For example, the first direction of the movement of the first graphical user interface element corresponds to movement of the first graphical user interface element in a direction that is toward the existing boundary of the portion of the sequence of characters. In some embodiments, the electronic device increases or decreases the size of the first boundary in accordance with a magnitude (e.g., an amount and/or a distance) of the fourth input. In some embodiments, an amount (e.g., distance) by which the first graphical user interface element is moved in the user interface determines an amount (e.g., length and/or width) by which the size of the first boundary is increased. In some embodiments, the increase of the size of the boundary is directly proportional and/or is equal to the distance by which the first graphical user interface element is moved in the user interface. In some embodiments, the movement of the first graphical user interface element optionally causes the bounding box surrounding the sequence of characters to decrease in size, which correspondingly causes the size of the first boundary to decrease in size.

In some embodiments, the one or more third criteria include a criterion that is satisfied when the fourth input requests movement of the first boundary in a third direction and is not satisfied when the fourth input requests movement of the first boundary in a fourth direction different from the third direction, such as being able to move handwritten content 620 and boundary 630 in Fig. 6K in response to a request to move cursor 610 and handwritten content 620 down past boundary 630, but not in response to a request to move cursor 610 and handwritten content 620 up past boundary 630. In some embodiments, the third direction is leftward along the horizontal axis associated with the user interface (e.g., such as described above). In some embodiments, the third direction is downward along the vertical axis associated with the user interface (e.g., such as described above). In some embodiments, the third direction corresponds to the first direction. In some embodiments, the third direction corresponds to the second direction. In some embodiments, the fourth direction is rightward along the horizontal axis associated with the user interface, as previously described. In some embodiments, the fourth direction is upward along a vertical axis associated with the user interface, as previously described. In some embodiments, the fourth direction corresponds to the first direction. In some embodiments, the fourth direction corresponds to the second direction. In some embodiments, requesting movement of the first boundary in the third direction includes detecting the movement input directed to the one or more graphical user interface elements for changing one or more metrics associated with the first boundary, and corresponding to a request to move one or more graphical user interface elements in the third direction. In some embodiments, requesting movement of the first boundary in the fourth direction includes detecting the movement input directed to the one or more graphical user interface elements for changing one or more metrics associated with the first boundary, and corresponding to a request to move one or more graphical user interface elements in the fourth direction.

In some embodiments, in response to detecting the fourth input, in accordance with a determination that the fourth input does not satisfy the one or more third criteria, maintaining (optionally display of the visual indication of) the first boundary without updating the first boundary in accordance with the fourth input, such as forgoing moving the portion of the handwritten content 620 and boundary 630 in Fig. 6K in response to detecting a request to move the cursor 610 and handwritten content 620 up past boundary 630. In some embodiments, the fourth input does not satisfy the one or more third criteria when the fourth input requests movement of the first boundary in the fourth direction (e.g., right and/or up). For example, the fourth input does not satisfy the one or more third criteria when the requested movement in the fourth direction (e.g., right and/or up) is outward from the first boundary (e.g., the visual indication of the first boundary and/or the bounding box). Accordingly, the electronic device optionally does not expand the first boundary rightward and/or upward ward in response to detecting the fourth input. In some embodiments, the fourth input satisfies the one or more third criteria when the fourth input requests movement of the first boundary in the third direction (e.g., left and/or down). For example, the fourth input satisfies the one or more third criteria when the requested movement in the third direction (e.g., right and/or up) is outward from the first boundary (e.g., the visual indication of the first boundary and/or the bounding box). For example, the electronic device optionally increases the size of the first boundary (e.g., leftward and/or downward) of the first portion of the handwritten content in accordance with the movement of the first graphical user interface element in the user interface. In some embodiments, the electronic device increases or decreases the size of the first boundary in accordance with a direction of the fourth input. In particular, the movement of the first graphical user interface element in a direction (e.g., left and/or down) causes the size of the boundary to increase in the user interface. For example, the first direction of the movement of the first graphical user interface element corresponds to movement of the first graphical user interface element in a direction that is away from the existing boundary of first portion of the sequence of characters.

In some embodiments, displaying the cursor includes, in accordance with a determination that a location of the cursor corresponds to a boundary of the cursor (e.g., the first boundary described above), displaying the cursor with a respective appearance corresponding to the boundary of the cursor, such as displaying the cursor 610 as shown in Fig. 6T In some embodiments, the boundary of the cursor has one or more characteristics of the first boundary, as previously described. In some embodiments, the location of the cursor corresponds to the boundary of the cursor when the cursor is within a threshold distance (e.g., 0.1, 0.2, 0.3, 0.5, 0.8, or 1 mm) of the boundary of the cursor. In particular, the boundary of the cursor optionally blocks the cursor from moving in the direction of the boundary of the cursor (e.g., in response to movement input corresponding to a request to move the cursor in the direction of the boundary of the cursor, the electronic device displays the cursor at or within the boundary, but not past the boundary). In some embodiments, the respective appearance corresponding to the boundary is based on the location of the boundary and/or a respective direction of the movement of the cursor. In some embodiments, the respective appearance includes an indication that at the location of the cursor corresponding to the boundary of the cursor, the boundary of the cursor blocks the cursor from moving in the respective direction (e.g., in response to additional input corresponding to a request to move in the respective direction), such as an arrow and/or a caret pointing in away from the boundary of the cursor and/or opposite from the boundary of the cursor. In some embodiments where the cursor includes a double arrow oriented along an axis (e.g., horizontal or vertical axis) corresponding to the direction of movement of the cursor, displaying the respective appearance corresponding to the boundary includes ceases display of a first arrow of the double arrow corresponding to the direction of movement of the cursor (e.g., pointing toward the boundary of the cursor). In some embodiments, the first appearance includes the respective appearance corresponding to the boundary of the cursor. In some embodiments, the second appearance includes the respective appearance corresponding to the boundary of the cursor.

In some embodiments, displaying the cursor includes, in accordance with a determination that the location of the cursor does not correspond to the boundary of the cursor, displaying the cursor without the respective appearance corresponding to the boundary, such as the appearance of cursor 610 in Fig. 6R. In some embodiments, the location of the cursor does not correspond to the boundary of the cursor when the cursor is not within a threshold distance (e.g., 0.1, 0.2, 0.3, 0.5, 0.8, or 1 mm) of the boundary of the cursor. In some embodiments, displaying the cursor without the respective appearance corresponding to the boundary includes displaying the cursor with a double arrow oriented along an axis (e.g., horizontal or vertical axis) corresponding to the direction of movement of the cursor. In some embodiments, displaying the cursor without the respective appearance corresponding to the boundary includes displaying the cursor with an indication that the cursor is able to move toward the boundary of the cursor (e.g., such as an arrow and/or caret oriented toward the boundary of the cursor). In some embodiments, displaying the cursor without the respective appearance includes displaying the cursor with the first appearance. In some embodiments, displaying the cursor without the respective appearance includes displaying the cursor with the second appearance.

In some embodiments, in response to detecting a third input corresponding to a request to move the cursor, the electronic device displays a first animation when movement of the cursor corresponds to movement beyond the location of the cursor that corresponds to the boundary of the cursor, such as animating a transition between displaying the cursor 610 as shown in Fig. 6S to displaying the cursor 610 as shown in Fig. 6T. In some embodiments, the electronic device receives the third input via an external device/tool for providing handwritten input (e.g., a stylus) or via a finger of a hand of the user of the electronic device. In some embodiments, the third input includes a tap or touch input (e.g., of a stylus or finger) directed to the cursor, optionally followed by a movement input (e.g., a drag gesture) while contact is maintained (e.g., before lift-off). In some embodiments, movement of the cursor corresponds to movement of the cursor beyond the location of the cursor that corresponds to the boundary of the cursor when movement of the cursor is directed toward the boundary of the cursor when the cursor is within a threshold distance (e.g., 0.1, 0.2, 0.3, 0.5, 0.8, or 1mm) of the boundary of the cursor. In some embodiments, displaying the first animation when movement of the cursor corresponds to the location of the cursor that corresponds to movement of the cursor beyond the boundary of the cursor includes displaying an animation of the cursor. In some embodiments, the electronic device displays the first animation (e.g., of the cursor) while the electronic device detects the third input. For example, the first animation includes an animation that compresses the cursor toward the boundary of the cursor. In some embodiments, the electronic device displays a second animation when the electronic device detects a termination of the third input, such as when the electronic device detects lift off of the external device/tool and/or finger of the hand of the user, and/or when the electronic device detects that contact of external device/tool and/or finger of the hand for a duration that exceeds a duration threshold (e.g., 1, 2, 3, 4, 5 sec). In some embodiments, the second animation in an opposite of the first animation. For example, the second animation optionally includes an animation that extends the cursor away from the boundary of the cursor (e.g., in an opposite direction of the boundary of the cursor).

In some embodiments, displaying the animation in response to detecting the third input includes, in accordance with a determination that the third input has a first magnitude beyond the boundary, displaying the first animation with a characteristic having a first value corresponding to the first magnitude, such as displaying cursor 610 compressed as shown in Fig. 6T by a first amount.

In some embodiments, displaying the animation in response to detecting the third input includes, in accordance with a determination that the third input has a second magnitude different from the first magnitude beyond the boundary, displaying the first animation with a characteristic having a second value corresponding to the second magnitude, different from the first value, such as displaying cursor 610 compressed as shown in Fig. 6T by a second amount different from the first amount. In some embodiments, the magnitude of the first input corresponds to the distance of the contact (e.g., the drag gesture) by the device/tool and/or finger of the user on the touch-sensitive device as detected by the electronic device while detecting the first input. In some embodiments, the characteristic of the first animation is the amount of compression in a dimension of the cursor during the first animation (e.g., the amount by which the dimension of the cursor decreases during the first animation). For example, the characteristic of the first animation is the amount of compression in a dimension of the cursor (e.g., a width of the cursor) along an axis (e.g., horizontal or vertical) corresponding to the boundary of the cursor during the first animation. Accordingly, in some embodiments, in accordance with a determination that the third input has a first magnitude, a dimension of the cursor during the first animation decreases by a first value corresponding to the first magnitude, and in accordance with a determination that the third input has a second magnitude different from the first magnitude, the dimension of the cursor during the animation decreases by a second value corresponding to the second magnitude, different from the first value. The electronic device therefore compresses the cursor by a distance and/or an amount of compression based on the magnitude of the third input (e.g., the distance of the contact on the touch-sensitive device (e.g., the drag gesture)).

In some embodiments, a portion of the boundary corresponds to a second portion of the sequence of characters (e.g., a line of handwritten characters, in a line that is above the first portion of the handwritten characters at which the cursor is initially displayed), such as the top portion of boundary 630' in Fig. 6R corresponding to additional handwritten content above boundary 630'. In some embodiments, the second portion of the sequence of characters is displayed above (or below) the first portion of the sequence of the sequence of characters in the user interface. In some embodiments, the second portion of the sequence of characters adjacent to the first portion of the sequence of characters (e.g., not separated by another sequence of characters and/or blank space). In some embodiments, in response to detecting an input corresponding to a request to move the cursor in the up direction and in accordance with a determination that a location of the cursor corresponds to the second portion of the sequence of characters (e.g., within a threshold distance of the second portion of the sequence of characters located above the cursor), the electronic displays the cursor with a respective appearance corresponding to the second portion of the sequence of characters. For example, the respective appearance optionally includes an indication that the second portion of the sequence characters blocks the cursor from moving in the up direction (e.g., in response to additional input corresponding to a request to move in the up direction), such as an arrow and/or a caret pointing in away from the second portion of the sequence of characters (e.g., pointing down). In some embodiments where the cursor includes a double arrow oriented along an axis corresponding to the direction of movement of the cursor (e.g., vertical axis), displaying the respective appearance corresponding to the boundary (e.g., the second portion of the sequence of characters) includes ceasing display of a first arrow (e.g. upward arrow) of the double arrow corresponding to the direction of movement of the cursor (e.g., pointing upward toward the second portion of the sequence of characters). In some embodiments, in response to detecting input corresponding to a request to move the cursor in the upward direction, the electronic device displays a first animation when movement of the cursor corresponds to the second portion of the sequence of characters (e.g., when the cursor is within a threshold distance of the second portion of the sequence of characters). In some embodiments, displaying the first animation includes displaying the cursor compressing against the second portion of the sequence of characters.

In some embodiments, in response to detecting the second input, in accordance with a determination that the second input satisfies one or more second criteria, (e.g., criteria for reflowing text in the first direction or the second direction), while displaying the cursor (e.g., with the first appearance or the second appearance), the electronic device moves the first portion of the sequence of characters in accordance with the second input, including displaying a spring animation of movement of the first portion of the sequence of characters relative to the cursor, optionally as described above with reference to Fig. 6V. In some embodiments, the one or more criteria include a criterion that is satisfied when a blank space exists adjacent to the first portion of the sequence of characters in the direction of the movement of the first portion of the sequence of characters (e.g., the second direction). For example, the criterion is satisfied when a blank space exists left of the first location (e.g., the location of the cursor) in the first representation of handwritten content and second input corresponds to a request to move the cursor left. Additionally or alternatively, in some embodiments, the criterion is satisfied when the line above the first portion of the sequence of characters is a blank line and the second input corresponds to a request to move the cursor upwards.

For example, the electronic device subjects a subset of characters of the first portion of characters of the sequence of characters to a simulated Hooke's law using a predetermined spring constant (e.g., the subset of the characters of the first portion of the sequence of characters are moved with a simulated mass along with a simulated spring). In some embodiments, the subset of characters corresponds to a predetermined number of characters, such as a predetermined number of characters in a first word or term adjacent to the respective location. In some embodiments, the subset of characters corresponds to a predetermined number of words adjacent to the respective location. In some embodiments as similarly discussed above, the subset of characters is at least partially determined based on the direction of movement of the input device relative to the respective location in the user interface. For example, if the movement of the input device is in the first direction described previously above (e.g., rightward) relative to the respective location in the user interface, the first subset of characters follows (e.g., is located directly to the right of) the blank space at the respective location in the user interface. In some embodiments, if the movement of the input device is in the second direction described previously above (e.g., leftward) relative to the respective location in the user interface, the first subset of characters precedes (e.g., is located directly to the left of) the blank space at the respective location in the user interface. In some embodiments, when the electronic device moves the subset of characters of the sequence of characters relative to the respective location according to the spring-based model, the electronic device moves the subset of characters in a direction in the user interface corresponding to the movement of the input device relative to the respective location, and subsequently moves (e.g., as in a pulling or "rubberbanding" motion) the subset of characters back toward the respective location in the user interface. In some embodiments, the electronic device detects an amount of displacement measured between the input device and the respective location in the user interface and animates a translation of the subset of characters with a magnitude of acceleration based on the displacement, such that the greater the displacement, the greater the acceleration of the subset of characters when the input provided by the input device is terminated (e.g., when the electronic device detects liftoff of the input device from the surface). In some embodiments, the relationship between the displacement and the simulated acceleration of the subset of characters moving back toward the respective location is linear, exponential, logarithmic, and/or some other non-linear relationship between the displacement and the simulated acceleration. In some embodiments, the characters in the subset of characters are moved differently in the user interface relative to the respective location because of the spring-based model. As an illustrative example, the subset of characters includes a plurality of words, including a first word, a second word, and a third word. In some embodiments, when the electronic device detects the movement of the input device on the surface, the application of the spring-based model simulates a pulling of the first word by the (e.g., tip of the) input device (e.g., as in a mass attached to a spring). In some embodiments, the movement of the first word produces a movement/pulling on the second word, which is "attached" (e.g., per the spring-based model) to the first word, which subsequently produces a movement/pulling on the third word, which is "attached" to the second word. In some embodiments, a fourth word of the sequence of characters, which is not included in the subset of characters that follows the subset of characters, is not moved according to the spring-based model (e.g., the fourth word is not "attached" to any of the first word, the second word, and the third word of the subset of characters). In some embodiments, the electronic device moves the subset of characters of the first portion of the sequence of characters relative to the respective location in the user interface according to the spring-based model without moving other characters of first portion of the sequence of characters relative to the respective location according to the spring-based model. For example, the movement of the other characters of the sequence of characters relative to the respective location in the user interface follows a linear displacement model.

In some embodiments, displaying the spring animation includes, in accordance with a determination that the second input includes movement in a third direction, displaying the spring animation with a characteristic having a first value, such as displaying the spring animation described above with reference to Fig. 6V with a first duration and/or magnitude. In some embodiments, the third direction corresponds to the first direction or the second direction. In some embodiments, the electronic device moves the first portion of the sequence of characters with a spring animation according to a spring-based model, as previously described. In particular, the electronic device optionally moves the first portion of the sequence of characters in the according to a simulated Hooke's law using a predetermined spring constant. In some embodiments, the characteristic is a spring constant and displaying the spring animation with a characteristic having a first value includes displaying the spring animation with the spring constant having a first value. In some embodiments, the spring constant controls a speed and/or acceleration of the characters of the first portion of the sequence of characters during the spring animation, and therefore the perceived responsiveness and stiffness of first portion of the sequence of characters in response to the second input. In addition, the spring constant controls the settling time of the characters of the first portion of the sequence of characters (e.g., that time it takes for the characters to stop moving when the motion of the cursor stops). In some embodiments, a speed and/or acceleration of the characters of the first portion of the sequence of characters during the spring animation increases according to a spring constant having a greater value and the speed and/or acceleration of the characters of the first portion of the sequence of characters decreases according to a spring constant having less value. In addition, a settling time of the characters of the first portion of the sequence of characters during the spring animation decreases according to a spring constant having a greater value and the settling time of the characters of the first portion of the sequence of characters increases according to a spring constant having less value. Accordingly, in some embodiments, displaying the spring animation with the spring constant having a first value includes displaying the characters of the first portion of the sequence of characters moving with a first speed and/or a first acceleration during the spring animation. Additionally or alternatively, displaying the spring animation with the spring constant having a first value includes displaying the characters of the first sequence of characters with a first settling time.

In some embodiments, displaying the spring animation includes, in accordance with a determination that the second input includes movement in a fourth direction different from the third direction, displaying the spring animation with the characteristic having a second value different from the first value, such as displaying the spring animation described above with reference to Fig. 6V with a second duration and/or magnitude. In some embodiments, the fourth direction corresponds to the first direction or the second direction. In some embodiments, the fourth direction corresponds to the same axis of the representation of handwritten content as the third direction but opposite of the third direction. Accordingly, displaying the spring animation with a characteristic having the second value includes displaying the spring animation with the spring constant having a second value. In some embodiments, therefore, displaying the spring animation with the spring constant having a second value includes displaying the characters of the first sequence of characters moving with a second speed and/or a second acceleration, greater than the first acceleration during the spring animation. Additionally or alternatively, displaying the spring animation with the spring constant having the second value includes displaying the characters of the first sequence of characters with a second settling time, greater than the first settling time.

In some embodiments, the third direction is a left, whereas the fourth direction is right. Accordingly, when the second input includes movement in the third direction (e.g., left), the electronic device displays the cursor moving left (e.g., into a blank space left of the cursor) and the first portion of the sequence characters trailing the cursor with a spring animation with the spring constant having the first value. When the second input includes movement in the fourth direction (e.g., right), the electronic device displays the cursor moving right and pushing against the first portion of the sequence of characters which moves with a spring animation with a spring cont.

In some embodiments, the first direction and second direction are orthogonal to each other, such as cursor 610 being horizontal in Fig. 6F and cursor 610 being vertical in Fig. 6G. For example, the first direction is along a horizontal axis of the user interface (e.g., left or right) and the second direction is along a vertical axis of the user interface (e.g., up or down). Alternatively, in some embodiments, the first direction is along a vertical axis of the user interface (e.g., up or down) and the second direction is along a horizontal axis of the user interface (e.g., left or right). In some embodiments, as previously described, the electronic device displays the cursor (e.g., and/or moves the first portion of the sequence of characters) according to input corresponding to a request to move the cursor (e.g., according to a magnitude and/or direction of the input). In some embodiments, the electronic device detects a respective input directed to the cursor, and in response to detecting the respective input, in accordance with a determination that a direction of the respective input is within a threshold angle (e.g., 10, 15, 20, 25, 30, 35, 40, 45 degrees) of the first direction, the respective input corresponds to a request to move the cursor in the first direction, and in accordance with a determination that the direction of the respective input is within a threshold angle (e.g., 10, 15, 20, 25, 30, 35, 40, 45 degrees) of the second direction, the respective input corresponds to a request to move the cursor in the second direction. Accordingly, in response to detecting the input corresponding to a request to move the cursor (e.g., and/or the first portion of the sequence of characters) in a respective direction, in accordance with a determination that the respective direction is the first direction, the electronic device displays the cursor having the first appearance corresponding to the first direction, the first appearance including an indication of an axis corresponding to the first direction, double-arrow pointing in opposite directions along the axis (e.g., left and right along the horizontal axis). Additionally or alternatively, in some embodiments, in accordance with the determination that the respective direction is the second direction, orthogonal to the first direction, the electronic device displays the cursor having the second appearance, different from the first appearance and corresponding to the second direction, the second appearance including an indication of an axis corresponding to the second direction, such as a double-arrow pointing in opposite directions along the axis (e.g., up and down along the vertical axis). The electronic device thus optionally switches between a cursor having an appearance pointing in the first direction and the second direction, orthogonal to the first direction based on the input corresponding to the request to move the cursor.

In some embodiments, the one or more criteria include a criterion that is satisfied when a magnitude of a component of movement of the second input parallel to the second direction is greater than a magnitude of a component of movement of the second input parallel to the first direction, such as vector 636 having a larger vertical component 638 than horizontal component 637 in Fig. 6X. In some embodiments, the magnitude of the component of the second input parallel to the first direction is a magnitude of the projection of movement of the second input on the first axis (e.g., the horizontal axis) and the magnitude of the component of movement of the second input parallel to the second direction is a magnitude of the projection of movement of the second input on the second axis (e.g., the vertical axis). In some embodiments, the magnitude of the component of movement of the second input (e.g., parallel to the first direction or parallel to the second direction) is a distance, a velocity, and/or an acceleration of the component of the movement of the second input. In some embodiments, therefore, the criterion is satisfied when the electronic device detects greater movement along the vertical axis (e.g., axis corresponding to the second direction) than along the horizontal axis (e.g., axis corresponding to the first direction). In some embodiments, in response to detecting a respective input directed to the cursor, in accordance with a determination that a magnitude of a component of movement of the respective input parallel to the first direction is greater than a magnitude of a component of movement of the respective input parallel to the second direction, the electronic device displays the cursor with the first appearance (e.g., and optionally moves the portion of the sequence of characters in the first direction). In some embodiments, in accordance with a determination that a magnitude of a component of movement of the respective input parallel to the first direction is less than a magnitude of a component of movement of the respective input parallel to the second direction, the electronic device displays the cursor with the second appearance (e.g., and optionally moves the portion of the sequence of characters in the second direction.

In some embodiments, the one or more criteria include (i) a criterion that is satisfied when a velocity of a component of movement of the second input parallel to the second direction is greater than a velocity of a component of movement of the second input parallel to the first direction, or (ii) a criterion that is satisfied when an acceleration of a component of movement of the second input parallel to the second direction is greater than an acceleration of a component of movement of the second input parallel to the first direction, such as the components 637 and 638 of vector 636 in Fig. 6X. In some embodiments, the velocity of the component of movement is a velocity of the contact of a stylus and/or finger of the user as detected by the electronic device on the touch sensitive device while the electronic device detects the second input. In some embodiments, the acceleration of the component of movement is an acceleration of the contact of the stylus and/or finger of the user as detected by the electronic device on the touch sensitive device while the electronic device detects the second input. In some embodiments, therefore, the criterion is satisfied when the electronic device detects that a velocity of the second input along the vertical axis (e.g., axis corresponding to the second direction) is greater than a velocity of the second input along the horizontal axis (e.g., axis corresponding to the first direction) and/or when the electronic device detects that an acceleration of the second input along the vertical axis (e.g., axis corresponding to the second direction) is greater than an acceleration of the second input along the horizontal axis (e.g., axis corresponding to the first direction). In some embodiments, in response to detecting a respective input directed to the cursor, in accordance with a determination that a velocity of a component of movement of the respective input parallel to the first direction is greater than a velocity of a component of movement of the respective input parallel to the second direction, the electronic device the display the cursor with the first appearance (e.g., and optionally moves the portion of the sequence of characters in the first direction), and in accordance with a determination that the velocity of a component of movement of the respective input parallel to the first direction is less than the velocity of a component of movement of the respective input parallel to the second direction, the electronic device the display the cursor with the second appearance (e.g., and optionally moves the portion of the sequence of characters in the second direction). In some embodiments, in response to detecting a respective input directed to the cursor, in accordance with a determination that an acceleration of a component of movement of the respective input parallel to the first direction is greater than an acceleration of a component of movement of the respective input parallel to the second direction, the electronic device the display the cursor with the first appearance (e.g., and optionally moves the portion of the sequence of characters in the first direction), and in accordance with a determination that the acceleration of a component of movement of the respective input parallel to the first direction is less than the acceleration of a component of movement of the respective input parallel to the second direction, the electronic device the display the cursor with the second appearance (e.g., and optionally moves the portion of the sequence of characters in the second direction).

In some embodiments, in response to detecting the second input, in accordance with a determination that the second input does not satisfy the one or more criteria including a criterion that is satisfied when a component of movement of the second input in the second direction is greater than a threshold amount, the electronic device moves the cursor in accordance with the second input while maintaining the first appearance of the cursor, such as moving cursor 610 horizontally and vertically in response to detecting the input in Fig. 6W that has a horizontal component 637 that is greater than the vertical component 638.

In some embodiments, in response to detecting the second input, in accordance with a determination that the second input does not satisfy the one or more criteria including a criterion that is satisfied when a component of movement of the second input in the second direction is greater than a threshold amount, the electronic device moves the first portion of the sequence of characters in the first direction in accordance with the second input, such as moving cursor 610 horizontally and vertically in response to detecting the input in Fig. 6X that has a horizontal component 637 that is less than the vertical component 638. In some embodiments, the threshold amount of movement is a threshold distance, a threshold velocity, and/or threshold acceleration of the component of movement in the second direction. Accordingly, the criterion is not satisfied when a distance of the component of second input is less than the threshold distance, a velocity of the component of the second input is less than a threshold velocity, and/or an acceleration of the component of the second input is less than an acceleration threshold. In some embodiments, movement directed to the cursor and whose component in a respective direction (e.g., the first direction and/or the second direction) exceeds the threshold amount (e.g., a distance threshold, a velocity threshold, and/or an acceleration threshold) indicates to the electronic device that the respective input corresponds to a request to move the cursor in the respective direction (e.g., and/or to move the first portion of the sequence of character in the respective direction) and to display the cursor with the respective visual appearance (e.g., the first visual appearance or the second visual appearance). In some embodiments, moving the first portion of the sequence of characters in the first direction in accordance with the second input includes moving the first portion of the sequence of characters in accordance with a component of the input in the first direction irrespective of the component of the input in the second direction.

In some embodiments, in response to detecting the second input, in accordance with a determination that the second input satisfies the one or more criteria, the electronic device moves the cursor in accordance with the second input in the first direction and the second direction without moving the first portion of the sequence of characters in the first direction, such as moving cursor 610 vertically and horizontally in response to detecting the input illustrated in Fig. 6W that has a larger horizontal component 637 than vertical component 638.

In some embodiments, in response to detecting the second input, in accordance with a determination that the second input does not satisfy the one or more criteria, the electronic device moves the cursor in accordance with the second input in the first direction and the second direction without moving the first portion of the sequence of characters in the second direction, such as moving cursor 610 vertically and horizontally in response to detecting the input illustrated in Fig. 6X that has a larger vertical component 638 than horizontal component 637. For example, while moving the cursor and/or the first portion of the sequence of characters in the second direction, the electronic device optionally moves the cursor in the first direction and the second direction according to the second input. Accordingly, the electronic device optionally does not move the cursor in the second direction in a straight line (e.g. without deviation from the second direction) but instead optionally moves the cursor in the first direction while maintaining movement of the cursor in the second direction. In particular, while displaying the cursor according to a component of movement of the cursor in the second direction, the electronic device optionally displays the cursor according to a component of movement of the cursor in the first direction. For example, if the second direction corresponds to movement along the horizontal axis and the first direction corresponds to movement along the vertical axis, in response to detecting the second input, the electronic device optionally moves the cursor along the horizontal axis (e.g., along a line of characters of the first representation of handwritten content) while also moving the cursor along the vertical axis. In some embodiments, magnitude of the movement of the cursor in the second direction is less than a magnitude of the movement in the first direction. In some embodiments, movement of the cursor in the first direction while the electronic device moves the cursor in the second direction is incidental and reflects variations of the detected movement in the second direction of the contact on the touch-sensitive device. In some embodiments, movement of the cursor in the first direction while the electronic device moves the cursor in the second direction indicates to the user that the user is able to provide input corresponding to a request to move the cursor in the first direction. In some embodiments, the electronic device optionally does not display the cursor with the first appearance while moving the cursor in the first direction during movement of the cursor in the second direction. In some embodiments, when the electronic device moves first portion of the sequence of characters in the second direction with the movement of the cursor in the second direction, the electronic device optionally does not move the first portion of the sequence of characters in the first direction while moving the first cursor in the first direction. In some embodiments, moving the cursor in the first direction and second direction while moving the cursor in the first direction has one or more characteristics corresponding to the characteristics of moving the cursor in the first direction and the second direction while moving the cursor in the second direction, but different in a complementary manner in regard to the respective direction to which respective characteristics apply.

In some embodiments, moving the first portion of the sequence of characters in the first direction includes moving the first portion of the sequence of characters in continuous distances in the first direction, such as moving the portion of handwritten content 620 to the location in Fig. 6F in response to detecting the input illustrated in Fig. 6E by a continuous amount. In some embodiments, the first direction corresponds to a direction along a horizontal axis. In some embodiments, moving the first portion of the sequence of characters in continuous distances includes moving the first portion of the sequence of characters by a distance that does not correspond to a predetermined distance and/or interval (e.g., corresponding to a width of a character of the first representation of handwritten content). In some embodiments, moving the first portion of the sequence of characters in continuous distances includes moving the first portion of sequence of characters by a distance less than a width of a character of the first representation of hand-written content. In some embodiments, moving the first portion of the sequence of characters in continuous distances includes displaying an animation of the first portion of sequence of characters moving from the first location to the second location in the user interface. In some embodiments, moving the first portion of the sequence of characters in continuous distances includes moving the cursor in continuous distances.

In some embodiments, moving the first portion of the sequence of characters in the second direction includes moving the first portion of the sequence of characters in discrete distances in the second direction, such as moving the portion of handwritten content 620 to the location in Fig. 6H in response to detecting the input shown in Fig. 6G by a discrete amount. In some embodiments, the second direction corresponds to a direction along a vertical axis. In some embodiments, the discrete distance corresponds to distances between lines of the characters of the first representation of handwritten content. In some embodiments (e.g., where the first portion of the sequence of characters corresponds to a first line of characters), moving first portion of the sequence of characters in discrete distances include shifting the first portion of the sequence of characters by a line (e.g., to a line above the first line) in the user interface without displaying a character of the first portion the sequence of characters between the first line and the line above. In some embodiments, moving the first portion of the sequence of characters in discrete distances includes forgoing display of an animation of the first portion of sequence of characters moving from the first location to the second location in the user interface.

In some embodiments, moving the first portion of the sequence of characters in the first direction includes moving the first portion of the sequence of characters in continuous distances in the first direction, such as moving the portion of handwritten content 620 to the location in Fig. 6F in response to detecting the input illustrated in Fig. 6E by a continuous amount. In some embodiments, the first direction corresponds to a direction along a horizontal axis. In some embodiments, moving the first portion of the sequence of characters in continuous distances in the first direction includes moving the first portion of the sequence of characters by a distance in the first direction that does not correspond to a predetermined distance and/or interval (e.g., corresponding to a width of a character of the first representation of handwritten content). In some embodiments, moving the first portion of the sequence of characters in continuous distances in the first direction includes moving the first portion of sequence of characters by a distance less than a width of a character of the first representation of hand-written content. In some embodiments, moving the first portion of the sequence of characters in continuous distances in the first direction includes displaying an animation of the first portion of sequence of characters moving from the first location to the second location in the user interface. In some embodiments, moving the first portion of the sequence of characters in continuous distances includes moving the cursor in continuous distances.

In some embodiments, moving the first portion of the sequence of characters in the second direction includes moving the first portion of the sequence of characters in continuous distances in the second direction, such as moving the portion of handwritten content 620 to the location in Fig. 6H in response to detecting the input shown in Fig. 6G by a continuous amount. In some embodiments, the second direction corresponds to a direction along a vertical axis. In some embodiments, moving the first portion of the sequence of characters in continuous distances in the second direction includes moving the first portion of the sequence of characters by a distance that does not correspond to a predetermined distance and/or interval (e.g., corresponding to a distance between two lines of characters of the first representation of handwritten content). In some embodiments, moving the first portion of the sequence of characters in continuous distances includes moving the first portion of sequence of characters by a distance less than a distance from the first line (e.g., corresponding to the first portion of the sequence of characters) and a preceding line (e.g., located above the first portion of the sequence of characters). In some embodiments, moving the first portion of the sequence of characters in continuous distances includes displaying an animation of the first portion of sequence of characters moving from the first location (e.g., the first line corresponding to the first portion of the sequence of characters) to the second location in the user interface (e.g., corresponding to the preceding line or the line above the first line in the first representation of the handwritten content). In some embodiments, moving the first portion of the sequence of characters in continuous distances includes moving the cursor in continuous distances.

In some embodiments, while displaying the first representation of the handwritten content that includes the sequence of characters, the electronic device detects, via the one or more input devices, a third input directed to the first representation of the handwritten content, such as the input illustrated in Fig. 6K. In some embodiments, the third input includes a tap or touch input (e.g., of a stylus or finger) directed to the first representation of handwritten content. In some embodiments, the third input includes an air gesture (e.g., directed to the first representation of handwritten content) performed by a hand of the user and detected by the electronic device via the one or more input devices. In some embodiments, the electronic device detects the air gesture while detecting attention of the user (e.g., based on gaze) directed to the first representation of handwritten content.

In some embodiments, in response to detecting the third input, in accordance with a determination that the third input includes a first gesture directed to the first portion of the sequence of characters, the electronic device displays, via the one or more display generation components, a visual indication of a second boundary for moving, in the user interface, the first portion of the sequence of characters, such as displaying bounding box 630 in Fig. 6K. In some embodiments, the first gesture is a single tap detected by the electronic device via the touch-sensitive device. In some embodiments, the first gesture is an air tap detected via the one or more input devices. In some embodiments, the second boundary corresponds to a boundary of the first representation of the handwritten content (e.g., a left, right, top, and/or bottom edge in the user interface to which the first representation of handwritten content is confined). In some embodiments, the second boundary corresponds to a boundary of the first portion of the sequence of characters (e.g., a left, right, top, and/or bottom edge in the user interface to which the first portion of the sequence of characters is confined). In some embodiments, the second boundary forms a logical bounding box (e.g., not displayed by the electronic device and/or invisible to the user) around the first representation of handwritten content or the first portion of the sequence of characters. In some embodiments, the second boundary has one or more characteristics of the first boundary, previously described herein.

In some embodiments, the visual indication of the second boundary is a bounding box corresponding to the second boundary and displayed around (e.g., surrounding) the first portion of the sequence of characters of the first representation of handwritten content and/or the first representation of handwritten content. In some embodiments, displaying the visual indication of the second boundary (e.g., the bounding box) in the user interface includes displaying in the user interface one or more graphical user interface elements for changing one or more metrics associated with the second boundary. In some embodiments, the second boundary has one or more characteristics of the first boundary, previously described herein.

In some embodiments, in response to detecting the third input, in accordance with a determination that the third input includes a second gesture directed to the first portion of the sequence of characters, different from the first gesture, the electronic device displays, via the one or more display generation components, one or more graphical user interface elements indicating that a second portion, different from the first portion, of the sequence of characters is selected, such as displaying the portion of handwritten content 622 with the indication of being selected as shown in Fig. 6BB. In some embodiments, the second gesture is a double tap detected by the electronic device via the touch-sensitive device. In some embodiments, the first gesture is a double air gesture detected via the one or more input devices. In some embodiments, the second portion of the sequence of characters corresponds to a single or collection of letter(s), number(s), or special character(s) of the first portion of the sequence of characters. In some embodiments, the second portion of the sequence of characters corresponds to a single word of the sequence of characters of the first portion of the sequence of characters. In some embodiments, the second portion of the sequence of characters corresponds to a plurality of words (optionally a sentence or multiple sentences) of the first portion of the sequence of characters. In some embodiments, the second portion of the sequence of characters corresponds to a paragraph (or a plurality of paragraphs) of the first portion of the sequence of characters. In some embodiments, the second portion of the sequence of characters is a subset of the first portion of the sequence of characters. In some embodiments, the second portion of the sequence of characters is the first portion of the sequence of characters. In some embodiments, the second portion of the sequence of characters has one or more characteristics of the first portion of the sequence of characters.

In some embodiments, the electronic device displays the second portion of the sequence of characters with visual emphasis relative to other characters of the sequence of characters in the user interface. For example, while the bounding box described above is displayed around the sequence of characters in the user interface (or a subset thereof), the electronic device displays the second portion of the sequence of characters with highlighting, bolding, underlining, brightness, or other visual effect indicating that the second portion of the sequence of characters is selected. In some embodiments, the electronic device displays a plurality of options selectable to perform a plurality of corresponding operations directed to the second portion of the sequence of characters, without necessarily performing one or more operations on the other characters of the sequence of characters. Additionally, in some embodiments, the one or more graphical user interface elements include a set of resizing affordances displayed with the second portion of the sequence of characters in the user interface. In some embodiments, the set of resizing affordances is displayed on either side/end of the second portion of the sequence of characters. In particular, the set of resizing affordances includes a first resizing affordance display left of the first character of the second portion of the sequence of characters, and a second resizing affordance displayed right of the last character of the second portion of the sequence of characters. For example, if the second portion of the sequence of characters is a word, the set of resizing affordances (e.g., a first resizing affordance and a second resizing affordance) is displayed at a beginning of the word and at an end of the word.

In some embodiments, in response to detecting the third input, in accordance with the determination that the third input includes the second gesture, the electronic device establishes a third boundary for moving the cursor and/or the second portion of the sequence of characters. In some embodiments, the third boundary is a minimum boundary around the dimensions of the second portion of the sequence of characters. In some embodiments, the first boundary described above is a boundary around a paragraph including the first portion of the sequence of characters, whereas the third boundary excludes one or more characters including in the paragraph including the second portion of the sequence of characters. In some embodiments, the third boundary depends on the size and/or location of the second portion of the sequence of characters. In some embodiments, the electronic device is able to move the cursor and one or more characters of the second portion of the sequence of characters within the third boundary in response to detecting further input directed to the cursor. In some embodiments, the electronic device is able to reposition the second portion of the sequence of characters beyond the third boundary, including moving the third boundary with the second portion of the sequence of characters.

In some embodiments, while displaying the one or more graphical user interface elements indicating that the second portion of the sequence of characters is selected, such as the display of the portion of handwritten content 622 in Fig. 6BB, the electronic device detects a fourth input directed to the one or more graphical user interface elements, such as detecting an input directed to affordance 642b in Fig. 6BB.

In some embodiments, in response to detecting the fourth input, the electronic device updates display of the one or more graphical user interface elements to indicate selection of a third portion of the sequence of characters, different from the second portion of the sequence of characters, such as selecting the portion of handwritten content 624 shown in Fig. 6CC.

In some embodiments, in response to detecting the fourth input, the electronic device updates display of the visual indication of the second boundary in accordance with the third portion of the sequence of characters, such as displaying an indication of a boundary around the portion of handwritten content 624 in Fig. 6DD. In some embodiments, the fourth input includes a movement input directed to the set of resizing affordances. In some embodiments, the fourth input includes a tap or touch input (e.g., of a stylus or finger) directed a respective resizing affordance, followed by drag gesture (e.g., while contact is maintained) in a respective direction and corresponding to a request move the respective resizing affordance in the respective direction. In some embodiments, the fourth input includes an air gesture (e.g., directed to the respective resizing affordance) performed by a hand of the user and detected by the electronic device via the one or more input devices. In some embodiments, the electronic device detects the air gesture while detecting attention of the user (e.g., based on gaze) directed to the respective resizing affordance. In some embodiments, in response to detecting the input corresponding to a request to move the resizing affordance in the respective direction, the electronic device moves the resizing affordance in the respective direction and updates display of the set of resizing affordances to indicate selection of the third portion of the sequence of characters, different from the second portion of the sequence of characters in accordance with the input. In some embodiments, the electronic device moves the respective resizing affordance in accordance with a magnitude and/or direction of the fourth input.

In some embodiments, the third portion of the sequence of characters corresponds to the sequence of characters resulting from adding a respective portion of sequences of characters to and/or removing a respective portion of the sequences of characters from the second portion of the sequence of character as a result of moving the respective resizing affordance. For example, in response to detecting the fourth input directed to a respective resizing affordance, in accordance with a determination that the fourth input corresponds to a request to move the respective resizing affordance away from the second portion of the sequence of characters, the electronic device moves the respective resizing affordance to select a respective portion of the sequence of characters, wherein the respective portion of the sequence of characters is external to the second portion of the sequence of characters, adjacent to the second portion of the sequence of characters in the direction of the fourth input, and corresponds to the magnitude of the fourth input. Additionally, the electronic device extends the visual indication that the second portion of the sequence of characters is selected to include the respective portion of the sequence of characters, thus indication that both the second portion of the sequence of characters and the respective portion of the sequence of characters that add up to form the third portion of the sequence of characters are selected. In some embodiments, in accordance with the determination that the fourth input corresponds to a request to move the respective resizing affordance toward the second portion of the sequence of characters, the electronic device moves the respective resizing affordance to de-select a respective portion of the sequence of characters, wherein the respective portion of the sequence of characters is included in the second portion of the sequence of characters and adjacent to the resizing affordance in the direction of the fourth input, and corresponds to the magnitude of the fourth input. Additionally, the electronic device displays the visual indication that the second portion of the sequence of characters is selected to exclude the respective portion of the sequence of characters, thus indicating that the third portion of the sequence of characters (e.g., corresponding to the second portion of the sequence of characters without (e.g., minus) the respective portion of the sequence of characters).

In some embodiments, updating display of the visual indication of the second boundary in accordance with the third portion of the sequence of characters includes displaying ceasing display of the second boundary as surrounding the second portion of the sequence of characters and displaying the second boundary as surrounding the third portion of the sequence of characters (e.g., a left, right, top, and/or bottom edge in the user interface to which the third portion of the sequence of characters is confined). In some embodiments, the third boundary forms a logical bounding box (e.g., not displayed by the electronic device and/or invisible to the user) around the third portion of the sequence of characters.

In some embodiments, the second boundary is a minimum boundary around the dimensions of the third portion of the sequence of characters. In some embodiments, the first boundary described above is a boundary around a paragraph including the first portion of the sequence of characters, whereas the second boundary excludes one or more characters including in the paragraph including the third portion of the sequence of characters. In some embodiments, the second boundary depends on the size and/or location of the third portion of the sequence of characters. In some embodiments, the electronic device is able to move the cursor and one or more characters of the third portion of the sequence of characters within the second boundary in response to detecting further input directed to the cursor. In some embodiments, the electronic device is able to reposition the third portion of the sequence of characters beyond the second boundary, including moving the second boundary with the third portion of the sequence of characters.

It should be understood that the particular order in which the operations in Fig. 7 have been described is merely exemplary and is not intended to indicate that the described order is the only order in which the operations could be performed. One of ordinary skill in the art would recognize various ways to reorder the operations described herein.

The operations in the information processing methods described above are, optionally, implemented by running one or more functional modules in an information processing apparatus such as general purpose processors (e.g., a as described with respect to Figs. 1A-1B, 3, 5A-5H) or application specific chips. Further, the operations described above with reference to Fig. 7 are, optionally, implemented by components depicted in Figs. 1A-1B. For example, displaying operation 706, detecting operations 702 and 708, and updating operation 712 are, optionally, implemented by event sorter 170, event recognizer 180, and event handler 190. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

As described above, one aspect of the present technology is manipulating handwritten content. The present disclosure contemplates that in some instances, the data utilized may include personal information data that uniquely identifies or can be used to contact or locate a specific person. Such personal information data can include demographic data, content consumption activity, location-based data, telephone numbers, email addresses, twitter ID's, home addresses, data relating to a person's likeness, name, date of birth, or any other identifying or personal information.

The present disclosure recognizes that the use of such personal information data, in the present technology, can be used to the benefit of users. For example, detecting semantic meaning of handwritten content informs repositioning the content, such as positioning line breaks between, rather than within, words. Accordingly, use of such personal information data enables users to use electronic devices to perform enhanced operations with handwritten content. Further, other uses for personal information data that benefit the user are also contemplated by the present disclosure. For instance, analyzing a user's handwriting may enhance detection of content which includes sensitive content.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of location services, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user may be notified upon initiating content collection that their personal information data will be accessed and then reminded again just before personal information data is accessed by the device(s).

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, an electronic device generates generative visual media with respect to background content and/or a background layer without associating the content with personal user data.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in the process for repositioning handwritten content. For example, the data can be used to train models that can be deployed to improve performance, accuracy, and/or functionality of applications and/or services. Accordingly, the use of the data enables the visual media generation using the handwritten content manipulation process(es) can be used to benefit users to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the handwritten content manipulation process(es) are also contemplated by the present disclosure.

The present disclosure contemplates that, in some embodiments, data used by the repositioning handwritten content generation using a process for generating, via an automatically-generated visual media application, repositioned handwritten content includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with the repositioned handwritten content generation using a process for generating, via one or more ML processes, repositioned handwritten content, should attempt to comply with well-established privacy policies and/or privacy practices.

For example, such entities may implement and consistently follow policies and practices recognized as meeting or exceeding industry standards and regulatory requirements for developing and/or training the handwritten content manipulation process(es). In doing so, attempts should be made to ensure all intellectual property rights and privacy considerations are maintained. Training should include practices safeguarding training data, such as personal information, through sufficient protections against misuse or exploitation. Such policies and practices should cover all stages of the handwritten content manipulation process(es) development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, the handwritten content manipulation process(es) may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for the handwritten content manipulation process(es) may be kept strictly separated from platforms where the handwritten content manipulation process(es) are deployed and/or used to interact with users and/or process data. In such embodiments, data used for offline training of the handwritten content manipulation process(es) may be maintained in secured datastores with restricted access and/or not be retained beyond the duration necessary for training purposes. In some embodiments, the handwritten content manipulation process(es) may utilize a local memory cache to store data temporarily during a user session. The local memory cache may be used to improve performance of the handwritten content manipulation process(es). However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the handwritten content manipulation process(es). The handwritten content manipulation process(es) should be monitored for changes in underlying data distribution such as concept drift or data skew that can degrade performance of the visual media generation using a process for generating, via an automatically-generated visual media application, a visual representation of a respective background layer for the messaging user interface based on the contents of the messaging conversation over time.

In some embodiments, the handwritten content manipulation process(es) is trained using a combination of offline and online training. Offline training can use curated datasets to establish baseline model performance, while online training can allow the handwritten content manipulation process(es) to continually adapt and/or improve. The present disclosure recognizes the importance of maintaining strict data governance practices throughout this process to ensure user privacy is protected.

In some embodiments, the handwritten content manipulation process(es) may be designed with safeguards to maintain adherence to originally intended purposes, even as the handwritten content manipulation process(es) adapts based on new data. Any significant changes in data collection and/or applications of the handwritten content manipulation process(es) use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the handwritten content manipulation process(es) and/or for use as input during the inference stage of such systems. In yet another example, the present technology should be configured to allow users to be able to select to limit the length of time data is maintained or entirely prohibit the use of their data for use by the handwritten content manipulation process(es). In addition to providing "opt in" and "opt out" options, the present disclosure contemplates providing notifications relating to the access or use of personal information. For instance, a user can be notified when their data is being input into the handwritten content manipulation process(es) for training or inference purposes, and/or reminded when the visual media generation using a process for generating, via an automatically-generated visual media application, a visual representation of a respective background layer for the messaging user interface based on the contents of the messaging conversation generate outputs or make decisions based on their data.

The present disclosure recognizes the handwritten content manipulation process(es) should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the handwritten content manipulation process(es). Generated content can be filtered for potentially inappropriate or dangerous material prior to being presented to users, while human oversight and/or ability to override or correct erroneous or undesirable outputs can be maintained as a failsafe.

The present disclosure further contemplates that users of the handwritten content manipulation process(es) should refrain from using the services in any manner that infringes upon, misappropriates, or violates the rights of any party. Furthermore, the handwritten content manipulation process(es) should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The handwritten content manipulation process(es) should not violate, misappropriate, or infringe any copyrights, trademarks, rights of privacy and publicity, trade secrets, patents, or other proprietary or legal rights of any party, and appropriately attribute content as required. Further, the handwritten content manipulation process(es) should not interfere with any security, digital signing, digital rights management, content protection, verification, or authentication mechanisms. The handwritten content manipulation process(es) should not misrepresent machine-generated outputs as being human-generated.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

Exemplary embodiments of the present disclosure are set out in the following items:
1. A method comprising:
   at an electronic device in communication with one or more display generation components and one or more input devices:
   while displaying, in a user interface, a first representation of handwritten content that includes a sequence of characters, detecting, via the one or more input devices, a first input directed to a first location in the user interface; and
   in response to detecting the first input:
      displaying, via the display generation component, a cursor at the first location in the user interface, wherein the cursor is for moving, in the user interface, a first portion of the sequence of characters in a first direction, the cursor having a first appearance;
      while displaying the cursor for moving, in the user interface, the first portion of the sequence of characters in the first direction, the cursor having the first appearance, detecting, via the one or more input devices, a second input directed to the cursor; and
   in response to detecting the second input, in accordance with a determination that the second input satisfies one or more criteria:
      updating display, via the one or more display generation components, of the cursor from the first appearance to a second appearance, different from the first appearance; and while displaying the cursor having the second appearance, moving the first portion of the sequence of characters in a second direction, different from the first direction, to a second location in the user interface different from the first location in the user interface in accordance with the second input.
2. The method of item 1, wherein detecting the first input includes detecting a gesture corresponding to a request to display the cursor or a gesture corresponding to a request to delete a respective portion of the handwritten content.
3. The method of any of items 1-2, wherein moving the first portion of the sequence of characters in response to detecting the second input includes:
   moving the cursor in accordance with the second input within a first boundary, including: in accordance with a determination that the second input corresponds to movement of the cursor within the first boundary, moving the cursor in accordance with the second input; and
   in accordance with a determination that the second input corresponds to movement of the cursor beyond the first boundary, moving the cursor within the first boundary without moving the cursor beyond the first boundary in accordance with the second input.
4. The method of item 3, further comprising:
   while displaying the cursor:
   detecting a third input; and
   in response to detecting the third input, in accordance with a determination that the third input satisfies one or more second criteria, displaying, via the one or more display generation components, a visual indication of the first boundary.
5. The method of item 4, further comprising:
   while displaying the visual indication of the first boundary, detecting a fourth input corresponding to a request to update the first boundary; and
   in response to detecting the fourth input:
      in accordance with a determination that the fourth input satisfies one or more third criteria, updating the first boundary and the visual indication of the first boundary in accordance with the fourth input.
6. The method of item 5, wherein the one or more third criteria include a criterion that is satisfied when the fourth input requests movement of the first boundary in a third direction and is not satisfied when the fourth input requests movement of the first boundary in a fourth direction different from the third direction, and the method further comprises:
   in response to detecting the fourth input, in accordance with a determination that the fourth input does not satisfy the one or more third criteria, maintaining the first boundary without updating the first boundary in accordance with the fourth input.
7. The method of any of items 1-6, wherein displaying the cursor includes:
   in accordance with a determination that a location of the cursor corresponds to a boundary of the cursor, displaying the cursor with a respective appearance corresponding to the boundary of the cursor; and in accordance with a determination that the location of the cursor does not correspond to the boundary of the cursor, displaying the cursor without the respective appearance corresponding to the boundary.
8. The method of item 7, wherein displaying the cursor with the appearance corresponding to the boundary cursor includes:
   in response to detecting a third input corresponding to a request to move the cursor, displaying a first animation when movement of the cursor corresponds to movement beyond the location of the cursor that corresponds to the boundary of the cursor.
9. The method of item 8, wherein displaying the animation in response to detecting the third input includes:
   in accordance with a determination that the third input has a first magnitude beyond the boundary, the first animation has a characteristic having a first value corresponding to the first magnitude; and
   in accordance with a determination that the third input has a second magnitude different from the first magnitude beyond the boundary, the first animation has a characteristic having a second value corresponding to the second magnitude, different from the first value.
10. The method of any of items 7-9, wherein a portion of the boundary corresponds to a second portion of the sequence of characters.
11. The method of any of items 1-10, further comprising:
   in response to detecting the second input, in accordance with a determination that the second input satisfies one or more second criteria:
   while displaying the cursor, moving the first portion of the sequence of characters in accordance with the second input, including displaying a spring animation of movement of the first portion of the sequence of characters relative to the cursor.
12. The method of item 11, wherein displaying the spring animation includes:
   in accordance with a determination that the second input includes movement in a third direction, displaying the spring animation with a characteristic having a first value; and in accordance with a determination that the second input includes movement in a fourth direction different from the third direction, displaying the spring animation with the characteristic having a second value different from the first value.
13. The method of any of items 1-12, wherein the first direction and second direction are orthogonal to each other.
14. The method of item 13, wherein the one or more criteria include a criterion that is satisfied when a magnitude of a component of movement of the second input parallel to the second direction is greater than a magnitude of a component of movement of the second input parallel to the first direction.
15. The method of any of items 13-14, wherein the one or more criteria include (i) a criterion that is satisfied when a velocity of a component of movement of the second input parallel to the second direction is greater than a velocity of a component of movement of the second input parallel to the first direction, or (ii) a criterion that is satisfied when an acceleration of a component of movement of the second input parallel to the second direction is greater than an acceleration of a component of movement of the second input parallel to the first direction.
16. The method of any of items 1-15, further comprising:
   in response to detecting the second input, in accordance with a determination that the second input does not satisfy the one or more criteria including a criterion that is satisfied when a component of movement of the second input in the second direction is greater than a threshold amount:
   moving the cursor in accordance with the second input while maintaining the first appearance of the cursor; and
   moving the first portion of the sequence of characters in the first direction in accordance with the second input.
17. The method of any of items 1-16, further comprising:
   in response to detecting the second input:
   in accordance with a determination that the second input satisfies the one or more criteria, moving the cursor in accordance with the second input in the first direction and the second direction without moving the first portion of the sequence of characters in the first direction; and
   in accordance with a determination that the second input does not satisfy the one or more criteria, moving the cursor in accordance with the second input in the first direction and the second direction without moving the first portion of the sequence of characters in the second direction.
18. The method of any of items 1-17, wherein:
   moving the first portion of the sequence of characters in the first direction includes moving the first portion of the sequence of characters in continuous distances in the first direction, and
   moving the first portion of the sequence of characters in the second direction includes moving the first portion of the sequence of characters in discrete distances in the second direction.
19. The method of any of items 1-17, wherein:
   moving the first portion of the sequence of characters in the first direction includes moving the first portion of the sequence of characters in continuous distances in the first direction, and
   moving the first portion of the sequence of characters in the second direction includes moving the first portion of the sequence of characters in continuous distances in the second direction.
20. The method of any of items 1-19, further comprising:
   while displaying the first representation of the handwritten content that includes the sequence of characters, detecting, via the one or more input devices, a third input directed to the first representation of the handwritten content;
   in response to detecting the third input:
      in accordance with a determination that the third input includes a first gesture directed to the first portion of the sequence of characters, displaying, via the one or more display generation components, a visual indication of a second boundary for moving, in the user interface, the first portion of the sequence of characters; and
      in accordance with a determination that the third input includes a second gesture directed to the first portion of the sequence of characters, different from the first gesture, displaying, via the one or more display generation components, one or more graphical user interface elements indicating that a second portion, different from the first portion, of the sequence of characters is selected.
21. The method of item 20, further comprising:
   while displaying the one or more graphical user interface elements indicating that the second portion of the sequence of characters is selected, detecting a fourth input directed to the one or more graphical user interface elements; and
   in response to detecting the fourth input,
      updating display of the one or more graphical user interface elements to indicate selection of a third portion of the sequence of characters, different from the second portion of the sequence of characters, and
      updating display of the visual indication of the second boundary in accordance with the third portion of the sequence of characters.
22. An electronic device that is in communication with one or more display generation components and one or more input devices, the electronic device comprising:
   one or more processors;
   memory; and
   one or more programs, wherein the one or more programs are stored in the memory and configured to be executed by the one or more processors, the one or more programs including instructions for:
      while displaying, in a user interface, a first representation of handwritten content that includes a sequence of characters, detecting, via the one or more input devices, a first input directed to a first location in the user interface; and
      in response to detecting the first input:
         displaying, via the display generation component, a cursor at the first location in the user interface, wherein the cursor is for moving, in the user interface, a first portion of the sequence of characters in a first direction, the cursor having a first appearance;
         while displaying the cursor for moving, in the user interface, the first portion of the sequence of characters in the first direction, the cursor having the first appearance, detecting, via the one or more input devices, a second input directed to the cursor; and
      in response to detecting the second input, in accordance with a determination that the second input satisfies one or more criteria:
         updating display, via the one or more display generation components, of the cursor from the first appearance to a second appearance, different from the first appearance; and while displaying the cursor having the second appearance, moving the first portion of the sequence of characters in a second direction, different from the first direction, to a second location in the user interface different from the first location in the user interface in accordance with the second input.
23. A non-transitory computer readable storage medium storing one or more programs, the one or more programs comprising instructions, which when executed by one or more processors of an electronic device, cause the electronic device to perform a method comprising:
   while displaying, in a user interface, a first representation of handwritten content that includes a sequence of characters, detecting, via the one or more input devices, a first input directed to a first location in the user interface; and
   in response to detecting the first input:
      displaying, via the display generation component, a cursor at the first location in the user interface, wherein the cursor is for moving, in the user interface, a first portion of the sequence of characters in a first direction, the cursor having a first appearance;
      while displaying the cursor for moving, in the user interface, the first portion of the sequence of characters in the first direction, the cursor having the first appearance, detecting, via the one or more input devices, a second input directed to the cursor; and
   in response to detecting the second input, in accordance with a determination that the second input satisfies one or more criteria:
      updating display, via the one or more display generation components, of the cursor from the first appearance to a second appearance, different from the first appearance; and while displaying the cursor having the second appearance, moving the first portion of the sequence of characters in a second direction, different from the first direction, to a second location in the user interface different from the first location in the user interface in accordance with the second input.
24. An electronic device, comprising:
   one or more processors;
      memory;
      means for while displaying, in a user interface, a first representation of handwritten content that includes a sequence of characters, detecting, via the one or more input devices, a first input directed to a first location in the user interface; and
      means for in response to detecting the first input:
         displaying, via the display generation component, a cursor at the first location in the user interface, wherein the cursor is for moving, in the user interface, a first portion of the sequence of characters in a first direction, the cursor having a first appearance;
         means for while displaying the cursor for moving, in the user interface, the first portion of the sequence of characters in the first direction, the cursor having the first appearance, detecting, via the one or more input devices, a second input directed to the cursor; and
      means for in response to detecting the second input, in accordance with a determination that the second input satisfies one or more criteria:
         updating display, via the one or more display generation components, of the cursor from the first appearance to a second appearance, different from the first appearance;
   and while displaying the cursor having the second appearance, moving the first portion of the sequence of characters in a second direction, different from the first direction, to a second location in the user interface different from the first location in the user interface in accordance with the second input.
25. An information processing apparatus for use in an electronic device, the information processing apparatus comprising:
   means for while displaying, in a user interface, a first representation of handwritten content that includes a sequence of characters, detecting, via the one or more input devices, a first input directed to a first location in the user interface; and
   means for in response to detecting the first input:
      displaying, via the display generation component, a cursor at the first location in the user interface, wherein the cursor is for moving, in the user interface, a first portion of the sequence of characters in a first direction, the cursor having a first appearance;
      means for while displaying the cursor for moving, in the user interface, the first portion of the sequence of characters in the first direction, the cursor having the first appearance, detecting, via the one or more input devices, a second input directed to the cursor; and
   means for in response to detecting the second input, in accordance with a determination that the second input satisfies one or more criteria:
      updating display, via the one or more display generation components, of the cursor from the first appearance to a second appearance, different from the first appearance; and while displaying the cursor having the second appearance, moving the first portion of the sequence of characters in a second direction, different from the first direction, to a second location in the user interface different from the first location in the user interface in accordance with the second input.
26. An electronic device, comprising:
   one or more processors;
   memory; and
   one or more programs, wherein the one or more programs are stored in the memory and configured to be executed by the one or more processors, the one or more programs including instructions for performing any of the methods of items 1-21.
27. A non-transitory computer readable storage medium storing one or more programs, the one or more programs comprising instructions, which when executed by one or more processors of an electronic device, cause the electronic device to perform any of the methods of items 1-21.
28. An electronic device, comprising:
   one or more processors;
   memory; and
   means for performing any of the methods of items 1-21.
29. An information processing apparatus for use in an electronic device, the information processing apparatus comprising:
   means for performing any of the methods of items 1-21.

## Claims

1. A method comprising:
at an electronic device in communication with one or more display generation components and one or more input devices:
while displaying, in a user interface, a first representation of handwritten content that includes a sequence of characters, detecting, via the one or more input devices, a first input directed to a first location in the user interface; and
in response to detecting the first input:
displaying, via the one or more display generation components, a cursor at the first location in the user interface, wherein the cursor is for moving, in the user interface, a first portion of the sequence of characters in a first direction, the cursor having a first appearance;
while displaying the cursor for moving, in the user interface, the first portion of the sequence of characters in the first direction, the cursor having the first appearance, detecting, via the one or more input devices, a second input directed to the cursor; and
in response to detecting the second input, in accordance with a determination that the second input satisfies one or more criteria:
updating display, via the one or more display generation components, of the cursor from the first appearance to a second appearance, different from the first appearance; and while displaying the cursor having the second appearance, moving the first portion of the sequence of characters in a second direction, different from the first direction, to a second location in the user interface different from the first location in the user interface in accordance with the second input.

2. The method of claim 1, wherein detecting the first input includes detecting a gesture corresponding to a request to display the cursor or a gesture corresponding to a request to delete a respective portion of the handwritten content.

3. The method of any of claims 1-2, wherein moving the first portion of the sequence of characters in response to detecting the second input includes:
moving the cursor in accordance with the second input within a first boundary, including: in accordance with a determination that the second input corresponds to movement of the cursor within the first boundary, moving the cursor in accordance with the second input; and
in accordance with a determination that the second input corresponds to movement of the cursor beyond the first boundary, moving the cursor within the first boundary without moving the cursor beyond the first boundary in accordance with the second input.

4. The method of any of claims 1-3, wherein displaying the cursor includes:
in accordance with a determination that a location of the cursor corresponds to a boundary of the cursor, displaying the cursor with a respective appearance corresponding to the boundary of the cursor; and
in accordance with a determination that the location of the cursor does not correspond to the boundary of the cursor, displaying the cursor without the respective appearance corresponding to the boundary.

5. The method of any of claims 1-4, further comprising:
in response to detecting the second input, in accordance with a determination that the second input satisfies one or more second criteria:
while displaying the cursor, moving the first portion of the sequence of characters in accordance with the second input, including displaying a spring animation of movement of the first portion of the sequence of characters relative to the cursor.

6. The method of any of claims 1-5, wherein the first direction and second direction are orthogonal to each other.

7. The method of any of claims 1-6, further comprising:
in response to detecting the second input, in accordance with a determination that the second input does not satisfy the one or more criteria including a criterion that is satisfied when a component of movement of the second input in the second direction is greater than a threshold amount:
moving the cursor in accordance with the second input while maintaining the first appearance of the cursor; and
moving the first portion of the sequence of characters in the first direction in accordance with the second input.

8. The method of any of claims 1-7, further comprising:
in response to detecting the second input:
in accordance with a determination that the second input satisfies the one or more criteria, moving the cursor in accordance with the second input in the first direction and the second direction without moving the first portion of the sequence of characters in the first direction; and
in accordance with a determination that the second input does not satisfy the one or more criteria, moving the cursor in accordance with the second input in the first direction and the second direction without moving the first portion of the sequence of characters in the second direction.

9. The method of any of claims 1-8, wherein:
moving the first portion of the sequence of characters in the first direction includes moving the first portion of the sequence of characters in continuous distances in the first direction, and
moving the first portion of the sequence of characters in the second direction includes moving the first portion of the sequence of characters in discrete distances in the second direction.

10. The method of any of claims 1-9, wherein:
moving the first portion of the sequence of characters in the first direction includes moving the first portion of the sequence of characters in continuous distances in the first direction, and
moving the first portion of the sequence of characters in the second direction includes moving the first portion of the sequence of characters in continuous distances in the second direction.

11. The method of any of claims 1-10, further comprising:
while displaying the first representation of the handwritten content that includes the sequence of characters, detecting, via the one or more input devices, a third input directed to the first representation of the handwritten content;
in response to detecting the third input:
in accordance with a determination that the third input includes a first gesture directed to the first portion of the sequence of characters, displaying, via the one or more display generation components, a visual indication of a second boundary for moving, in the user interface, the first portion of the sequence of characters; and
in accordance with a determination that the third input includes a second gesture directed to the first portion of the sequence of characters, different from the first gesture, displaying, via the one or more display generation components, one or more graphical user interface elements indicating that a second portion, different from the first portion, of the sequence of characters is selected.

12. An electronic device, comprising:
one or more processors;
memory; and
one or more programs, wherein the one or more programs are stored in the memory and configured to be executed by the one or more processors, the one or more programs including instructions for performing any of the methods of claims 1-11.

13. A non-transitory computer readable storage medium storing one or more programs, the one or more programs comprising instructions, which when executed by one or more processors of an electronic device, cause the electronic device to perform any of the methods of claims 1-11.
